(19) Europäisches Patentamt / European Patent Office / Office européen des brevets

(11) **EP 4 140 964 A1**

(12) **EUROPÄISCHE PATENTANMELDUNG**

(43) Veröffentlichungstag:
**01.03.2023 Patentblatt 2023/09**

(21) Anmeldenummer: **22190887.4**

(22) Anmeldetag: **18.08.2022**

(51) Internationale Patentklassifikation (IPC):
**C03C 3/097** (2006.01)     **C03C 10/00** (2006.01)

(52) Gemeinsame Patentklassifikation (CPC):
**C03C 3/097; C03C 10/0027**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **25.08.2021 DE 102021122035**

(71) Anmelder: **SCHOTT AG**
**55122 Mainz (DE)**

(72) Erfinder:
 • **Özcoban, Hüseyin**
  **55130 Mainz (DE)**

 • **Weiss, Evelin**
  **55131 Mainz (DE)**
 • **Krüger, Susanne**
  **55127 Mainz (DE)**
 • **Martens, Uwe**
  **55252 Mainz-Kastel (DE)**
 • **Siebers, Friedrich**
  **55283 Nierstein (DE)**
 • **Johansson, Thoralf**
  **55268 Nieder-Olm (DE)**

(74) Vertreter: **WSL Patentanwälte Partnerschaft mbB**
**Kaiser-Friedrich-Ring 98**
**65185 Wiesbaden (DE)**

(54) **KRISTALLISIERBARES LITHIUMALUMINIUMSILIKAT-GLAS UND DARAUS HERGESTELLTE GLASKERAMIK SOWIE VERFAHREN ZUR HERSTELLUNG DER GLASKERAMIK UND VERWENDUNG DER GLASKERAMIK**

(57)     Es wird eine Lithiumaluminiumsilikat-Glaskeramik beschrieben, die bis auf unvermeidliche Verunreinigungen $As_2O_3$- und $Sb_2O_3$-frei ist. Die Lithiumaluminiumsilikat-Glaskeramik weist Keatit als Hauptkristallphase und eine Keatit-Peak-Temperatur Tp der Keatit-Mischkristallbildung im Bereich von 980 °C bis 1090 °C auf, wobei die Keatit-Peak-Temperatur $T_P$ mittels der dynamischen Differenzkalorimetrie (DSC) nach DIN 51007:2019-04 unter Verwendung einer Heizrate von 5 K/min ermittelt wird. Es wird auch ein Keramisierungsverfahren beschrieben.

Fig. 1

EP 4 140 964 A1

**Beschreibung**

Die Erfindung betrifft eine Lithiumaluminiumsilikat-Glaskeramik (LAS-Glaskeramik) gemäß Oberbegriff des Anspruchs 1.

Die Erfindung bezieht sich auch auf ein Keramisierungsverfahren zu deren Herstellung und die Verwendung einer solchen LAS-Glaskeramik.

LAS-Glaskeramiken finden aufgrund ihrer besonderen Materialeigenschaften, beispielsweise ihres geringen thermischen Ausdehnungskoeffizienten, verbunden mit hoher Temperaturunterschiedsfestigkeit und Thermoschockbeständigkeit, ihrer hohen Festigkeit, ihrer chemischen Beständigkeit und ihrer Transparenz breiten Einsatz. In der Regel wird das thermische Ausdehnungsverhalten so eingestellt, dass die Werkstoffe im Bereich ihrer Anwendungstemperaturen über sehr niedrige mittlere Längenausdehnungskoeffizienten, meist von $-2,0 \times 10^{-6}/K \leq \overline{\alpha}(20\ °C;\ 700\ °C) \leq 2,0 \times 10^{-6}/K$ verfügen. Anforderungen für den Einsatz bei hohen Temperaturen beinhalten, dass die Glaskeramiken die geforderten Eigenschaften (wie z. B. thermische Ausdehnung, Transmission, Temperaturbelastbarkeit) während ihrer Lebensdauer beibehalten. Hinsichtlich Temperaturbelastbarkeit ist die, wenn auch geringe, Schrumpfung der Glaskeramik (compaction) bei hohen Temperaturen die kritische Größe. Da die Glaskeramikartikel im Einsatz meist ungleichmäßig durchwärmt werden, bauen sich sonst mit der Zeit durch die lokal unterschiedlich starke Schrumpfung Spannungen im Artikel auf.

Verbreitete Anwendungen der LAS-Glaskeramiken sind Brandschutzverglasungen, Kochgeschirr, transparente Kaminsichtscheiben, Ofensichtscheiben sowie Kochflächen. Bei der Anwendung als Kochflächen werden die transparenten Glaskeramikplatten entweder mit Farboxiden eingefärbt oder auf der Unterseite mit einer blickdichten meist farbigen Beschichtung versehen, um die Durchsicht auf die technischen Einbauten zu verhindern und die farbliche Anmutung bereitzustellen. Aussparungen in der Unterseitenbeschichtung ermöglichen das Anbringen von farbigen und weißen Displayanzeigen, meist Leuchtdioden oder Bildschirmen.

Für das Aussehen und die optischen Eigenschaften von Glaskeramiken sind Transmission und Streuung wichtige Eigenschaften.

Hohe Transparenz bedeutet hohe Helligkeit und eine geringe Farbigkeit. Beides bedeutet geringe Absorption, da die Absorptionsbanden je nach Lage im visuell sichtbaren Spektrum sowohl die Helligkeit erniedrigen als auch die Farbigkeit erhöhen. In der Literatur finden sich für die Helligkeit auch die Bezeichnungen Lichttransmission oder integrale Transmission.

Die Streuung wird durch die Größe der Kristalle, deren Doppelbrechung und den Unterschied der Brechzahlen von Kristallen und Restglas bestimmt. In der Regel ist eine geringe Streuung erwünscht, damit die Durchsicht nicht verfälscht wird und die Anzeigen klar und deutlich sichtbar sind.

Die Helligkeit oder Lichttransmission wird durch den Helligkeitswert Y (brightness) gemäß dem CIE-Normfarbsystem oder den Weißwert L* im CIELAB Farbsystem beschrieben. Die Definition des zu verwendenden Farbsystems ist in der deutschen Umsetzung der internationalen CIE-Norm, nämlich der DIN 5033 festgelegt. Die Auswertung der Messdaten nach dem CIELAB Farbmodell ist in der DIN EN ISO 11664-4 "Colorimetry -- Part 4: CIE 1976 L*a*b* Colour space" beschrieben und zwar sowohl für Messungen in Transmission als auch in Remission.

Die dafür erforderlichen spektralphotometrischen Messungen erfolgen im Rahmen der Erfindung an polierten Proben in einem Spektralbereich zwischen 380 und 780 nm. Aus den gemessenen spektralen Werten in dem Bereich, der das sichtbare Lichtspektrum repräsentiert, werden sowohl die Helligkeit Y als auch der Weißwert L* sowie die Farbkoordinaten a* und b* mit Wahl von Normlichtart und Beobachterwinkel für die vorliegende Dicke berechnet. Die Bestimmung der Helligkeit Y erfolgt aus den spektralen Werten einer Transmissionsmessung, die nach DIN ISO 15368 durchgeführt wird. Zusätzlich wird die Transmission bei definierten Wellenlängen ermittelt.

Es hat sich bei Glaskeramiken eingebürgert, als Maß für den Farbeindruck der transluzenten und opaken Varianten die Größen L*, a*, b* anzugeben. Die Bestimmung dieser Werte erfolgt aus den spektralen Werten einer Remissionsmessung, die gemäß DIN ISO 15368 durchgeführt wird. L* beschreibt dabei die Helligkeit (Weißwert) und die Koordinaten a* und b* jeweils die Farbverschiebung, wobei

+ a* = Verschiebung nach rot

- a* = Verschiebung nach grün

+ b* = Verschiebung nach gelb

- b* = Verschiebung nach blau

angibt.

Aus a* und b* wird der Wert c*, der als Buntheit bezeichnet wird, ermittelt und zwar gemäß der Formel

$$c* = \sqrt{\left(a*\right)^2 + \left(b*\right)^2}$$

Die großtechnische Herstellung von Glaskeramiken erfolgt in mehreren Stufen. Zunächst wird das kristallisierbare Ausgangsglas aus einem Gemisch aus Scherben und pulverförmigen Gemengerohstoffen geschmolzen und geläutert. Die Glasschmelze erreicht dabei Temperaturen von 1550 °C bis maximal 1750 °C, meist bis zu 1700 °C. Fallweise wird auch eine Hochtemperaturläuterung oberhalb 1750 °C, üblicherweise bei Temperaturen um 1900 °C eingesetzt. Für nicht eingefärbte Glaskeramiken sind Arsen- und Antimonoxid bei konventionellen Läutertemperaturen unter 1700 °C hinsichtlich guter Blasenqualitäten technisch und wirtschaftlich bewährte Läutermittel. Arsenoxid ist für die Transparenz (hohe Helligkeit und geringe Farbigkeit) der Glaskeramik besonders vorteilhaft. Auch wenn diese Läutermittel fest im Glasgerüst eingebunden sind, so sind sie doch unter Sicherheits- und Umweltschutzaspekten nachteilig. So müssen bei der Rohstoffgewinnung, der Rohstoffaufbereitung und wegen des Verdampfens aus der Schmelze bei der Glasherstellung besondere Vorsichtsmaßnahmen ergriffen werden. Es gibt deswegen zahlreiche Entwicklungsanstrengungen, diese Stoffe zu ersetzen, die aber auf technische und wirtschaftliche Nachteile stoßen.

Nach dem Einschmelzen und Läutern erfährt das Glas üblicherweise eine Heißformgebung durch Gießen, Pressen, Walzen oder Floaten. Für viele Anwendungen werden die Glaskeramiken in flacher Form benötigt, beispielsweise in Form von Scheiben. Das Walzen und Floaten werden zur Herstellung der Platten eingesetzt. Für die wirtschaftliche Herstellung dieser LAS-Gläser sind eine niedrige Schmelztemperatur und eine niedrige Verarbeitungstemperatur $V_A$ bei der Heißformgebung gewünscht. Weiterhin darf das Glas bei der Formgebung keine Entglasung zeigen, das heißt, es dürfen sich keine größeren Kristalle oberhalb von etwa 5 $\mu$m bilden, die in den Glaskeramik-Artikeln die Festigkeit erniedrigen oder visuell störend sind. Da die Formgebung in der Nähe der Verarbeitungstemperatur $V_A$ (Viskosität $10^4$ dPa·s) des Glases stattfindet, muss gewährleistet sein, dass die obere Entglasungstemperatur der Schmelze in der Nähe und bevorzugt unter der Verarbeitungstemperatur liegt, um die Bildung größerer Kristalle zu vermeiden. Der bei der Formgebung über Walzen kritische Bereich ist der Kontakt der Glasschmelze mit der Ziehdüse aus Edelmetall (üblicherweise aus einer Pt/Rh-Legierung), bevor das Glas durch die Walzen geformt und abgekühlt wird. Beim Floaten ist es der Glaskontakt mit der spout lip und der vordere Bereich des Floatbades im Kontakt mit dem flüssigen Zinn, in dem das Glas eine hohe Kristallwachstumsgeschwindigkeit besitzt.

Das kristallisierbare LAS-Glas wird in einem anschließenden Temperaturprozess durch gesteuerte Kristallisation (Keramisierung) in die Glaskeramik umgewandelt. Diese Keramisierung erfolgt in einem mehrstufigen Temperaturprozess, bei dem zunächst durch Keimbildung bei einer Temperatur zwischen 680 °C und 800 °C Keime, üblicherweise aus $ZrO_2/TiO_2$-Mischkristallen, erzeugt werden. Auch $SnO_2$ ist an der Keimbildung beteiligt. Bei weiterer Temperaturerhöhung entstehen Hochquarz-Mischkristalle (HQ-Mischkristalle), die sich bei einer fortgeführten Temperaturerhöhung in einem Temperaturbereich von 900 °C bis 1250 °C in Keatit-Mischkristalle umwandeln. Die Temperatur-Zeit-Bedingungen für die Umwandlung hängen dabei von der Zusammensetzung und in geringerem Maße von der Temperaturvorbehandlung ab. Die Umwandlung in Keatit-Mischkristalle ist mit größeren Kristallen verbunden, die eine zunehmende Lichtstreuung zur Folge haben. Mit der Umwandlung erhöht sich der mittlere Längenausdehnungskoeffizient $\overline{\alpha}$(20 °C; 700 °C) der Glaskeramik. Die Lichttransmission wird reduziert, und die Glaskeramik erscheint transluzent. Bei weiterer Erhöhung der Temperatur wird die Glaskeramik nahezu lichtundurchlässig (opak).

Längere Verweilzeiten bei hohen Temperaturen der Keatitbildung erhöhen die Opazität des Materials. Dabei wird das Gefüge der Glaskeramik verändert, so dass die optischen, physikalischen und chemischen Eigenschaften verändert werden. Für eine wirtschaftliche Herstellung sind kurze Keramisierungszeiten vorteilhaft.

Zunehmend wird als Ersatz für Arsen- und Antimonoxid das umweltfreundliche Läutermittel $SnO_2$ allein oder in Kombination mit einem oder mehreren Läuterzusätzen wie Halogeniden (F, Cl, Br), $CeO_2$, $MnO_2$, $Fe_2O_3$ und/oder Schwefelverbindungen propagiert.

Die Verwendung von $SnO_2$ ist jedoch mit Nachteilen verbunden. $SnO_2$ selbst ist als Läutermittel technisch weniger effektiv und benötigt höhere Temperaturen zur Abgabe des läuteraktiven Sauerstoffs. Hohe Konzentrationen an $SnO_2$ in der Größenordnung des eingesetzten $As_2O_3$ von ca. 1 Gew.-% sind wegen der Entglasung von Sn-haltigen Kristallen bei der Heißformgebung nachteilig. Der für nicht eingefärbte Glaskeramiken zweite wesentliche Nachteil bei der Substitution von Arsen- durch Zinnoxid als Läutermittel besteht darin, dass $SnO_2$ zu einer zusätzlichen Absorption führt und den Farbwert b* erhöht. Die Absorption beruht hauptsächlich auf Farbkomplexen mit dem Keimbildner $TiO_2$. Bei höheren Läutertemperaturen verstärkt sich die Absorption, da diese mit dem höheren Anteil an $Sn^{2+}$ zunimmt. Die Sn/Ti-Farbkomplexe färben stärker als die bekannten Fe/Ti-Farbkomplexe und dieser Nachteil hat bei nicht eingefärbten Glaskeramiken bisher die Substitution des Läutermittels Arsenoxid durch Zinnoxid erschwert.

Die Bildung der genannten charge-transfer-Farbkomplexe findet maßgeblich bei der Kristallisation statt. Um die Konzentrationen der Farbkomplexe zu verringern, ist es vorteilhaft, die Keimbildungs-und Kristallisationszeiten zu verkürzen. Dem steht entgegen, dass die Verkürzung der Keimbildungszeit zu verstärkter Lichtstreuung und die Verkürzung der Kristallisationszeit zu Unebenheiten des Artikels führen.

In den technischen Gemengerohstoffen für die Schmelzen sind weitere färbende Elemente wie Cr, Mn, Ni, V und besonders Fe als Verunreinigungen enthalten. Das Fe färbt, außer über die Fe/Ti-Farbkomplexe auch ionisch als $Fe^{2+}$ oder $Fe^{3+}$. Wegen der hohen Kosten eisenarmer Rohstoffe ist es jedoch unwirtschaftlich, den $Fe_2O_3$-Gehalt auf Werte unter ca. 50 ppm zu verringern.

Die Ansätze, den für die Farbkomplexe in transparenten nicht eingefärbten Glaskeramiken, die Hochquarz-Mischkristalle, welche in der Literatur auch als "β-Quarz" oder "β-Eukryptit" bezeichnet werden, als Hauptkristallphase enthalten, mit verantwortlichen Keimbildner $TiO_2$ zu vermeiden (WO 2008/065167 A1) oder zu begrenzen (WO 2008/065166 A1), haben bisher nicht zu einer technischen Umsetzung geführt. Die erforderlichen höheren Gehalte der alternativen Keimbildner $ZrO_2$ und/oder $SnO_2$ führen zu Nachteilen bei der Schmelze und Formgebung, wie höhere Schmelz-und Formgebungstemperaturen, sowie zu unzureichender Entglasungsfestigkeit bei der Formgebung.

Auch bei transluzenten bis opaken nicht eingefärbten Glaskeramiken, die Keatit-Mischkristalle, die auch als "β-Spodumen" in der Literatur bezeichnet werden, als Hauptkristallphase enthalten, hat ein hoher $TiO_2$-Gehalt eine negative Wirkung auf die optischen Eigenschaften der Glaskeramik.

So beschreibt die WO 2019/016338 A1 weiße, opaleszente oder opake, zinngeläuterte Glaskeramiken vom LAS-Typ, die β-Spodumen als Hauptkristallphase enthalten, mit einem auf 1,75 wt% begrenzten $TiO_2$-Gehalt. Der geringe Gehalt an $TiO_2$ wird dort mit einer positiven Wirkung auf den Weißwert L* erklärt. Dabei darf der $TiO_2$-Gehalt jedoch eine Untergrenze von 1,3 wt% nicht unterschreiten, da die Kristalle in diesem Fall zu groß werden würden, wodurch die Festigkeit und auch das homogene Erscheinungsbild der Glaskeramik beeinträchtigt werden. Der dort beschriebene Keramisierungszyklus sieht folgende Schritte vor: schneller Temperaturanstieg von 20 °C auf 670 °C bei einer Aufheizgeschwindigkeit von 25 °C/min; Temperaturanstieg von 670 °C auf die Keimbildungstemperatur $T_n$ mit einer Aufheizrate von 5 °C/min; Verweilzeit bei $T_n$; Temperaturanstieg von $T_n$ auf die Kristallwachstumstemperatur $T_c$ mit einer Aufheizrate von 7 °C/min; Verweilzeit bei $T_c$; schnelle Abkühlung auf 20 °C mit einer Abkühlrate von 25 °C/min. Diese bekannten Glaskeramiken weisen in der Regel zudem einen hohen $SnO_2$-Gehalt auf, der bei der Herstellung von opaken Glaskeramiken mit hohem Weißwert hohe Temperaturen erfordert, was die Herstellungskosten erhöht. Ein weiterer Nachteil besteht darin, dass mit dem bekannten Verfahren keine ebenen Platten hergestellt werden können, weil die Heizrate bis zum Erreichen von $T_c$ sehr hoch ist.

Die WO 2019/117122 A1 beschreibt eine Glaskeramik auf LAS-Basis, die eine feste β-Spodumen-Lösung als Hauptkristallphase enthält. Nachteilig bei den hier offenbarten Glaskeramiken sind die hohen mittleren Längenausdeh-nungskoeffizienten $\overline{\alpha}$(30 °C;750 °C) von $11 \times 10^{-7}$/K und mehr.

Bei der Entwicklung von Glaskeramiken besteht daher Bedarf, ein ganzes Bündel von gegenläufigen Forderungen an Glas und Glaskeramik, wie günstige Fertigungseigenschaften ohne Nachteile bei der Produktqualität der Glaskeramik, wie insbesondere Farbigkeit, Helligkeit Y und mittleren Längenausdehnungskoeffizienten $\overline{\alpha}$(20 °C;700 °C) bei kurzen Keramisierungszeiten zu vereinbaren.

Es ist Aufgabe der Erfindung, $As_2O_3$- und $Sb_2O_3$-freie LAS-Glaskeramiken bereitzustellen, die einen verbesserten Weißwert L* (auch als Helligkeit in Remission bezeichnet, im Unterschied zur Helligkeit Y, die in Transmission gemessen wird) und einen geringen mittleren Längenausdehnungskoeffizienten $\overline{\alpha}$(20 °C;700 °C) aufweisen sowie deren wirtschaftliche Herstellung zu ermöglichen.

Diese Aufgabe wird mit einer Lithiumaluminiumsilikat-Glaskeramik mit den Merkmalen des Patentanspruchs 1 gelöst.

Die LAS-Glaskeramik wird aus einem Ausgangsglas oder Grünglas mittels eines Keramisierungsverfahrens hergestellt, wobei die Umwandlung des Grünglases in die Keatitphase bei Temperaturen von bis zu 1250 °C erfolgt.

Die Entstehung der Keatitphase kann mittels dynamischer Differenzkalorimetrie (DSC, insbesondere mit hf-DSC) nach DIN 51007:2019-04 mit einer Heizrate von $5\,K \cdot min^{-1}$ nachgewiesen werden. Dabei wird als Peaktemperatur der Keatit-Mischkristallbildung (auch als Keatit-Peak-Temperatur $T_P$ bezeichnet) die Temperatur angegeben, bei der das Maximum der Umwandlungswärme registriert wird.

Es hat sich gezeigt, dass eine Glaskeramik mit einer Keatit-Peak-Temperatur $T_P$ im Bereich von 980 °C bis 1090 °C eine gute Farbneutralität, insbesondere einen großen Weißwert L* und einen geringen mittleren Längenaus-dehnungskoeffizient $\overline{\alpha}$(20 °C;700 °C) aufweist.

Im beanspruchten Bereich der Keatit-Peak-Temperatur $T_P$ lassen sich die gewünschten Eigenschaften der Glaskeramik auf einfache Weise optimieren.

Der beanspruchte Bereich der Keatit-Peak-Temperatur $T_P$ eröffnet die Möglichkeit, die Glaskeramik in einem breiten Spektrum von opak bis transluzent herzustellen, wobei im Fall der transluzenten Glaskeramik zwischen einer solchen, die anzeigefähig ist, und einer, die nicht anzeigefähig ist, unterschieden werden kann.

Vorzugsweise liegt die Keatit-Peak-Temperatur $T_P$ im Bereich von 980 °C bis 1070 °C, insbesondere im Bereich von 990 °C bis 1055 °C. Glaskeramiken mit Keatit-Peak-Temperaturen in diesem Temperaturbereich lassen sich mittels eines geeigneten Keramisierungsverfahrens mit moderaten Keramisierungstemperaturen und -zeiten wirtschaftlich vom Grünglas in eine Glaskeramik überführen.

Die LAS-Glaskeramik umfasst vorzugsweise folgende Komponenten mit folgenden Anteilen (in Gew.-% auf Oxidbasis):

| | |
|---|---|
| $Li_2O$ | 3 - 5 |
| $Al_2O_3$ | 18 - 25 |
| $SiO_2$ | 60 - 70 |
| $SnO_2$ | 0 - 0,5, bevorzugt 0,01 - 0,5, weiter bevorzugt 0,05 - < 0,3 |

$Li_2O$, $Al_2O_3$ und $SiO_2$

Die Oxide $Li_2O$, $Al_2O_3$ und $SiO_2$ sind notwendige Bestandteile der Keatit-Mischkristallphasen. Sie liegen vorzugsweise in den im Folgenden angegebenen Grenzen vor.

Für das kristallisierbare Glas und die daraus hergestellte Glaskeramik beträgt der Gehalt an $Li_2O$ 3 bis 5 Gew.-%. Der Mindestgehalt ist sinnvoll, um die gewünschte niedrige Verarbeitungstemperatur des Glases zu erreichen. Bevorzugt beträgt der $Li_2O$-Gehalt weniger als 4,5 Gew.-%, weiter bevorzugt weniger als 4,4 Gew.-% und besonders bevorzugt weniger als 4,3 Gew.-%. Der Mindestgehalt beträgt bevorzugt 3,2 Gew.-% und besonders bevorzugt 3,4 Gew.-%.

Es hat sich ferner gezeigt, dass der $Li_2O$-Anteil die Keatit-Peak-Temperatur $T_P$ beeinflusst. Je höher der $Li_2O$-Anteil, desto niedriger liegt die Keatit-Peak-Temperatur $T_P$,

Vorzugsweise enthält die Glaskeramik 3,9 bis 4,5 Gew.-% $Li_2O$, bevorzugt bis 4,2 Gew.-%. Die Keatit-Peak-Temperatur $T_P$ liegt vorzugsweise im Bereich von 990 °C bis 1025 °C.

Vorzugsweise enthält die Glaskeramik 3,5 bis < 3,9 Gew.-% $U_2O$. Die Keatit-Peak-Temperatur $T_P$ liegt vorzugsweise im Bereich von 1015 °C bis 1060 °C.

Niedrigere $Li_2O$-Gehalte haben den Vorteil, dass für die Herstellung einer solchen Glaskeramik Ressourcen und Rohstoffkosten gespart werden und der Herstellprozess des Grünglases aufgrund der geringeren Entglasungsneigung robuster abläuft und somit höhere Ausbeuten möglich sind.

Höhere $Li_2O$-Gehalte haben den Vorteil, dass sowohl bei der Herstellung des Grünglases als auch bei der Keramisierung des Grünglases zur Glaskeramik niedrigere Temperaturen eingesetzt werden können.

Der Gehalt an $Al_2O_3$ beträgt vorzugsweise 18 bis 25 Gew.-%. Höhere Gehalte als 25 Gew.-% sind nachteilig wegen der Neigung zu Entglasung von Mullit bei der Formgebung.

Der Gehalt der Hauptkomponente $SiO_2$ soll vorzugsweise mindestens 60 Gew.-% betragen, weil dies für die geforderten Eigenschaften der Glaskeramik, wie z. B. niedrige thermische Ausdehnung und chemische Beständigkeit vorteilhaft ist. Besonders vorteilhaft ist ein Mindestgehalt von 64 Gew.-%. Der $SiO_2$-Gehalt soll vorzugsweise maximal 70 Gew.-% betragen, weil diese Komponente die Verarbeitungstemperatur des Glases und die Schmelztemperatur erhöht. Bevorzugt beträgt der $SiO_2$-Gehalt maximal 68 Gew.-%.

$SnO_2$

Vorzugsweise enthält die Glaskeramik 0 bis 0,5 Gew.-% $SnO_2$

In bestimmten Ausführungsvarianten kann auf $SnO_2$ gänzlich verzichtet werden. Die Glaskeramik enthält vorzugsweise 0 Gew.-% $SnO_2$, wenn das Glas einer Hochtemperaturläuterung unterzogen wird. Bei einer Hochtemperaturläuterung beträgt die Temperatur der Glasschmelze vorzugsweise mehr als 1750 °C, bevorzugt mehr als 1850 °C.

Gemäß einer weiteren Ausführungsform ist die Glaskeramik $SnO_2$-haltig. Die Glaskeramik enthält also > 0 Gew.% $SnO_2$, vorzugsweise wenigstens 0,01 Gew.-% $SnO_2$, weiter bevorzugt wenigstens 0,05 Gew.-% $SnO_2$ und/oder höchstens 0,5 Gew.-% $SnO_2$, bevorzugt weniger als 0,3 Gew.-% $SnO_2$.

Schon bei geringen Gehalten wirkt $SnO_2$ als Läutermittel und stellt in Kombination mit technischen Maßnahmen an der Schmelzwanne die geforderte Blasenqualität sicher. Es ist die umweltfreundliche Alternative zu den Schwermetallen $As_2O_3$ und $Sb_2O_3$. Fernerhin wirkt $SnO_2$ auch als Keimbildner und kann die Steuerung des Umwandlungsprozesses maßgeblich unterstützen. Bevorzugt enthält das Glas und die daraus hergestellte Glaskeramik mindestens 0,03 Gew.-% und besonders bevorzugt mindestens 0,04 Gew.-% $SnO_2$.

Vorzugsweise weist die Glaskeramik einen Weißwert L* im Farbraum L*, a*, b* von 60 bis 97 - aus den spektralen Werten einer Remissionsmessung bestimmt - und eine Helligkeit Y - aus den spektralen Werten einer Transmissionsmessung bestimmt von 0,1 % bis 25 % auf, wobei L* und Y mit der Normlichtart D65 unter einem Winkel von 2° bei einer Dicke der Glaskeramik von 4 mm ermittelt werden.

Man kann im Wesentlichen folgende Materialtypen unterscheiden:

Variante A

Variante A betrifft eine opake LAS-Glaskeramik mit hohem Weißwert und geringer Helligkeit Y.

Vorzugsweise ist die Glaskeramik opak und weist eine Keatit-Peak-Temperatur $T_P$ im Bereich von 980 °C bis 1070 °C, insbesondere im Bereich von 990 °C bis 1055 °C, sowie folgende Werte auf:

L* = 85 bis 97, bevorzugt 90 bis 97, besonders bevorzugt 90 bis 96
a* = -1,5 bis 0,5, bevorzugt -1,2 bis 0,5
b* = -6 bis 0,5, bevorzugt -4,5 bis 0
und Y = 0,1 % bis 2 %, bevorzugt 0,2 % bis 2%.

Variante B

Die Variante B betrifft eine transluzente LAS-Glaskeramik mit niedrigerem Weißwert und höherer Helligkeit Y.

Eine konturscharfe Sicht von 7-Segment-Anzeigen ist nicht möglich, wohl aber die Anzeigen von Restwärme oder sonstiger Signale.

Vorzugsweise ist die Glaskeramik transluzent und weist eine Keatit-Peak-Temperatur $T_P$ im Bereich von 980 °C bis 1070 °C, insbesondere im Bereich von 990 °C bis 1055 °C, sowie folgende Werte auf:

L* = 72 bis 93, bevorzugt 80 bis 93
a* = -5,5 bis 0, bevorzugt -5 bis 0
b* = -7 bis 0,5, bevorzugt -6,5 bis 0, besonders bevorzugt -6 bis 0
und Y = > 2 % bis 10 %.

Variante C

Die Variante C betrifft eine LAS-Glaskeramik mit niedrigerem Weißwert und höherer Helligkeit Y, so dass eine konturscharfe Sichtbarkeit von roten Anzeigen möglich ist.

Vorzugsweise ist die Glaskeramik transluzent und weist eine Keatit-Peak-Temperatur $T_P$ im Bereich von 980 °C bis 1070 °C, insbesondere im Bereich von 990 °C bis 1055 °C, sowie folgende Werte auf:

L* = 60 bis 82, bevorzugt 65 bis 82, besonders bevorzugt 68 bis 81
a* = -7,5 bis -2, bevorzugt -6,5 bis -2, besonders bevorzugt -5,5 bis -2
b* = -19 bis -4,5, bevorzugt -14 bis -4,5, besonders bevorzugt -13,5 bis -4,5
und Y = > 10 % bis 25 %, bevorzugt > 10 % bis 20 %.

Während bei den Varianten A und B die Anzeigefähigkeit nicht oder nicht ausreichend gegeben ist, ist sie für die Variante C von Interesse.

Die Anzeigefähigkeit wird vorzugsweise durch Inaugenscheinnahme einer Glaskeramikscheibe einer Dicke von ca. 4mm beurteilt, die auf einer 7-LED-Segmentanzeige angeordnet ist.

Unterstützend können zur Beurteilung der Anzeigefähigkeit vorzugsweise Transmissionsmessungen basierend auf der ISO 15368 herangezogen werden.

Bei der Messvariante PvK (Probe vor der Kugel) steht die Probe vor einer Integrationskugel, in der sich ein Detektor befindet. Dieser Detektor erfasst in Vorwärtsrichtung von der Probe unter einem Winkel von bis zu 10° diffus gestreutes Licht. Bei der Messvariante PiP (Probe im Probenraum) befindet sich die Probe in einem Abstand von 43 cm vor der Integrationskugel. Das von der Probe diffus gestreute Licht wird vom Detektor hierbei nicht erfasst.

Für die Beurteilung der Anzeigefähigkeit für rote Anzeigen wird vorzugsweise der Quotient (PvK-PiP)/PiP für Licht der Wellenlänge 630 nm herangezogen.

Für die Material-Gruppe "Transluzent" mit Y-Werten > 2% kann man folgende Einteilung der Anzeigefähigkeit vornehmen;

"Nicht anzeigefähig" bedeutet: Es ist, unabhängig davon, unter welchem Winkel der Betrachter blickt, keine Anzeige erkennbar. Die Abbildung der 7-LED-Segmentanzeige ist verschwommen.

Einen Anhaltspunkt, wann es zu dieser Wahrnehmung kommt, gibt der Quotient (PvK-PiP)/PiP. Er liegt bei einem Wert > 20.

"Schwach anzeigefähig" bedeutet: Die schärfste Abbildung der 7-LED-Segmentanzeige sieht man, wenn der Blick des Betrachters in 90° zur Anzeige, also senkrecht, steht. Wenn ein von 90° abweichender Winkel zwischen Auge und Anzeige besteht, erscheint die Anzeige verschwommen, aber noch erkennbar. Der einen Anhaltspunkt für diese Wahrnehmung liefernde Quotient (PvK-PiP)/PiP beträgt höchstens 20, bevorzugt liegt der Quotient bei wenigstens 4.

"Gut anzeigefähig" bedeutet: Die Anzeige ist aus allen Blickwinkeln gut erkennbar und konturscharf, aber der Rotbereich der 7-LED-Segmentanzeige erscheint weniger brillant. Der einen Anhaltspunkt für diese Wahrnehmung liefernde Quotient (PvK-PiP)/PiP beträgt höchstens 5,5, bevorzugt liegt der Quotient bei wenigstens 2.

"Sehr gut anzeigefähig" bedeutet: Auch hier ist die Anzeige aus allen Blickwinkeln sehr gut erkennbar und konturscharf, und der Rotbereich der 7-LED-Segmentanzeige wirkt brillanter, so dass das Ablesen noch leichter fällt. Der einen Anhaltspunkt für diese Wahrnehmung liefernde Quotient (PvK-PiP)/PiP beträgt höchstens 3, bevorzugt liegt der Quotient bei 0.

Vorzugsweise weist die Glaskeramik einen Quotienten (PvK-PiP)/PiP für Licht der Wellenlänge 630 nm von $\leq$ 20 auf.

Die Angaben der Anzeigefähigkeit in den Tabellen 3 und 4 beruhen auf der vorgenannten Einteilung. Die Zahlenwerte der Größen PvK und PiP sowie die des Quotienten sind in den Tabellen gerundet angegeben.

Alle drei Ausführungsformen der Glaskeramik konnten optimiert werden, weil die Keatit-Peak-Temperatur Tp im Bereich von 980 °C bis 1090 °C liegt. Die drei Ausführungsformen haben den Vorteil, dass die Glaskeramiken hohe Weißwerte L* besitzen sowie betragsmäßig niedrige Farbwerte a* und b*, was die Farbneutralität positiv beeinflusst.

Das weiße Erscheinungsbild (transluzent bis opak) wird durch eine gesteuerte Führung der Kristallisation erzeugt. In besonderen Anwendungsfällen ist auch eine gesteuerte Streuung gewünscht, um z. B. ein transluzentes weißes Erscheinungsbild zu erzeugen.

Vorzugsweise weist die Glaskeramik einen mittleren Längenausdehnungskoeffizienten $\overline{\alpha}$(20 °C;700 °C) von 0 bis 2,0 $\times$ 10$^{-6}$/K, bevorzugt von mehr als 0,5 $\times$ 10$^{-6}$/K und besonders bevorzugt von mehr als 0,6 $\times$ 10$^{-6}$/K auf. Vorzugsweise weist die Glaskeramik einen mittleren Längenausdehnungskoeffizienten $\overline{\alpha}$(20 °C;700 °C) bis 1,5 $\times$ 10$^{-6}$/K, bevorzugt bis 1,4 $\times$ 10$^{-6}$/K und ganz besonders bevorzugt bis 1,0 $\times$ 10$^{-6}$/K auf.

Es hat sich gezeigt, dass auch diese Eigenschaft verbessert werden konnte. Diese Ausführungsform hat den Vorteil, dass die Glaskeramik deutlich höheren Temperaturwechselbeanspruchungen ausgesetzt werden kann, als dies bei den Glaskeramiken nach dem Stand der Technik der Fall ist.

MgO

Vorzugsweise enthält die Glaskeramik 0,01 bis < 1 Gew.-% MgO.

Der MgO-Gehalt soll weniger als 1 Gew.-%, bevorzugt höchstens 0,5 Gew.-%, besonders bevorzugt höchstens 0,4 Gew.-% und ganz besonders bevorzugt höchstens 0,35 Gew.-% betragen. In einem bevorzugten MgO-Wertebereich von 0,1 Gew.-% bis 0,4 Gew.-% lassen sich die Anforderungen an geringe Farbe der Glaskeramik und niedriger Verarbeitungstemperatur besonders gut miteinander verbinden.

Die Glaskeramik enthält gemäß einer weiteren Ausführungsform bis auf Verunreinigungen kein MgO. Diese MgO-freie Ausführungsform hat den Vorteil, dass eine Verbesserung des Farbwertes um z. B. - 3,5 bis - 5,5, bei vergleichbarem Weißwert L* mit einer Abweichung von z. B. $\pm$1 erreicht wird.

ZnO

Vorzugsweise enthält die Glaskeramik 0,5 bis 3 Gew.-% ZnO.

Die Komponente ZnO ist vorteilhaft für die Erniedrigung der Schmelz- und Verarbeitungstemperatur des Glases. Die Komponente führt vergleichbar der Komponente Li$_2$O zu einer Verringerung der thermischen Ausdehnung der Glaskeramik. Der ZnO-Gehalt ist wegen der Verdampfungsneigung aus der Glasschmelze vorzugsweise auf Werte von höchstens 3 Gew.-% begrenzt. Bevorzugt ist ein ZnO-Gehalt von höchstens 2,7 Gew.-% und besonders bevorzugt von höchstens 2,5 Gew.%. Bevorzugt ist ein Mindestgehalt von 0,5 und besonders bevorzugt mehr als 1 Gew.-%. Der ZnO-Gehalt soll in besonders bevorzugter Weise 0,5 Gew.-% bis < 3 Gew.-% betragen.

Vorzugsweise gilt für den Quotienten aus Al$_2$O$_3$ und Li$_2$O+MgO+ZnO (alle Oxide angegeben in Gew.-%): 3 $\leq$ Al$_2$O$_3$/(Li$_2$O+MgO+ZnO) < 3,2 (Bedingung B1a), wobei die Glaskeramik eine Keatit-Peak-Temperatur T$_P$ im Bereich von 990 °C bis 1005 °C aufweist.

Vorzugsweise gilt für den Quotienten aus Al$_2$O$_3$ und Li$_2$O+MgO+ZnO (alle Oxide angegeben in Gew.-%): 3,2 $\leq$ Al$_2$O$_3$/(Li$_2$O+MgO+ZnO) < 3,8 (Bedingung B1b), wobei die Glaskeramik eine Keatit-Peak-Temperatur T$_P$ im Bereich von > 1005 °C bis 1060 °C aufweist.

Die Einhaltung der Bedingung B1a hat den Vorteil, dass die Umwandlung in eine Glaskeramik mit Keatit als Hauptkristallphase bei Temperaturen und/oder Zeiten erfolgen kann, die wirtschaftlich und energieeffizient sind.

Die Einhaltung der Bedingung B1b hat den Vorteil, dass zur Einstellung der gewünschten optischen Eigenschaften der Temperaturbereich und/oder die Keramisierungszeit breiter gewählt und die bestimmungsgemäßen Eigenschaften der Glaskeramik besser gesteuert werden können.

Die Bedingungen B1a und B1b gelten vorzugsweise auch für MgO-freie Zusammensetzungen der Glaskeramik.

Alkalien Na$_2$O und K$_2$O

Vorzugsweise enthält die Glaskeramik (in Gew.-% auf Oxidbasis):

Na$_2$O 0 - 1 und
K$_2$O 0 - 1

mit der Bedingung B2a

0,1 ≤ Na$_2$O + K$_2$O ≤ 1,5.

Vorzugsweise enthält die Glaskeramik (in Gew.-% auf Oxidbasis):

Na$_2$O 0 - 1 und
K$_2$O > 0 - 1

mit der Bedingung B2b

0,05 ≤ Na$_2$O / K$_2$O ≤ 1,2.

Vorzugsweise gilt für die Bedingung B2b ein Bereich von 0,05 bis 0,7, insbesondere von 0,1 bis 0,65.

Die Alkalien Na$_2$O und K$_2$O erniedrigen die Schmelztemperatur und die Verarbeitungstemperatur bei der Formgebung des Glases. Das Einschmelzen der schwer löslichen Rohstoffe wie ZrO$_2$ und SiO$_2$ wird beschleunigt. Die Gehalte müssen bei beiden Alkalien Na$_2$O und K$_2$O auf maximal 1 Gew.-% begrenzt werden, weil diese Komponenten nicht in die Kristallphasen eingebaut werden, sondern in der Restglasphase der Glaskeramik verbleiben. Zu hohe Gehalte beeinträchtigen das Kristallisationsverhalten bei der Umwandlung des kristallisierbaren Ausgangsglases in die Glaskeramik und wirken sich ungünstig auf die Zeit-/Temperaturbelastbarkeit der Glaskeramik aus.

Bevorzugt ist der Na$_2$O-Gehalt 0 Gew.-% oder > 0 Gew.-%, und besonders bevorzugt enthält die Glaskeramik mindestens 0,05 Gew.-% Na$_2$O und weiter besonders bevorzugt mindestens 0,07 Gew.-% Na$_2$O und ganz besonders bevorzugt 0,1 Gew.-% Na$_2$O. Der maximale Anteil beträgt vorzugsweise 1 Gew.-%.

Bevorzugt ist der K$_2$O-Gehalt 0 Gew.-% oder > 0 Gew.-%, und besonders bevorzugt enthält die Glaskeramik mindestens 0,1 Gew.-% K$_2$O. Der maximale Anteil beträgt vorzugsweise 1 Gew.-%.

Die Summe der Alkalien Na$_2$O + K$_2$O beträgt weiter bevorzugt maximal 1,2 Gew.-%. Die Summe der Alkalien Na$_2$O + K$_2$O beträgt besonders bevorzugt mindestens 0,2 Gew.-%, um die Schmelzbarkeit weiter zu verbessern und die Verarbeitungstemperatur zu erniedrigen. Besonders bevorzugt gilt 0,4 Gew.-% ≤ Na$_2$O + K$_2$O ≤ 1,2 Gew.-%.

Fe$_2$O$_3$

Vorzugsweise enthält die Glaskeramik bis zu 0,06 Gew.-% Fe$_2$O$_3$.

Wegen der hohen Kosten eisenarmer Gemengerohstoffe ist es unwirtschaftlich, den Fe$_2$O$_3$-Gehalt des kristallisierbaren Glases auf Werte unter 0,008 Gew.-%, also auf weniger als 80 ppm zu begrenzen. Andererseits erhöht sich mit dem Fe$_2$O$_3$-Gehalt auch die Konzentration der Fe/Ti-Farbkomplexe in der Glaskeramik und der Weißwert sinkt. Das kristallisierbare Glas und die daraus hergestellte Glaskeramik sollen deswegen bevorzugt bis zu 0,06 Gew.-% an Fe$_2$O$_3$, besonders bevorzugt höchstens 0,025 Gew.-% enthalten. Dass dieser vergleichsweise hohe Eisengehalt sich noch nicht zu negativ auf den Weißwert auswirkt, ist ein Vorteil der hier geschilderten Glaskeramiken und/oder Keramisierungsverfahren. Bei Gehalten von > 600 ppm kann eine unerwünschte Reduzierung in der Helligkeit in Remission, also im Weißwert L*, sowie ein unerwünschter Farbshift, also Abweichung von dem Neutralpunkt in den a*- und b*-Werten, und fallweise auch eine Reduzierung der Helligkeit Y auftreten.

Nd$_2$O$_3$

Vorzugsweise enthält die Glaskeramik nicht mehr als 0,065 Gew.-% Nd$_2$O$_3$. Bei höheren Werten kann es zu einem Absenken des Farbwertes b* kommen, wodurch es zu einer unerwünschten Erhöhung des c*-Wertes bei sonst farbarmen Glaskeramiken kommen kann.

P$_2$O$_5$

Vorzugsweise enthält die Glaskeramik 0 bis 2 Gew.-% P$_2$O$_5$, bevorzugt 0 bis 1 Gew.-%, besonders bevorzugt 0 bis 0,5 Gew.-%, ganz besonders bevorzugt 0 bis 0,1 Gew.-% P$_2$O$_5$.

Zur Verbesserung der Schmelzbarkeit und Entglasungsfestigkeit bei der Formgebung können bis zu 2 Gew.-%, bevorzugt bis zu 1 Gew.-% P$_2$O$_5$ enthalten sein. Höhere Gehalte sind nachteilig für die chemische Beständigkeit.

Soweit für Komponenten ein Anteil von 0 Gew.-% angegeben wird, bedeutet dies, dass auf die betreffende Komponente im Rohstoffgemenge verzichtet wird. Als unvermeidliche Verunreinigungen können diese Komponenten

jedoch vorhanden sein.

### Bi$_2$O$_3$

Die Glaskeramik enthält gemäß einer weiteren Ausführungsform bis auf Verunreinigungen kein Bi$_2$O$_3$.

Bi$_2$O$_3$ ist eine färbende Substanz, die der Glaskeramik eine dunkelbraune bis schwarze Farbe verleiht. Zur Erreichung eines möglichst großen Weißwertes L* ist es von Vorteil, Bi$_2$O$_3$ gezielt auszuschließen.

### ZrO$_2$

Vorzugsweise enthält die Glaskeramik bis zu 2,5 Gew.-% ZrO$_2$, insbesondere bis zu 2,4 Gew.-%, besonders bevorzugt bis zu 2,2 Gew.-%. Die Obergrenze von 2,5 Gew.-% ergibt sich aus der Forderung nach Entglasungsfestigkeit, insbesondere dann, wenn die Glaskeramik noch weitere Keimbildner aufweist.

Ein Mindestgehalt von 1 Gew.-% ist für eine ausreichend schnelle Keimbildung erforderlich.

In einer bevorzugten Ausführungsform besitzt sowohl das kristallisierbare Ausgangsglas, das auch als Grünglas bezeichnet wird, als auch die aus dem Ausgangsglas hergestellte Glaskeramik vorzugsweise eine Zusammensetzung, die folgende Komponenten mit folgenden Anteilen (in Gew.% auf Oxidbasis) umfasst:

TiO$_2$ > 1,6 - 2,8
ZrO$_2$ 1 - 2,5
ZnO 0-3
MgO 0,01 - 1
SnO$_2$ 0,01 - < 0,3

mit der Bedingung B3a (dabei beide in Gew.-%)
0,005 < MgO $\times$ SnO$_2$ < 0,1.

Die Zahlenwerte in Bedingung B3a haben die Dimension (Gew.-%)$^2$.

### MgO $\times$ SnO$_2$

Dem Produkt der Komponenten MgO $\times$ SnO$_2$ kommt eine entscheidende Bedeutung zu, um geringe Farbigkeit, Läuterbarkeit und niedrige Schmelz- und Formgebungstemperaturen zu vereinbaren. So können bei wirtschaftlicher Herstellung die Farbwerte a* und b* weiter verringert und die Helligkeit Y der Glaskeramik entsprechend eingestellt werden.

Das erfindungsgemäße Glas und damit auch die Glaskeramik besitzen ein Produkt der Komponenten MgO $\times$ SnO$_2$ (beide in Gew.-%) von vorzugsweise weniger als 0,1, bevorzugt weniger als 0,08, bevorzugt weniger als 0,07. Das Produkt der Komponenten soll mehr als 0,005, bevorzugt mehr als 0,01, weiter bevorzugt mehr als 0,012 und besonders bevorzugt mehr als 0,015 betragen.

Die Bedingung B3a ist vorteilhaft, um die gewünschten günstigen Fertigungseigenschaften des Glases mit guten Farbwerten a* und b* sowie einer einstellbaren Helligkeit zu vereinbaren.

### TiO$_2$/SnO$_2$

Weiterhin ist ein gegenüber dem Stand der Technik erhöhtes Verhältnis der Keimbildner TiO$_2$/SnO$_2$ mit SnO$_2$ > 0 Gew.-% vorteilhaft. Bevorzugt gilt 7 $\leq$ TiO$_2$/SnO$_2$ < 200 (Bedingung B4). Weiter bevorzugt gilt für das Verhältnis mindestens 8 und besonders bevorzugt mindestens 18. Beide Komponenten erhöhen insbesondere über die Absorption der Sn/Ti-Farbkomplexe die Farbe. Durch die erfindungsgemäßen niedrigen SnO$_2$-Gehalte wird die Konzentration dieser Farbkomplexe verringert und es werden die gewünschte hohe Helligkeit und niedrige Farbe erreicht. Dabei kann der TiO$_2$-Gehalt bei höheren Werten gewählt werden, das Verhältnis nimmt zu. Dadurch sind kurze Keramisierungszeiten darstellbar, und die Entglasungsfestigkeit wird verbessert.

Eine bevorzugte Obergrenze liegt unter 100, besonders bevorzugt unter 50, insbesondere unter 40.

### TiO$_2$ + ZrO$_2$ + SnO$_2$

Bevorzugt gilt für die Summe der Keimbildner TiO$_2$ + ZrO$_2$ + SnO$_2$ ein Wertebereich von 3 bis 4,8 Gew.-% (Bedingung B5). Der Mindestgehalt ist für eine ausreichend schnelle Keimbildung erforderlich. Bevorzugt beträgt der Mindestgehalt 3,5 Gew.-%, um bei schneller Keramisierung auch transluzente, anzeigefähige Glaskeramiken herstellen zu können. Die Obergrenze von 4,8 Gew.% ergibt sich aus der Forderung nach Entglasungsfestigkeit.

Gemäß einer weiteren Ausführungsform besitzt die Glaskeramik eine Zusammensetzung, die folgende Komponenten (in Gew.-% auf Oxidbasis) enthält:

$Li_2O$ 3,2 - < 4,5
$Al_2O_3$ 19 - 23
$SiO_2$ 62 - 68
$Na_2O$ 0 - 1
$K_2O$ 0 - 1
$Na_2O + K_2O$ 0,1 - 1,5
$ZnO$ 0-3
$MgO$ 0,01 - 1
$CaO$ 0,05 - 2
$TiO_2$ 1,8 - 2,8
$ZrO_2$ 1 - < 2,2
$SnO_2$ 0,01 - < 0,3
$TiO_2 + ZrO_2 + SnO_2$ 3,5 - 4,8
$Fe_2O_3$ 0,008 - 0,06

mit $0,005 < MgO \times SnO_2 < 0,1$ (Bedingung B3a).

In dieser bevorzugten Zusammensetzung kann ZnO auch zwingend enthalten sein. Es gilt dann für ZnO vorzugsweise 1 bis 3 Gew.-%.

Gemäß einer weiteren Ausführungsform besitzt die Glaskeramik eine Zusammensetzung, die folgende Komponenten (in Gew.-% auf Oxidbasis) enthält:

$Li_2O$ 3,2 - < 4,5
$Al_2O_3$ 19 - 23
$SiO_2$ 62 - 68
$Na_2O$ 0,05 - 1
$K_2O$ 0 - 1
$Na_2O + K_2O$ 0,15 - 1,2
$MgO$ 0,1 - 0,8
$CaO$ 0,05 - 1
$SrO$ 0-1,5
$BaO$ 0-2,5
$SrO + BaO$ 0,5 - 2,5
$ZnO$ 1 - 2,9
$B_2O_3$ 0 - 1
$TiO_2$ 1,8 - 2,8
$ZrO_2$ 1 - < 2,2
$SnO_2$ 0,01 - < 0,25
$TiO_2 + ZrO_2 + SnO_2$ 3,6 - 4,8
$P_2O_5$ 0 - 2
$Fe_2O_3$ 0,008 - 0,05

mit $0,005 < MgO \times SnO_2 < 0,1$ (Bedingung B3a)

Vorzugsweise ist die Glaskeramik, vorzugsweise die opake bzw. transluzente Glaskeramik, vorzugsweise gemäß der Variante A bzw. B, dadurch gekennzeichnet, dass nach einer Temperung der Glaskeramik über eine Temperzeit von 10 h bei 700 °C die Helligkeit Y um höchstens ±0,3 ($|\Delta Y| \leq 0,3$ %) von der Helligkeit Y vor der Temperung der Glaskeramik abweicht.

Vorzugsweise ist die Glaskeramik, vorzugsweise die opake bzw. transluzente Glaskeramik, vorzugsweise gemäß der Variante A bzw. B, dadurch gekennzeichnet, dass nach einer Temperung der Glaskeramik über eine Temperzeit von 10 h bei 700 °C der Weißwert L* um höchstens ±1,5 ($|\Delta L^*| \leq 1,5$), bevorzugt höchstens ±0,7 ($|\Delta L^*| \leq 0,7$) von dem Weißwert L* vor der Temperung der Glaskeramik abweicht.

Vorzugsweise ist die Glaskeramik, vorzugsweise die opake bzw. transluzente Glaskeramik, vorzugsweise gemäß der Variante A bzw. B, dadurch gekennzeichnet, dass nach einer Temperung der Glaskeramik über eine Temperzeit von 10 h bei 700 °C der Farbwert a* um höchstens ±0,3 ($|\Delta a^*| \leq 0,3$) von dem Farbwert a* vor der Temperung der Glaskeramik abweicht.

Vorzugsweise ist die Glaskeramik, vorzugsweise die opake bzw. transluzente Glaskeramik, vorzugsweise gemäß der Variante A bzw. B, dadurch gekennzeichnet, dass nach einer Temperung der Glaskeramik über eine Temperzeit von 10 h bei 700 °C der Farbwert b* um höchstens ±1,2 (|Δb*| ≤ 1,2), bevorzugt ±0,5 (|Δb*| ≤ 0,5) von dem Farbwert b* vor der Temperung der Glaskeramik abweicht.

Mit diesem Test über die relativ kurze Temperzeit von 10 h bei einer Temperatur, die deutlich über der Anwendungstemperatur liegt, kann eine lange Gebrauchsdauer bei niedrigeren Anwendungstemperaturen simuliert werden. Die Ergebnisse des Tests zeigen, dass die optischen Eigenschaften Y und L*, a* und b* der getesteten Glaskeramiken, vorzugsweise der opaken bzw. transluzenten Glaskeramiken, über einen langen Zeitraum in engen Grenzen stabil sind.

## Herstellungsverfahren des Grünglases

Das Verfahren zur Herstellung des kristallisierbaren Lithiumaluminiumsilikat-Glases ist gekennzeichnet durch die Schritte:

a) Bereitstellen eines Gemengesatzes aus technischen Rohstoffen;
b) Schmelzen des Gemengesatzes und Läutern bei Temperaturen größer als 1600 °C, vorzugsweise bei Temperaturen größer 1650 °C;
c) Abkühlen der Glasschmelze und Formgebung bei Temperaturen in der Nähe der Verarbeitungstemperatur $V_A$; und
d) Abkühlen in einem Entspannungsofen auf Raumtemperatur, wobei unerwünschte Spannungen im Glas entfernt werden.

Unter Raumtemperatur werden 20 °C verstanden.

Nach dem Verfahrensschritt b) kann auch eine Hochtemperaturläuterung bei Temperaturen > 1750°C durchgeführt werden.

Der Gemengesatz ist so ausgebildet, dass nach der Schmelze Gläser mit den erfindungsgemäßen Zusammensetzungen und Eigenschaften entstehen. Durch einen bevorzugten Scherbenzusatz von 20 bis 80 Gew.-% im Gemengesatz wird das Einschmelzen begünstigt, und es lassen sich höhere Wannendurchsätze erhalten. Bedarfsweise kann ein Hochtemperatur-Läuteraggregat eingesetzt werden. Bei der Formgebung wird bevorzugt ein Glasband mit plattenförmiger Geometrie über Walzen hergestellt und zur Vermeidung von Spannungen in einem Kühlofen auf Raumtemperatur abgekühlt. Aus diesem Glasband werden nach Sicherstellung der Qualität hinsichtlich von Volumen- und Oberflächendefekten Platten der gewünschten Größe hergestellt.

Für eine wirtschaftliche Herstellung ist eine niedrige Schmelztemperatur vorteilhaft und wird durch eine niedrigere Viskosität der Glasschmelze bei hohen Temperaturen sichergestellt.

Es ist wirtschaftlich vorteilhaft, die Temperatur bei der Formgebung abzusenken. Die Standzeiten der Formgebungswerkzeuge werden erhöht, und es fällt weniger abzuführende Verlustwärme an. Die Formgebung, meist durch Walzen oder Floaten, findet bei einer Viskosität der Glasschmelze von $10^4$ dPa s statt. Diese Temperatur wird auch als Verarbeitungstemperatur $V_A$ bezeichnet.

Das kristallisierbare Glas verfügt bei der Formgebung aus der Schmelze über eine ausreichende Entglasungsfestigkeit. Bei der Formgebung im Kontakt mit dem Formgebungsmaterial (z. B. Edelmetall bei der Ziehdüse im Walzprozess) bilden sich im Glas keine für die Festigkeit der Glaskeramik kritischen und visuell auffälligen Kristalle. Die Grenztemperatur, unterhalb der es zu kritischen Entglasungen kommt, d. h. die obere Entglasungsgrenze (OEG), liegt vorzugsweise unterhalb und besonders bevorzugt mindestens 15 °C unter der Verarbeitungstemperatur $V_A$. Bei dieser Mindestdifferenz wird für den Formgebungsprozess ein ausreichendes Prozessfenster definiert. Besonders vorteilhaft ist ein Prozessfenster $V_A$ - OEG, das mindestens 20 °C beträgt. Die Differenz der Temperaturen $V_A$ - OEG ist also ein Maß für die Entglasungsfestigkeit.

Geeignete Formgebungsverfahren für die plattenförmige Geometrie sind insbesondere Walzen und Floaten. Bevorzugtes Formgebungsverfahren aus der Glasschmelze ist ein Verfahren über zwei Walzen, da dieses Verfahren wegen der schnelleren Abkühlung Vorteile hat, wenn die Zusammensetzungen zu Entglasungen neigen.

## Keramisierungsverfahren

Der nächste Prozessschritt ist die Keramisierung auf ebenen oder dreidimensional geformten, hochtemperaturstabilen Unterlagen (Brennhilfsmitteln). Bevorzugt wird die Keramisierung in einem Rollenofen durchgeführt.

Das erfindungsgemäße Verfahren zur Herstellung einer Glaskeramik, wobei ein kristallisierbares $As_2O_3$- und $Sb_2O_3$-freies Lithiumaluminiumsilikat-Glas bereitgestellt wird, ist dadurch gekennzeichnet, dass die Keramisierung mit folgenden Verfahrensschritten in folgender Reihenfolge durchgeführt wird:

a) Erhöhen der Temperatur des kristallisierbaren Glases von Raumtemperatur $T_{RT}$ auf eine Temperatur $T_a$, die im Bereich von 660 bis 730 °C liegt, innerhalb von 3 bis 60 Minuten;

b) Erhöhen der Temperatur des kristallisierbaren Glases von $T_a$ auf eine Temperatur von höchstens 800 °C über einen Zeitraum von 5 bis 100 Minuten;

c) Erhöhen der Temperatur des Kristallisationskeime enthaltenden Glases innerhalb von 5 bis 80 Minuten Dauer in den Temperaturbereich $T_b$ beginnender HQ-Mischkristall-Bildung von 780 bis 850 °C;

d) Verweilen im Temperaturbereich $T_b$ über eine Zeitdauervon 5 bis 120 Minuten;

e) Erhöhen der Temperatur des HQ-Mischkristalle enthaltenden Glases innerhalb von 5 bis 80 Minuten Dauer in den Temperaturbereich $T_c$ hoher Kristallwachstumsgeschwindigkeit von 900 °C bis 950 °C;

f) Erhöhen der Temperatur des HQ-Mischkristalle enthaltenden Glases innerhalb von 5 bis 80 Minuten Dauer in den Temperaturbereich $T_D$ von 950 °C bis 1250 °C;

g) Verweilen in dem Temperaturbereich $T_D$ über eine Verweilzeit $t_V$ > 0 bis 60 Minuten;

h) rasches Abkühlen der erhaltenen Glaskeramik auf Raumtemperatur in weniger als 150 Minuten;

wobei die Keramisierung des Glases eine Gesamtdauer von weniger als 300 min aufweist.

Die im Temperaturbereich $T_D$ gewählte Temperatur wird auch als Temperatur $T_D$ und als Maximaltemperatur $T_D$ bezeichnet.

Das kristallisierbare LAS-Glas kann $SnO_2$-frei oder vorzugsweise $SnO_2$-haltig sein.

Im Verfahrensschritt d) wachsen die Kristalle des Typs Hochquarz-Mischkristalle auf den Kristallisationskeimen, bestehend aus den Keimbildnern, auf. In dieser Phase wird insbesondere die Hochquarz-Mischkristallstruktur homogenisiert. Diese Hochquarz-Mischkristallstruktur beeinflusst die Einstellbarkeit der optischen Eigenschaften Y, L*, a* und b*.

Im Verfahrensschritt e) setzt sich das Wachstum der Hochquarz-Mischkristalle fort. Die größeren HQ-Mischkristalle bewirken eine zunehmende Lichtstreuung.

Im Verfahrensschritt f) entstehen Kristalle des Typs Keatit-Mischkristalle aus den Kristallen des Typs Hochquarz-Mischkristalle.

Im Verfahrensschritt g) reifen die Kristalle des Typs Keatit-Mischkristalle weiter und die Eigenschaften der Glaskeramik werden optimiert.

Zur Optimierung der Eigenschaften, werden vorzugsweise folgende Verfahrensschritte im Verfahrensschritt g) durchgeführt:

1. Ausführungsform

Die Keatit-Peak-Temperatur liegt vorzugsweise bei $T_P \leq 1005$ °C.

Zur Herstellung einer Glaskeramik wird im Verfahrensschritt g) vorzugsweise folgender Verfahrensschritt durchgeführt:

g11) Verweilen bei einer Temperatur $T_D$ im Bereich von 1120 °C bis 1180 °C über eine Verweilzeit $t_v$ von 5 Minuten bis 20 Minuten.

Zur Herstellung einer Glaskeramik wird im Verfahrensschritt g) vorzugsweise folgender Verfahrensschritt durchgeführt:

g12) Verweilen bei einer Temperatur $T_D$ im Bereich von 1060 °C bis 1120 °C über eine Verweilzeit $t_v$ von 5 Minuten bis 20 Minuten.

Zur Herstellung einer Glaskeramik wird im Verfahrensschritt g) vorzugsweise folgender Verfahrensschritt durchgeführt:

g13) Verweilen bei einer Temperatur $T_D$ im Bereich von 1035 °C bis 1080 °C über eine Verweilzeit $t_v$ von 5 Minuten bis 20 Minuten.

Vorzugsweise wird bei niedrigen Temperaturen $T_D$ eine längere Verweilzeit gewählt und umgekehrt.

Durch die Temperaturbehandlung in den Schritten g11) bis g13) erfolgt eine Optimierung der gewünschten Eigenschaften in den Glaskeramik-Varianten A bis C, die sich durch eine kurze Verweilzeit tv und/oder niedrige Temperaturen $T_D$ wirtschaftlich herstellen lassen.

2. Ausführungsform

Die Keatit-Peak-Temperatur liegt vorzugsweise bei $T_P$ > 1005 °C.

Zur Herstellung einer Glaskeramik wird im Verfahrensschritt g) vorzugsweise folgender Verfahrensschritt durchgeführt:

g21) Verweilen bei einer Temperatur $T_D$ im Bereich von 1145 °C bis 1180 °C über eine Verweilzeit $t_v$ von 5 Minuten bis 20 Minuten.

Zur Herstellung einer Glaskeramik wird im Verfahrensschritt g) vorzugsweise folgender Verfahrensschritt durchgeführt:

g22) Verweilen bei einer Temperatur $T_D$ im Bereich von 1100 °C bis 1150 °C über eine Verweilzeit $t_v$ von 5 Minuten bis 20 Minuten.

Zur Herstellung einer Glaskeramik wird im Verfahrensschritt g) vorzugsweise folgender Verfahrensschritt durchgeführt:

g23) Verweilen bei einer Temperatur $T_D$ im Bereich von 1050 °C bis 1100 °C über eine Verweilzeit $t_v$ von 5 Minuten bis 20 Minuten.

Vorzugsweise wird bei niedrigen Temperaturen $T_D$ eine längere Verweilzeit gewählt und umgekehrt.

Durch die Temperaturbehandlung in den Schritten g21) bis g23) erfolgt eine Optimierung der gewünschten Eigenschaften in den Glaskeramik-Varianten A bis C, die sich durch eine kurze Verweilzeit tv und/oder niedrige Temperaturen $T_D$ wirtschaftlich herstellen lassen.

Besonders bevorzugte Ausführungsformen zur Herstellung einer Glaskeramik, die eine Keatit-Peak-Temperatur $T_P$ im Bereich von 990 °C bis 1025 °C, bevorzugt im Bereich von 990 °C bis 1005 °C aufweist, betreffen folgende Verfahrensschritte:

g31) Verweilen bei einer Temperatur $T_D$ von wenigstens 1145 °C über eine Verweilzeit $t_v$ von mindestens 6 Minuten oder bei wenigstens 1120 °C von mindestens 15 min.

g32) Verweilen bei einer Temperatur $T_D$ von wenigstens 1100 °C über eine Verweilzeit $t_V$ von mindestens 6 Minuten oder bei wenigstens 1080 °C von mindestens 15 min.

g33) Verweilen bei einer Temperatur $T_D$ von wenigstens 1080 °C über eine Verweilzeit tv von mindestens 6 Minuten oder bei wenigstens 1065 °C von mindestens 15 min.

Durch die Temperaturbehandlung in den drei genannten bevorzugten Verfahrensschritten g31) bis g33) erfolgt ebenfalls eine Optimierung der gewünschten Eigenschaften in den Glaskeramik-Varianten A bis C. Die Glaskeramik-Varianten A bis C sowie Glaskeramiken mit vorzugsweise $Y \leq 2$ % und $L^* \geq 93$ hergestellt nach g31), vorzugsweise 2 % $< Y \leq 10$ % und $80 \leq L^* \leq 92$ hergestellt nach g32) sowie vorzugsweise 10 % $< Y \leq 25$ % und $62 \leq L^* \leq 80$ hergestellt nach g33) lassen sich durch kurze Verweilzeiten tv und/oder niedrige Temperaturen $T_D$ wirtschaftlich herstellen.

Weitere besonders bevorzugte Ausführungsformen zur Herstellung einer Glaskeramik, die eine Keatit-Peak-Temperatur Tp im Bereich von > 1005 °C bis 1060 °C, bevorzugt im Bereich von 1015 °C bis 1060 °C aufweist, betreffen folgende Verfahrensschritte:

g41) Verweilen bei einer Temperatur $T_D$ von wenigstens 1170 °C über eine Verweilzeit tv von mindestens 6 Minuten oder bei wenigstens 1120 °C von mindestens 15 min.

g42) Verweilen bei einer Temperatur $T_D$ von wenigstens 1120 °C über eine Verweilzeit tv von mindestens 6 Minuten oder bei wenigstens 1100 °C von mindestens 15 min.

g43) Verweilen bei einer Temperatur $T_D$ von wenigstens 1100 °C über eine Verweilzeit tv von mindestens 6 Minuten oder bei wenigstens 1080 °C von mindestens 15 min.

Durch die Temperaturbehandlung in den Schritten g41) bis g43) erfolgt ebenfalls eine Optimierung der gewünschten Eigenschaften in den Glaskeramik-Varianten A bis C. Die Glaskeramik-Varianten A bis C sowie Glaskeramiken mit vorzugsweise $Y \leq 2$ % und $L^* \geq 90$ hergestellt nach g41), vorzugsweise 2 % $< Y \leq 10$ % und $80 \leq L^* \leq 93$ hergestellt nach g42) sowie vorzugsweise 10 % $< Y \leq 25$ % und $67 \leq L^* \leq 81$ hergestellt nach g43) lassen sich durch eine kurze Verweilzeit $t_V$ und/oder niedrige Temperaturen $T_D$ wirtschaftlich herstellen.

Die Aufgabe wird auch mit einer Glaskeramik nach einem der Ansprüche 1 bis 15 gelöst, hergestellt aus einem kristallisierbaren $As_2O_3$- und $Sb_2O_3$-freien Lithiumaluminiumsilikat-Glas durch ein Keramisierungsverfahren nach Anspruch 16.

Die erfindungsgemäße Glaskeramik, die vorzugsweise in Form einer Platte mit einer Dicke von 2 mm bis 20 mm vorliegt, wobei die Platte vorzugsweise auf einer Seite genoppt oder gerillt oder beidseitig glatt und/oder auch verformt oder gebogen sein kann, findet vorzugsweise Verwendung als Brandschutzglas, als Kochfläche, beispielsweise als Kochfläche für Kochgeräte mit Induktions-, Strahlungs- oder Gasbeheizung, als Abdeckung im Beleuchtungssektor, als Trägerplatte oder als Ofenauskleidung in Backöfen, Kaminöfen oder Mikrowellengeräten. Die Verwendung kann für private Hausgeräte von Endverbrauchern oder für industrielle Anwendungen, beispielsweise Lebensmittel-/Gastronomieanwendungen, vorgesehen sein. Die Glaskeramik kann weiterhin Anwendung finden in einer Vielzahl von Größen und Formen als Grilldeckel und/oder als Gasbrenner- oder Rotisserie-Brennerabdeckungen oder auch als Zubehör in Form von Pizzasteinen oder Planchas.

Es hat sich herausgestellt, dass sich die Glaskeramik für Beschichtungen eignet. Vorzugsweise ist die Glaskeramik, insbesondere in Form von Scheiben oder Platten, mit einer Beschichtung versehen. Besonders bevorzugt sind die Wärmestrahlung abschirmende Beschichtungen.

Die Beschichtung weist eine Schicht, vorzugsweise mindestens zwei Schichten auf. Bei einer Beschichtung mit zwei Schichten ist die erste Schicht vorzugsweise eine IR-reflektierende Schicht.

Eine bevorzugte Schicht weist ein dotiertes transparentes, leitfähiges Oxid auf. Das Oxid ist vorzugsweise ein Zinkoxid. Diese Schicht wird bei einem 2-Schichtsystem bevorzugt als erste Schicht verwendet.

Eine weitere bevorzugte Schicht weist ein röntgenamorphes Oxid oder Nitrid auf. Vorzugsweise ist die Oxid-Schicht eine Aluminiumoxid-Schicht. Vorzugsweise ist die Nitrid-Schicht eine Aluminiumnitrid-Schicht. Diese Schicht wird bei einem 2-Schichtsystem bevorzugt als zweite, auf der ersten Schicht aufgebrachte Schicht eingesetzt.

Es hat sich gezeigt, dass die Keatit-Peak-Temperatur $T_P$ durch die Zusammensetzung der Glaskeramik beeinflusst werden kann, und die Umwandlungstemperatur für die Keatitbildung, für die die Keatit-Peak-Temperatur ein Maß ist, durch die Keramisierungsbedingungen beeinflusst werden kann, wodurch wiederum die Eigenschaften der Glaskeramik optimiert werden können. Beispielhafte Ausführungsformen werden nachfolgend an Hand der einzigen Figur und von Tabellen erläutert.

In der Figur ist ein schematisches Temperatur/Zeit-Diagramm eines Keramisierungsprogramms dargestellt. Auf der Zeitachse t sind die verschiedenen Verfahrensschritte a) bis h) eingezeichnet.

Im Verfahrensschritt a) wird das Grünglas von einer Ausgangstemperatur $T_{RT}$ mit $T_{RT}$= 20°C innerhalb von 3 bis 60 Minuten auf die Temperatur $T_a$ erhitzt. Im anschließenden Verfahrensschritt b), in dem die Keimbildung stattfindet, erfolgt eine kontinuierliche Erhöhung der Temperatur von $T_a$ auf eine Temperatur von höchstens 800 °C.

Im darauffolgenden Schritt c) wird die Temperatur auf eine Temperatur im Temperaturbereich $T_b$ erhöht. Das Verweilen im Temperaturbereich $T_b$ gemäß Schritt d) ist in diesem Ausführungsbeispiel mit einem kontinuierlichen Temperaturanstieg innerhalb dieses Temperaturbereichs verbunden.

Danach wird gemäß Schritt e) innerhalb von 5 bis 80 Minuten die Temperatur auf eine Temperatur im Temperaturbereich $T_c$ erhöht. Von der Temperatur $T_C$ wird im Schritt f) eine weitere Temperaturerhöhung auf eine Temperatur im Temperaturbereich $T_D$ durchgeführt, der sich von 950 °C bis 1250 °C erstreckt.

Wenn der Temperaturbereich $T_D$ erreicht ist, wird die Temperatur gemäß Verfahrensschritt g) über eine Verweilzeit tv konstant gehalten. Welche Temperatur $T_D$ und welche Verweilzeit tv vorzugsweise zu wählen sind, um die Eigenschaften der Glaskeramiken zu optimieren, wird im Zusammenhang mit den verschiedenen Ausführungsformen mit den bevorzugten Verfahrensschritten g11 bis g43 beschrieben.

Abschließend erfolgt im Verfahrensschritt h) eine rasche Abkühlung auf Raumtemperatur.

In der Tabelle 1 werden bevorzugte Glas-Zusammensetzungen angeben, die unterschiedlichen Keramisierungsverfahren 1 unterzogen wurden, die durch die Angaben g11) bis g13) bzw. g21) bis g23) in den Tabellen 2 bis 4 gekennzeichnet werden. Die Keramisierungsverfahren 2, die durch g31 bis g33 bzw. g41 bis g43 gekennzeichnet werden, bezeichnen besondere Ausführungsformen der Keramisierungsverfahren 1. Welche Alternative des jeweiligen Keramisierungsverfahrens 2 zum Einsatz kommt, ergibt sich aus den angegebenen $T_D$- und $t_v$- Werten.

Tabelle 1 zeigt die Zusammensetzungen der erfindungsgemäßen kristallisierbaren Ausgangsgläser in Gew.-% und die zugehörigen Glaseigenschaften, wie die Glasübergangstemperatur $T_g$ und die Keatit-Peak-Temperatur Tp. Dabei dient Glas 14 als Vergleichsbeispiel. Die Glaskeramiken weisen dieselben Zusammensetzungen wie die Ausgangsgläser auf.

Die Gläser wurden wie folgt geschmolzen:

a) Bereitstellen eines Gemengesatzes aus technischen Rohstoffen;
b) Schmelzen und Läutern des Gemengesatzes im Labormaßstab in einem Kieselglastiegel bei 1620 °C mit anschließender Haltezeit von 2 h, Rühren zur Homogenisierung bei 1600 °C für 1 h, Erhöhen der Temperatur auf 1640 °C und Halten für 3 h
c) Herstellung eines Gussblocks und
d) Abkühlen in einem Entspannungsofen auf Raumtemperatur, wobei unerwünschte Spannungen im Glas entfernt werden.

Tabelle 2 zeigt die optischen Eigenschaften der mittels eines geeigneten Keramisierungsverfahrens 1 (z. B. g11 oder g21) hergestellten erfindungsgemäßen Glaskeramiken und des Vergleichsbeispiels der Variante A mit Y ≤ 2 % (opake Glaskeramik) bei einer Dicke von ca. 4 mm und den mittleren Längenausdehnungskoeffizienten.

Die Daten zeigen, dass die Ausführungsform 1 gegenüber der Ausführungsform 2 bei gleicher oder ähnlicher Helligkeit Y, in Transmission gemessen, höhere Weißwerte L*, in Remission gemessen, bei gleichem Keramisierungsverfahren aufweisen. Dies wird insbesondere bei niedrigeren Maximaltemperaturen $T_D$ und kürzeren Verweilzeiten tv deutlich. Weiterhin ist ersichtlich, dass das Vergleichsbeispiel gegenüber den erfindungsgemäßen Glaskeramiken höhere Weißwerte L* bei gleicher oder ähnlicher Helligkeit Y im gleichen Keramisierungsverfahren aufweist, insbesondere bei hohen Maximaltemperaturen $T_D$ sowie niedrigeren Maximaltemperaturen $T_D$ und kürzeren Verweilzeiten tv. Es wird angenommen, dass dies mit dem $As_2O_3$ als Läutermittel zusammenhängt, das in dieser Glaskeramik als "Weißmacher" wirkt. Bei niedrigeren Maximaltemperaturen $T_D$ und langen Verweilzeiten jedoch zeigt die Ausführungsform 1 gegenüber der Ausführungsform 2 sowie gegenüber dem Vergleichsbeispiel höhere Weißwerte L* bei gleicher oder ähnlicher Helligkeit Y.

Die erfindungsgemäßen Glaskeramiken haben den Vorteil, dass sie im Vergleich zum Vergleichsbeispiel einen niedrigeren mittleren Längenausdehnungskoeffizienten $\overline{\alpha}$(20 °C; 700 °C) aufweisen. Dies trägt zur Thermoschockbeständigkeit der Glaskeramiken bei.

Weiterhin fällt auf, dass die beiden Farbwerte a* und b* sowie c* mit zunehmendem Weißwert L* innerhalb einer Ausführungsform betragsmäßig niedriger werden, d. h. a* geht gegen 0 und b* geht gegen 0 sowie c* geht gegen 0. Dabei bilden die $Nd_2O_3$-haltigen Beispiele innerhalb der Ausführungsform 2 für die Farbwerte b* sowie c* eine eigene Gruppe im Zusammenhang zwischen diesen Farbwerten und dem Weißwert L*. Zudem fällt besonders auf, dass die Ausführungsform 1 gegenüber der Ausführungsform 2 betragsmäßig niedrigere Farbwerte b* sowie niedrigere c*-Werte bei höheren Weißwerten L* erreicht.

Es wird deutlich, dass $Fe_2O_3$ den Farbwert a* in den positiven Bereich, also nach rot verschiebt. Dabei ist es bemerkenswert, dass dieses Glassystem hinsichtlich a* unempfindlich gegen einen erhöhten $Fe_2O_3$-Gehalt zu sein scheint, denn sogar im Vergleich zu den Vergleichsbeispielen 26 bis 28 zeigt sich ein betragsmäßig gleicher oder sogar kleinerer Farbwert a* bei gleichem Keramisierungsverfahren. Im Gegensatz zum Farbwert a* zeigt sich, dass je nach Keramisierung der Farbwert b* für die $Fe_2O_3$-reiche Glaskeramik verbessert oder auch verschlechtert werden kann. So kann festgestellt werden, dass für Zusammensetzungen mit höherem $Fe_2O_3$-Anteil niedrigere Maximaltemperaturen $T_D$ und kürzere Verweilzeiten tv zu bevorzugen sind, um sowohl a* als auch b* optimal einzustellen. Hierbei muss jedoch besonders auf den Weißwert L* geachtet werden, der bei niedrigeren Maximaltemperaturen $T_D$ und kürzeren Verweilzeiten tv sinkt, um einen guten Weißeindruck zu gewährleisten.

Die Zugabe von $Nd_2O_3$ führt bei den erfindungsgemäßen Gläsern im Unterschied zu den Vergleichsbeispielen, die ebenfalls $Nd_2O_3$ enthalten, zu einer betragsmäßigen Erhöhung der Farbwerte a* und b* bei gleichem Keramisierungsverfahren. Im Vergleich zu den anderen Beispielen der Ausführungsform 2 sowie im Vergleich zur Ausführungsform 1 führt die Zugabe von $Nd_2O_3$, unabhängig vom Keramisierungsverfahren, bei gleichem oder ähnlichem Farbwert a* zu einer deutlichen Reduzierung des Farbwertes b*.

Im Gegensatz dazu führt die Erhöhung des $SnO_2$-Anteils, insbesondere in der Ausführungsform 1 dazu, dass sich die Farbwerte a* und b* vom sogenannten Neutralpunkt mit a* = 0 und b* = 0 entfernen.

Insgesamt betrachtet, zeigt die Ausführungsform 1 gegenüber der Ausführungsform 2 und gegenüber den Vergleichsbeispielen bei niedrigen $SnO_2$-Gehalten und bei $Nd_2O_3$-Freiheit bessere Farbwerte a* und b* sowie c*.

Bei Betrachtung der Transmissionswerte bei 700 nm wird deutlich, dass insbesondere die Werte der Ausführungsform 2 gegenüber der Ausführungsform 1 sowie gegenüber den Vergleichsbeispielen höhere Werte bei gleichem Keramisierungsverfahren aufweisen. Die Transmission bei 700 nm ist proportional zur Helligkeit Y und gibt daher einen Anhaltspunkt für die Helligkeit Y. Der Vorteil dabei ist, dass dieser Wert direkt gemessen wird.

Besonders deutlich wird bei den hier gezeigten erfindungsgemäßen Glaskeramiken, dass die Infrarottransmission bei 1600 nm für beide Ausführungsformen bis auf wenige Ausnahmen im Vergleich zum Vergleichsbeispiel bei gleichem Keramisierungsverfahren deutlich höher ist.

Die Beispiele zeigen weiterhin deutlich, dass die Zugabe von MgO zu einer Erhöhung des Weißwertes L* bei vergleichbaren Farbwerten a* und b* führt. Dies liegt darin begründet, dass MgO hilft, die Keatit-Peak-Temperatur zu niedrigeren Werten zu verschieben (siehe Tabelle 1) und somit ein hoher Weißwert L* leichter erreicht wird. Zudem führt die Zugabe von MgO zu einer Erhöhung der Transmission bei 1600 nm.

Tabelle 3 zeigt die optischen Eigenschaften der mittels eines geeigneten Keramisierungsverfahrens (g12 oder g22) hergestellten erfindungsgemäßen Glaskeramiken und der Vergleichsbeispiele 64 und 65 der Variante B mit Y > 2 % bis 10 % (transluzente Glaskeramik ohne Anzeigefähigkeit) bei einer Dicke von ca. 4 mm und den mittleren Längenausdehnungskoeffizienten. Die Daten lassen erkennen, dass auch bei dieser Variante höhere Weißwerte L* bei gleicher oder ähnlicher Helligkeit Y für die Ausführungsform 1 gegenüber der Ausführungsform 2 im gleichen Keramisierungsverfahren erreicht werden. Gegenüber der Ausführungsform 1 erreichen auch hier die Vergleichsbeispiele höhere Weißwerte L* unter Verwendung des gleichen Keramisierungsverfahrens. Zudem erreicht die Ausführungsform 1 gegenüber der Ausführungsform 2 bereits sehr gute Weißwerte L* bei niedrigeren Maximaltemperaturen $T_D$, d. h. bereits bei 1120 °C statt 1145 °C.

Die Glaskeramiken dieser Variante sind im Allgemeinen nicht anzeigefähig. Dies wird durch den Quotienten (PvK-PiP)/PiP bei 630 nm, der größer als 39 ist, unterstützt. Die Beispiele 48 und 71 bilden eine Ausnahme und wurden mit "schwach" bewertet. Dieser durch Inaugenscheinnahme optische Eindruck wird durch den niedrigen Quotienten (PvK-PiP)/PiP bei 630 nm, nämlich unter 10, bestätigt.

Die erfindungsgemäßen Glaskeramiken haben den Vorteil, dass sie im Vergleich zu den Vergleichsbeispielen einen niedrigeren mittleren Längenausdehnungskoeffizienten aufweisen. Dies trägt zur Thermoschockbeständigkeit der Glaskeramiken bei.

Im Gegensatz zur Variante A zeigt sich bei der Variante B kein deutlicher Zusammenhang zwischen den Farbwerten a* und b* sowie c* und dem Weißwert L* innerhalb einer Ausführungsform, wie im Zusammenhang mit der Tabelle 2 beschrieben wird. Dagegen zeigt sich dieser Zusammenhang deutlich innerhalb einer Zusammensetzung. So nehmen die Farbwerte a* und b* sowie c* mit zunehmendem L* betragsmäßig ab. Weiterhin kann festgestellt werden, dass die Zugabe von $SnO_2$ in der Ausführungsform 1 zu einer deutlichen betragsmäßigen Erhöhung der Farbwerte a* und b* sowie c* bei gleichem oder ähnlichem Weißwert L* bei gleicher Keramisierung führt. Bei Zugabe von $Fe_2O_3$ verschiebt sich der Weißwert L* deutlich zu geringeren Werten bei gleichen oder ähnlichen Farbwerten a* und c*.

Wie schon bei der Variante A geschildert, zeigt sich auch bei Variante B, dass ein erhöhter $Fe_2O_3$-Gehalt in den erfindungsgemäßen Glaskeramiken gegenüber dem Vergleichsbeispiel 64 einen betragsmäßig niedrigeren Farbwert a* im gleichen Keramisierungsverfahren aufweist.

In der Variante B hat die Ausführungsform 1 gegenüber der Ausführungsform 2 unabhängig vom Keramisierungsverfahren, sogar schon bei niedrigeren Maximaltemperaturen $T_D$, den Vorteil, dass der b*-Wert bei gleichem oder ähnlichem a*-Wert deutlich erhöht werden kann. Die Farbwerte a* und b* sowie c* können im Vergleich zu den Vergleichsbeispielen bei gleichem Keramisierungsverfahren, insbesondere bei $T_D$ = 1100 °C, betragsmäßig verringert werden, indem in den erfindungsgemäßen Glaskeramiken die färbenden Komponenten $SnO_2$ und $Fe_2O_3$ reduziert werden. So werden gegenüber den Vergleichsbeispielen deutlich verbesserte (betragsmäßig niedrigere) Farbwerte a* und b* sowie c* erreicht. Anhand von Glas 12 wird deutlich, dass eine Erhöhung der Maximaltemperatur $T_D$ und/oder eine Verlängerung der Verweilzeit tv dazu führt, dass die Farbwerte a* und b* sowie c* betragsmäßig verringert werden können. Dies ist innerhalb dieser Zusammensetzung mit einem zunehmenden Weißwert L* bei Erhöhung der Maximaltemperatur $T_D$ und/oder bei einer Verlängerung der Verweilzeit tv zu erklären.

Bei gleichem Keramisierungsverfahren zeigen beide Ausführungsformen höhere Transmissionswerte bei 700 nm und/oder bei 1600 nm im Vergleich zu den Vergleichsbeispielen. Bei gleicher Zusammensetzung der Glaskeramik nehmen die Transmissionswerte bei 700 und 1600 nm mit sinkender Maximaltemperatur $T_D$ bei gleicher Verweilzeit $t_v$ zu. Anhand von Glas 12 konnte gezeigt werden, dass bei Verlängerung der Verweilzeit tv die Maximaltemperatur $T_D$ gesenkt werden kann, sodass die gleichen Transmissionswerte bei vergleichbarem Weißwert L* erzeugt werden.

Tabelle 4 zeigt die optischen Eigenschaften der mittels eines geeigneten Keramisierungsverfahrens (g13 oder g23) hergestellten erfindungsgemäßen Glaskeramiken und der Vergleichsbeispiele 95 und 96 der Variante C mit Y > 10 % bis 25 % (transluzente Glaskeramik mit Anzeigefähigkeit) bei einer Dicke von ca. 4 mm und den mittleren Längenausdehnungskoeffizienten. Wie bereits bei den anderen beiden Varianten A und B zeigt die Ausführungsform 1 gegenüber der Ausführungsform 2 höhere Weißwerte L* bei gleicher oder ähnlicher Helligkeit Y im gleichen Keramisierungsverfahren. Insbesondere wird hier deutlich, dass für die Ausführungsform 1 niedrigere Maximaltemperaturen $T_D$ ausreichen, um gegenüber der Ausführungsform 2 vergleichbare Weißwerte L* zu erreichen. Dabei werden aber höhere Helligkeiten Y erreicht, die eine bessere Anzeigefähigkeit für Rot begünstigen. Auch bei dieser Variante zeigt das Vergleichsbeispiel höhere Weißwerte L* gegenüber beiden Ausführungsformen unter Verwendung des gleichen Keramisierungsverfahrens. Gegenüber dem Vergleichsbeispiel jedoch zeigen manche Beispiele bei gleichem oder höherem Weißwert L* eine bessere (gute) Anzeigefähigkeit. Dies ist auf den kleineren Quotienten (PvK-PiP)/PiP bei 630 nm mit 2,2 bis 4,0 der Ausführungsformen gegenüber 7,3 von Vergleichsbeispiel 96 zu erklären. Gegenüber den Vergleichsbeispielen zeigen sowohl die Ausführungsform 1 als auch die Ausführungsform 2 bei einer sehr guten Anzeigefähigkeit höhere Weißwerte L* für höhere Maximaltemperaturen $T_D$ und/oder längere Verweilzeiten tv. Dies verbessert den Weißeindruck gegenüber den Vergleichsbeispielen, wohingegen das Vergleichsbeispiel bei höheren Maximaltemperaturen $T_D$ zwar einen höheren Weißwert L*, aber eine nur noch schwache Anzeigefähigkeit aufweist.

Höhere Helligkeiten Y, aber niedrigere Weißwerte L* begünstigen eine sehr gute Anzeigefähigkeit. Auch in dieser Anzeigefähigkeitskategorie zeigen manche Beispiele höhere Weißwerte L* im Vergleich zu den Vergleichsbeispielen, die einen verbesserten Weißeindruck begünstigen.

Auch bei der Variante C gibt es innerhalb einer Glaszusammensetzung einen deutlichen Zusammenhang zwischen den Farbwerten a* und b* sowie c* und dem Weißwert L*. Je höher dieser ist, also je höher die Maximaltemperatur $T_D$ bei gleichen Verweilzeiten tv oder je länger die Verweilzeit tv bei niedrigeren Maximaltemperaturen $T_D$ ist, desto betragsmäßig geringer sind die Farbwerte a* und b* sowie c*.

Wie bei den anderen beiden Varianten A und B wird auch hier deutlich, dass eine Reduzierung des $SnO_2$-Gehaltes zu einer Verbesserung (also betragsmäßigen Erniedrigung) der Farbwerte a* und b* sowie c* bei gleichem Keramisierungsverfahren führt.

Gegenüber den Vergleichsbeispielen zeigt die Ausführungsform 1 bei gleichem Keramisierungsverfahren und bei Reduzierung des $SnO_2$-Gehaltes deutlich bessere Farbwerte a* und b* sowie obwohl der Weißwert L* im Vergleich zu den Vergleichsbeispielen bei gleichem Keramisierungsverfahren deutlich geringer ist. Dies bedeutet, dass eine weitere Verbesserung der Farbwerte a* und b* sowie c* bei einer deutlichen Erhöhung des Weißwertes L* mit Erhöhung der Maximaltemperatur $T_D$ oder Verlängerung der Verweilzeit tv bei gleicher Maximaltemperatur $T_D$ möglich ist. Diese Beispiele verdeutlichen, dass mit einer geeigneten Zusammensetzung keine Beeinträchtigung der Farbwerte a* und b* sowie c* durch den Einsatz von $SnO_2$ als Läutermittel entsteht.

Ähnliche oder sogar bessere Farbwerte a* und b* sowie c* im Vergleich zu Ausführungsform 1 können auch mit der Ausführungsform 2 erreicht werden. Dazu werden jedoch höhere Maximaltemperaturen $T_D$ und/oder längere Verweilzeiten tv benötigt.

Im Unterschied zu den Vergleichsbeispielen wird bei gleichem Keramisierungsverfahren eine vergleichbare oder sogar bessere Anzeigefähigkeit bei der Ausführungsform 1 erreicht.

Im Vergleich zur Ausführungsform 1 wird mit der Ausführungsform 2 sogar bei höheren Maximaltemperaturen $T_D$ eine gute Anzeigefähigkeit erreicht. Jedoch können mit der Ausführungsform 1 gegenüber der Ausführungsform 2 bereits bei niedrigeren Maximaltemperaturen $T_D$ und/oder längeren Verweilzeiten tv vergleichbare oder sogar höhere Weißwerte L* bei gleich guter Anzeigefähigkeit erreicht werden, wodurch der Weißeindruck der Ausführungsform 1 gegenüber der Ausführungsform 2 energieeffizienter eingestellt werden kann.

Weiterhin zeigt die Variante C, wie die auch anderen beiden Varianten A und B, innerhalb einer Zusammensetzung eine zunehmende Transmission bei 700 und/oder 1600 nm bei niedrigeren Maximaltemperaturen $T_D$ und gleicher Verweilzeit tv. Bei gleichem Keramisierungsverfahren weisen die Vergleichsbeispiele im Vergleich zu Ausführungsform 1 eine höhere Transmission bei 700 und/oder 1600 nm auf. Jedoch zeigen sowohl Beispiele der Ausführungsform 1 als auch die Ausführungsform 2 bei höheren Maximaltemperaturen $T_D$ und/oder Verweilzeiten tv eine erhöhte Transmission bei 700 und/oder 1600 nm gegenüber den Vergleichsbeispielen.

Die Beispiele zeigen zudem, dass die Entfernung von MgO aus der Zusammensetzung in der Variante C zu einer deutlich farbneutraleren Glaskeramik (betragsmäßig reduzierte Farbwerte a*, b* und c*) bei vergleichbarem Weißwert L* führt. Wie schon die Beispiele der Variante A zeigen, führt die Zugabe von MgO auch in der Variante C zu einer Erhöhung der Transmission bei 1600 nm, aber auch bei 630 sowie 700 nm.

Die Erhöhung von $SnO_2$ für eine bessere Läuterung der Glasschmelze führt im Vergleich zu einem geringeren $SnO_2$-Gehalt in einer geeigneten Zusammensetzung zu vergleichbaren Farbwerten a*, b* und c* bei vergleichbarem Weißwert L*.

Tabelle 5 zeigt, dass eine Temperung der erfindungsgemäßen Glaskeramiken einer Dicke von ca. 4 mm der Varianten A (Ausführungsform 1) und B (Ausführungsform 2) bei 700 °C über eine Temperzeit von 10 h keine oder eine vernachlässigbare Verschiebung in der Helligkeit Y, im Weißwert L* sowie in den Farbwerten a* und b* verursacht. Demnach entsteht im Vergleich zum Vergleichsbeispiel durch den Einsatz von $SnO_2$ als Läutermittel kein Nachteil.

## Tabelle 1: Zusammensetzung

| Glas | | 1 | 2 | 3 | 4 | 5 | 6 |
|---|---|---|---|---|---|---|---|
| $Li_2O$ | Gew.-% | 3,69 | 3,70 | 3,74 | 3,72 | 3,70 | 3,68 |
| $Na_2O$ | Gew.-% | 0,14 | 0,14 | 0,14 | 0,14 | 0,14 | 0,14 |
| $K_2O$ | Gew.-% | 0,33 | 0,33 | 0,33 | 0,33 | 0,33 | 0,33 |
| MgO | Gew.-% | 0,32 | 0,32 | 0,32 | 0,32 | 0,50 | 0,32 |
| CaO | Gew.-% | 0,31 | 0,31 | 0,31 | 0,31 | 0,31 | 0,31 |
| SrO | Gew.-% | 0,051 | 0,062 | 0,045 | 0,051 | 0,050 | 0,050 |
| BaO | Gew.-% | 1,00 | 0,99 | 0,99 | 0,99 | 0,98 | 0,99 |
| ZnO | Gew.-% | 1,86 | 1,84 | 1,84 | 1,87 | 1,85 | 2,07 |
| $Al_2O_3$ | Gew.-% | 21,40 | 21,42 | 21,34 | 20,41 | 20,39 | 21,41 |
| $SiO_2$ | Gew.-% | 66,50 | 66,40 | 66,50 | 67,50 | 67,60 | 66,50 |
| $TiO_2$ | Gew.-% | 2,43 | 2,43 | 2,42 | 2,43 | 2,21 | 2,22 |
| $ZrO_2$ | Gew.-% | 1,85 | 1,85 | 1,84 | 1,85 | 1,84 | 1,86 |
| $P_2O_5$ | Gew.-% | 0,038 | 0,034 | 0,031 | 0,032 | 0,030 | 0,031 |
| $SnO_2$ | Gew.-% | 0,07 | 0,07 | 0,07 | 0,07 | 0,09 | 0,07 |
| $Fe_2O_3$ | Gew.-% | 0,014 | 0,05 | 0,014 | 0,014 | 0,014 | 0,014 |
| $Nd_2O_3$ | Gew.-% | | | 0,056 | | | |
| $As_2O_3$ | Gew.-% | | | | | | |
| Σ | Gew.-% | 100,00 | 99,95 | 99,99 | 100,04 | 100,03 | 100,00 |
| MgO x $SnO_2$ | Gew.-%² | 0,02 | 0,02 | 0,02 | 0,02 | 0,04 | 0,02 |
| $TiO_2$ / $SnO_2$ | | 34,23 | 33,75 | 34,08 | 33,75 | 25,11 | 31,27 |
| $TiO_2$ + $ZrO_2$ + $SnO_2$ | Gew.-% | 4,35 | 4,35 | 4,33 | 4,35 | 4,14 | 4,15 |
| $Na_2O$ + $K_2O$ | Gew.-% | 0,47 | 0,48 | 0,47 | 0,47 | 0,47 | 0,47 |
| $Na_2O$ / $K_2O$ | | 0,42 | 0,43 | 0,42 | 0,42 | 0,42 | 0,42 |
| SrO + BaO | Gew.-% | 1,05 | 1,05 | 1,04 | 1,04 | 1,03 | 1,04 |
| $SiO_2$ / $Al_2O_3$ | | 3,11 | 3,10 | 3,12 | 3,31 | 3,32 | 3,11 |
| $Al_2O_3$ / ($Li_2O$ + MgO + ZnO) | | 3,65 | 3,66 | 3,62 | 3,45 | 3,37 | 3,53 |
| **Eigenschaften Glas** | | | | | | | |
| $T_g$ | °C | 687 | 686 | 680 | 687 | 686 | 686 |
| Keatit-Peak-Temperatur | °C | 1043 | 1044 | 1044 | 1030 | 1032 | 1048 |

**Fortsetzung Tabelle 1: Zusammensetzung**

| Glas | | 7 | 8 | 9 | 10 | 11 | 12 |
|---|---|---|---|---|---|---|---|
| $Li_2O$ | Gew.-% | 3,71 | 3,75 | 3,73 | 3,72 | 3,72 | 4,22 |
| $Na_2O$ | Gew.-% | 0,14 | 0,13 | 0,14 | 0,14 | 0,13 | 0,22 |
| $K_2O$ | Gew.-% | 0,33 | 0,33 | 0,33 | 0,33 | 0,33 | |
| MgO | Gew.-% | 0,31 | 0,31 | 0,49 | 0,31 | 0,49 | 0,40 |
| CaO | Gew.-% | 0,31 | 0,31 | 0,31 | 0,31 | 0,31 | 0,43 |
| SrO | Gew.-% | 0,051 | 0,050 | 0,050 | 0,050 | 0,050 | 0,010 |
| BaO | Gew.-% | 0,98 | 0,99 | 0,99 | 0,99 | 0,99 | 1,02 |
| ZnO | Gew.-% | 2,26 | 2,16 | 1,87 | 2,05 | 2,05 | 2,71 |
| $Al_2O_3$ | Gew.-% | 21,34 | 21,42 | 21,41 | 20,40 | 20,40 | 22,48 |
| $SiO_2$ | Gew.-% | 66,60 | 66,60 | 67,00 | 67,50 | 67,50 | 64,60 |
| $TiO_2$ | Gew.-% | 2,02 | 1,92 | 1,92 | 2,23 | 2,01 | 1,92 |
| $ZrO_2$ | Gew.-% | 1,85 | 1,84 | 1,65 | 1,86 | 1,86 | 1,84 |
| $P_2O_5$ | Gew.-% | 0,030 | 0,029 | 0,029 | 0,031 | 0,028 | 0,028 |
| $SnO_2$ | Gew.-% | 0,07 | 0,07 | 0,07 | 0,07 | 0,07 | 0,09 |
| $Fe_2O_3$ | Gew.-% | 0,014 | 0,014 | 0,014 | 0,014 | 0,014 | 0,015 |
| $Nd_2O_3$ | Gew.-% | | | | | | |
| $As_2O_3$ | Gew.-% | | | | | | |
| Σ | Gew.-% | 100,02 | 99,93 | 100,00 | 100,00 | 99,95 | 99,98 |
| MgO x $SnO_2$ | Gew.-%² | 0,02 | 0,02 | 0,03 | 0,02 | 0,03 | 0,04 |
| $TiO_2$ / $SnO_2$ | | 29,28 | 27,47 | 28,24 | 31,80 | 28,32 | 20,68 |
| $TiO_2$ + $ZrO_2$ + $SnO_2$ | Gew.-% | 3,94 | 3,83 | 3,64 | 4,16 | 3,94 | 3,86 |
| $Na_2O$ + $K_2O$ | Gew.-% | 0,47 | 0,46 | 0,47 | 0,47 | 0,46 | 0,22 |
| $Na_2O$ / $K_2O$ | | 0,42 | 0,40 | 0,41 | 0,43 | 0,39 | - |
| SrO + BaO | Gew.-% | 1,03 | 1,04 | 1,04 | 1,04 | 1,04 | 1,03 |
| $SiO_2$ / $Al_2O_3$ | | 3,12 | 3,11 | 3,13 | 3,31 | 3,31 | 2,87 |
| $Al_2O_3$ / ($Li_2O$ + MgO + ZnO) | | 3,40 | 3,44 | 3,51 | 3,36 | 3,26 | 3,07 |
| **Eigenschaften Glas** | | | | | | | |
| $T_g$ | °C | 685 | 690 | 689 | 684 | 685 | 679 |
| Keatit-Peak-Temperatur | °C | 1041 | 1040 | 1037 | 1031 | 1036 | 996 |

**Fortsetzung Tabelle 1: Zusammensetzung**

| Glas | | 13 | 14 | 15 | 16 | 17 | 18 |
|---|---|---|---|---|---|---|---|
| $Li_2O$ | Gew.-% | 3,88 | 3,71 | 3,91 | 3,64 | 3,81 | 3,66 |
| $Na_2O$ | Gew.-% | 0,12 | 0,15 | 0,15 | 0,15 | 0,14 | 0,17 |
| $K_2O$ | Gew.-% | 0,20 | 0,20 | 0,33 | 0,32 | 0,42 | 0,31 |
| MgO | Gew.-% | 0,40 | 1,07 | 0,32 | 0,32 | 0,33 | 0,29 |
| CaO | Gew.-% | 0,33 | 0,02 | 0,31 | 0,25 | 0,25 | 0,41 |
| SrO | Gew.-% | 0,009 | 0,008 | 0,050 | 0,500 | 0,300 | 0,055 |
| BaO | Gew.-% | 1,03 | 0,83 | 0,99 | 0,55 | 1,01 | 0,95 |
| ZnO | Gew.-% | 2,14 | 1,61 | 2,06 | 1,94 | 2,04 | 2,04 |
| $Al_2O_3$ | Gew.-% | 21,55 | 20,13 | 20,47 | 21,70 | 21,66 | 21,73 |
| $SiO_2$ | Gew.-% | 66,40 | 67,10 | 67,50 | 66,40 | 66,10 | 66,30 |
| $TiO_2$ | Gew.-% | 1,94 | 2,38 | 1,92 | 2,20 | 1,92 | 2,07 |
| $ZrO_2$ | Gew.-% | 1,86 | 1,80 | 1,85 | 1,85 | 1,85 | 1,84 |
| $P_2O_5$ | Gew.-% | 0,029 | 0,029 | 0,029 | 0,030 | 0,028 | 0,029 |
| $SnO_2$ | Gew.-% | 0,09 | | 0,07 | 0,07 | 0,07 | 0,07 |
| $Fe_2O_3$ | Gew.-% | 0,015 | 0,018 | 0,014 | 0,015 | 0,015 | 0,013 |
| $Nd_2O_3$ | Gew.-% | | 0,060 | | 0,047 | 0,059 | 0,048 |
| $As_2O_3$ | Gew.-% | | 0,820 | | | | |
| Σ | Gew.-% | 99,99 | 99,94 | 99,97 | 99,99 | 100,00 | 99,98 |
| MgO x $SnO_2$ | Gew.-%² | 0,04 | 0,00 | 0,02 | 0,02 | 0,02 | 0,02 |
| $TiO_2$ / $SnO_2$ | | 21,56 | - | 25,89 | 31,94 | 27,04 | 30,90 |
| $TiO_2$ + $ZrO_2$ + $SnO_2$ | Gew.-% | 3,89 | 4,18 | 3,84 | 4,12 | 3,84 | 3,98 |
| $Na_2O$ + $K_2O$ | Gew.-% | 0,32 | 0,35 | 0,48 | 0,48 | 0,57 | 0,48 |
| $Na_2O$ / $K_2O$ | | 0,59 | 0,76 | 0,45 | 0,48 | 0,34 | 0,53 |
| SrO + BaO | Gew.-% | 1,04 | 0,84 | 1,04 | 1,05 | 1,31 | 1,01 |
| $SiO_2$ / $Al_2O_3$ | | 3,08 | 3,33 | 3,30 | 3,06 | 3,05 | 3,05 |
| $Al_2O_3$ / ($Li_2O$ + MgO + ZnO) | | 3,36 | 3,15 | 3,26 | 3,68 | 3,51 | 3,63 |
| **Eigenschaften Glas** | | | | | | | |
| $T_g$ | °C | 687 | 682 | 684 | 689 | 684 | 688 |
| Keatit-Peak-Temperatur | °C | 1030 | 1021 | 1024 | 1052 | 1029 | 1041 |

**Fortsetzung Tabelle 1: Zusammensetzung**

| Glas | | 19 | 20 | 21 | 22 |
|---|---|---|---|---|---|
| $Li_2O$ | Gew.-% | 3,98 | 4,00 | 4,12 | 3,82 |
| $Na_2O$ | Gew.-% | 0,08 | 0,08 | 0,15 | 0,16 |
| $K_2O$ | Gew.-% | 0,42 | 0,52 | 0,32 | 0,33 |
| MgO | Gew.-% | 0,34 | 0,39 | 0,34 | 0,43 |
| CaO | Gew.-% | 0,37 | 0,37 | 0,37 | 0,37 |
| SrO | Gew.-% | 0,050 | 0,150 | 0,053 | 0,051 |
| BaO | Gew.-% | 1,10 | 1,09 | 1,10 | 1,19 |
| ZnO | Gew.-% | 2,18 | 1,99 | 2,12 | 2,16 |
| $Al_2O_3$ | Gew.-% | 20,00 | 20,44 | 20,52 | 20,51 |
| $SiO_2$ | Gew.-% | 67,40 | 67,00 | 66,90 | 67,00 |
| $TiO_2$ | Gew.-% | 1,93 | 1,92 | 1,90 | 1,94 |
| $ZrO_2$ | Gew.-% | 1,91 | 1,91 | 1,86 | 1,91 |
| $P_2O_5$ | Gew.-% | 0,028 | 0,029 | 0,029 | 0,028 |
| $SnO_2$ | Gew.-% | 0,22 | 0,07 | 0,17 | 0,12 |
| $Fe_2O_3$ | Gew.-% | 0,014 | 0,014 | 0,014 | 0,014 |
| $Nd_2O_3$ | Gew.-% | | | | |
| $As_2O_3$ | Gew.-% | | | | |
| $\Sigma$ | Gew.-% | 100,01 | 99,97 | 99,97 | 100,02 |
| MgO x $SnO_2$ | Gew.-%² | 0,08 | 0,03 | 0,06 | 0,05 |
| $TiO_2$ / $SnO_2$ | | 8,68 | 25,95 | 10,94 | 15,74 |
| $TiO_2$ + $ZrO_2$ + $SnO_2$ | Gew.-% | 4,06 | 3,90 | 3,94 | 3,97 |
| $Na_2O$ + $K_2O$ | Gew.-% | 0,49 | 0,60 | 0,48 | 0,48 |
| $Na_2O$ / $K_2O$ | | 0,19 | 0,15 | 0,47 | 0,48 |
| SrO + BaO | Gew.-% | 1,15 | 1,24 | 1,15 | 1,24 |
| $SiO_2$ / $Al_2O_3$ | | 3,37 | 3,28 | 3,26 | 3,27 |
| $Al_2O_3$ / ($Li_2O$ + MgO + ZnO) | | 3,08 | 3,21 | 3,12 | 3,20 |
| **Eigenschaften Glas** | | | | | |
| $T_g$ | °C | 676 | 679 | 676 | 682 |
| Keatit-Peak-Temperatur | °C | 1002 | 1008 | 995 | 1019 |

**Fortsetzung: Tabelle 1: Zusammensetzung**

| Glas | | 23 | 24 | 25 | 26 |
|---|---|---|---|---|---|
| $Li_2O$ | Gew.-% | 4,04 | 4,15 | 3,70 | 4,18 |
| $Na_2O$ | Gew.-% | 0,13 | 0,14 | 0,14 | 0,15 |
| $K_2O$ | Gew.-% | 0,33 | 0,32 | 0,33 | 0,33 |
| MgO | Gew.-% | 0,32 | 0,33 | 0,32 | 0,33 |
| CaO | Gew.-% | 0,31 | 0,37 | 0,31 | 0,37 |
| SrO | Gew.-% | 0,052 | 0,051 | 0,052 | 0,052 |
| BaO | Gew.-% | 0,99 | 1,10 | 0,99 | 1,10 |
| ZnO | Gew.-% | 1,91 | 2,05 | 1,85 | 2,11 |
| $Al_2O_3$ | Gew.-% | 21,49 | 21,54 | 20,29 | 20,39 |
| $SiO_2$ | Gew.-% | 66,40 | 66,10 | 67,60 | 67,10 |
| $TiO_2$ | Gew.-% | 2,03 | 1,91 | 2,43 | 1,90 |
| $ZrO_2$ | Gew.-% | 1,85 | 1,86 | 1,85 | 1,85 |
| $P_2O_5$ | Gew.-% | 0,028 | 0,027 | 0,030 | 0,027 |
| $SnO_2$ | Gew.-% | 0,07 | 0,07 | 0,08 | 0,07 |
| $Fe_2O_3$ | Gew.-% | 0,015 | 0,015 | 0,014 | 0,015 |
| $Nd_2O_3$ | Gew.-% | | | 0,021 | |
| $As_2O_3$ | Gew.-% | | | | |
| Σ | Gew.-% | 99,96 | 100,04 | 100,01 | 99,97 |
| MgO x $SnO_2$ | Gew.-% | 0,02 | 0,02 | 0,03 | 0,02 |
| $TiO_2$ / $SnO_2$ | | 29,03 | 28,49 | 31,15 | 26,82 |
| $TiO_2$ + $ZrO_2$ + $SnO_2$ | Gew.-% | 3,95 | 3,84 | 4,36 | 3,83 |
| $Na_2O$ + $K_2O$ | Gew.-% | 0,46 | 0,47 | 0,47 | 0,47 |
| $Na_2O$ / $K_2O$ | | 0,40 | 0,44 | 0,41 | 0,45 |
| SrO + BaO | Gew.-% | 1,04 | 1,15 | 1,04 | 1,15 |
| $SiO_2$ / $Al_2O_3$ | | 3,09 | 3,07 | 3,33 | 3,29 |
| $Al_2O_3$ / ($Li_2O$ + MgO + ZnO) | | 3,43 | 3,30 | 3,46 | 3,08 |
| **Eigenschaften Glas** | | | | | |
| $T_g$ | °C | 684 | 676 | | |
| KMK-Peak-Temperatur | °C | 1022 | 1012 | > 1005 | ≤ 1005 |

## Fortsetzung: Tabelle 1: Zusammensetzung

| Glas | | 27 | 28 | 29 | 30 | 31 |
|---|---|---|---|---|---|---|
| $Li_2O$ | Gew.-% | 4,15 | 4,17 | 4,18 | 4,01 | 4,15 |
| $Na_2O$ | Gew.-% | 0,24 | 0,14 | 0,14 | 0,12 | 0,13 |
| $K_2O$ | Gew.-% | 0,32 | 0,32 | 0,33 | 0,33 | 0,32 |
| $MgO$ | Gew.-% | 0,33 | | | 0,32 | 0,33 |
| $CaO$ | Gew.-% | 0,37 | 0,36 | 0,36 | 0,31 | 0,36 |
| $SrO$ | Gew.-% | 0,050 | 0,067 | 0,237 | 0,050 | 0,051 |
| $BaO$ | Gew.-% | 1,09 | 1,38 | 1,21 | 1,00 | 1,11 |
| $ZnO$ | Gew.-% | 2,13 | 2,14 | 2,16 | 2,03 | 2,14 |
| $Al_2O_3$ | Gew.-% | 20,36 | 20,44 | 20,49 | 20,39 | 20,52 |
| $SiO_2$ | Gew.-% | 67,00 | 67,00 | 66,90 | 67,50 | 66,90 |
| $TiO_2$ | Gew.-% | 1,91 | 1,90 | 1,91 | 1,93 | 1,90 |
| $ZrO_2$ | Gew.-% | 1,85 | 1,86 | 1,86 | 1,87 | 1,86 |
| $P_2O_5$ | Gew.-% | 0,027 | 0,027 | 0,027 | 0,030 | 0,027 |
| $SnO_2$ | Gew.-% | 0,17 | 0,17 | 0,17 | 0,07 | 0,17 |
| $Fe_2O_3$ | Gew.-% | 0,014 | 0,014 | 0,014 | 0,014 | 0,014 |
| $Nd_2O_3$ | Gew.-% | | 0,023 | | 0,015 | 0,023 |
| $As_2O_3$ | Gew.-% | | | | | |
| Σ | Gew.-% | 100,02 | 100,01 | 99,98 | 99,99 | 100,01 |
| $MgO$ x $SnO_2$ | Gew.-% | 0,06 | 0,00 | 0,00 | 0,02 | 0,06 |
| $TiO_2$ / $SnO_2$ | | 11,16 | 11,18 | 11,10 | 27,13 | 11,25 |
| $TiO_2$ + $ZrO_2$ + $SnO_2$ | Gew.-% | 3,93 | 3,93 | 3,94 | 3,87 | 3,93 |
| $Na_2O$ + $K_2O$ | Gew.-% | 0,57 | 0,46 | 0,46 | 0,45 | 0,45 |
| $Na_2O$ / $K_2O$ | | 0,76 | 0,43 | 0,43 | 0,38 | 0,40 |
| $SrO$ + $BaO$ | Gew.-% | 1,14 | 1,45 | 1,45 | 1,05 | 1,16 |
| $SiO_2$ / $Al_2O_3$ | | 3,29 | 3,28 | 3,27 | 3,31 | 3,26 |
| $Al_2O_3$ / ($Li_2O$ + $MgO$ + $ZnO$) | | 3,08 | 3,24 | 3,23 | 3,20 | 3,10 |
| **Eigen-schaften Glas** | | | | | | |
| $T_g$ | °C | | | | | |
| KMK-Peak-Temperatur | °C | ≤ 1005 | > 1005 | > 1005 | > 1005 | ≤ 1005 |

## Fortsetzung: Tabelle 1: Zusammensetzung

| Glas | | 32 | 33 | 34 | 35 | 36 | 37 |
|---|---|---|---|---|---|---|---|
| $Li_2O$ | Gew.-% | 4,17 | 3,84 | 3,83 | 3,79 | 3,81 | 3,65 |
| $Na_2O$ | Gew.-% | 0,13 | 0,26 | 0,25 | 0,06 | 0,26 | 0,25 |
| $K_2O$ | Gew.-% | 0,32 | 0,23 | 0,24 | 0,23 | 0,24 | 0,24 |
| MgO | Gew.-% | 0,34 | 0,32 | 0,33 | 0,32 | 0,32 | 0,32 |
| CaO | Gew.-% | 0,37 | 0,31 | 0,31 | 0,31 | 0,31 | 0,31 |
| SrO | Gew.-% | 0,230 | 0,251 | 0,252 | 0,251 | 0,250 | 0,247 |
| BaO | Gew.-% | 0,94 | 0,80 | 0,80 | 0,80 | 0,80 | 0,80 |
| ZnO | Gew.-% | 2,16 | 1,87 | 1,87 | 1,84 | 1,87 | 1,84 |
| $Al_2O_3$ | Gew.-% | 20,49 | 20,45 | 20,53 | 20,31 | 20,38 | 20,47 |
| $SiO_2$ | Gew.-% | 66,80 | 67,30 | 67,10 | 67,20 | 67,30 | 67,40 |
| $TiO_2$ | Gew.-% | 1,91 | 2,41 | 2,40 | 2,41 | 2,42 | 2,43 |
| $ZrO_2$ | Gew.-% | 1,86 | 1,86 | 1,86 | 2,24 | 1,86 | 1,86 |
| $P_2O_5$ | Gew.-% | 0,028 | 0,029 | 0,029 | 0,029 | 0,031 | 0,030 |
| $SnO_2$ | Gew.-% | 0,17 | 0,07 | 0,12 | 0,07 | 0,11 | 0,07 |
| $Fe_2O_3$ | Gew.-% | 0,014 | 0,015 | 0,014 | 0,014 | 0,014 | 0,014 |
| $Nd_2O_3$ | Gew.-% | | 0,022 | 0,025 | 0,053 | 0,050 | 0,026 |
| $As_2O_3$ | Gew.-% | | | | | | |
| Σ | Gew.-% | 99,93 | 100,03 | 99,95 | 99,92 | 100,02 | 99,94 |
| MgO x $SnO_2$ | Gew.-% | 0,06 | 0,02 | 0,04 | 0,02 | 0,04 | 0,02 |
| $TiO_2$ / $SnO_2$ | | 11,08 | 37,08 | 20,34 | 35,44 | - | 35,74 |
| $TiO_2$ + $ZrO_2$ + $SnO_2$ | Gew.-% | 3,94 | 4,34 | 4,38 | 4,72 | 4,39 | 4,36 |
| $Na_2O$ + $K_2O$ | Gew.-% | 0,45 | 0,49 | 0,49 | 0,29 | 0,49 | 0,49 |
| $Na_2O$ / $K_2O$ | | 0,40 | 1,09 | - | 0,24 | 1,07 | 1,06 |
| SrO + BaO | Gew.-% | 1,17 | 1,05 | 1,05 | 1,05 | 1,05 | 1,05 |
| $SiO_2$ / $Al_2O_3$ | | 3,26 | 3,29 | 3,27 | 3,31 | 3,30 | 3,29 |
| $Al_2O_3$ / ($Li_2O$ + MgO + ZnO) | | 3,07 | 3,39 | 3,41 | 3,41 | 3,40 | 3,53 |
| **Eigen-schaften Glas** | | | | | | | |
| $T_g$ | °C | | | 682 | | | |
| KMK-Peak-Temperatur | °C | ≤ 1005 | 1029 | 1027 | > 1005 | > 1005 | 1051 |

## Fortsetzung: Tabelle 1: Zusammensetzung

| Glas | | 38 | 39 | 40 | 41 | 42 |
|---|---|---|---|---|---|---|
| $Li_2O$ | Gew.-% | 3,66 | 3,81 | 3,85 | 3,85 | 3,79 |
| $Na_2O$ | Gew.-% | 0,24 | 0,25 | 0,25 | 0,25 | 0,24 |
| $K_2O$ | Gew.-% | 0,24 | 0,24 | 0,23 | 0,24 | 0,23 |
| MgO | Gew.-% | 0,32 | 0,32 | 0,32 | 0,32 | 0,32 |
| CaO | Gew.-% | 0,31 | 0,31 | 0,31 | 0,30 | 0,31 |
| SrO | Gew.-% | 0,252 | 0,252 | 0,250 | 0,251 | 0,248 |
| BaO | Gew.-% | 0,80 | 0,81 | 0,81 | 0,80 | 0,80 |
| ZnO | Gew.-% | 1,84 | 2,24 | 2,24 | 2,22 | 2,23 |
| $Al_2O_3$ | Gew.-% | 20,43 | 21,49 | 21,41 | 21,45 | 21,40 |
| $SiO_2$ | Gew.-% | 67,40 | 66,30 | 66,20 | 66,20 | 66,30 |
| $TiO_2$ | Gew.-% | 2,43 | 2,02 | 2,02 | 2,04 | 2,01 |
| $ZrO_2$ | Gew.-% | 1,86 | 1,85 | 1,85 | 1,85 | 1,86 |
| $P_2O_5$ | Gew.-% | 0,029 | 0,026 | 0,027 | 0,027 | 0,027 |
| $SnO_2$ | Gew.-% | 0,09 | 0,07 | 0,12 | 0,07 | 0,12 |
| $Fe_2O_3$ | Gew.-% | 0,014 | 0,014 | 0,014 | 0,014 | 0,014 |
| $Nd_2O_3$ | Gew.-% | 0,024 | 0,025 | 0,026 | 0,054 | 0,052 |
| $As_2O_3$ | Gew.-% | | | | | |
| Σ | Gew.-% | 99,94 | 100,02 | 99,93 | 99,92 | 99,95 |
| MgO x $SnO_2$ | Gew.-% | 0,03 | 0,02 | 0,04 | 0,02 | 0,04 |
| $TiO_2$ / $SnO_2$ | | 26,70 | 28,84 | 16,97 | 30,85 | 17,07 |
| $TiO_2$ + $ZrO_2$ + $SnO_2$ | Gew.-% | 4,38 | 3,94 | 3,99 | 3,95 | 3,99 |
| $Na_2O$ + $K_2O$ | Gew.-% | 0,48 | 0,48 | 0,48 | 0,48 | 0,47 |
| $Na_2O$ / $K_2O$ | | 1,03 | 1,03 | 1,06 | 1,06 | 1,01 |
| SrO + BaO | Gew.-% | 1,05 | 1,06 | 1,06 | 1,05 | 1,05 |
| $SiO_2$ / $Al_2O_3$ | | 3,30 | 3,09 | 3,09 | 3,09 | 3,10 |
| $Al_2O_3$ / ($Li_2O$ + MgO + ZnO) | | 3,51 | 3,37 | 3,34 | 3,36 | 3,38 |
| **Eigen-schaften Glas** | | | | | | |
| $T_g$ | °C | 691 | | 687 | | |
| KMK-Peak-Temperatur | °C | 1049 | 1032 | 1031 | > 1005 | > 1005 |

## Fortsetzung: Tabelle 1: Zusammensetzung

| Glas | | 43 | 44 | 45 | 46 | 47 |
|---|---|---|---|---|---|---|
| $Li_2O$ | Gew.-% | 3,84 | 3,87 | 3,84 | 3,85 | 3,73 |
| $Na_2O$ | Gew.-% | 0,24 | 0,25 | 0,25 | 0,24 | 0,24 |
| $K_2O$ | Gew.-% | 0,32 | 0,32 | 0,32 | 0,31 | 0,23 |
| MgO | Gew.-% | 0,33 | 0,33 | 0,33 | 0,33 | 0,31 |
| CaO | Gew.-% | 0,25 | 0,25 | 0,24 | 0,25 | 0,31 |
| SrO | Gew.-% | 0,290 | 0,293 | 0,291 | 0,291 | 0,252 |
| BaO | Gew.-% | 1,02 | 1,02 | 1,02 | 1,03 | 0,80 |
| ZnO | Gew.-% | 2,03 | 2,05 | 2,00 | 2,01 | 1,84 |
| $Al_2O_3$ | Gew.-% | 21,68 | 21,68 | 21,66 | 21,66 | 20,49 |
| $SiO_2$ | Gew.-% | 66,10 | 65,90 | 66,10 | 66,00 | 67,30 |
| $TiO_2$ | Gew.-% | 1,91 | 1,92 | 1,91 | 1,92 | 2,41 |
| $ZrO_2$ | Gew.-% | 1,85 | 1,86 | 1,85 | 1,85 | 1,86 |
| $P_2O_5$ | Gew.-% | 0,027 | 0,027 | 0,027 | 0,026 | 0,029 |
| $SnO_2$ | Gew.-% | 0,07 | 0,12 | 0,07 | 0,12 | 0,07 |
| $Fe_2O_3$ | Gew.-% | 0,015 | 0,015 | 0,015 | 0,015 | 0,014 |
| $Nd_2O_3$ | Gew.-% | 0,023 | 0,019 | 0,053 | 0,053 | 0,051 |
| $As_2O_3$ | Gew.-% | | | | | |
| Σ | Gew.-% | 99,99 | 99,93 | 99,97 | 99,95 | 99,94 |
| MgO x $SnO_2$ | Gew.-% | 0,02 | 0,04 | 0,02 | 0,04 | 0,02 |
| $TiO_2$ / $SnO_2$ | | 26,49 | 15,61 | 27,34 | 16,38 | 36,52 |
| $TiO_2$ + $ZrO_2$ + $SnO_2$ | Gew.-% | 3,83 | 3,90 | 3,83 | 3,88 | 4,34 |
| $Na_2O$ + $K_2O$ | Gew.-% | 0,56 | 0,57 | 0,56 | 0,56 | 0,48 |
| $Na_2O$ / $K_2O$ | | 0,75 | 0,78 | 0,78 | 0,78 | 1,04 |
| SrO + BaO | Gew.-% | 1,31 | 1,31 | 1,31 | 1,32 | 1,05 |
| $SiO_2$ / $Al_2O_3$ | | 3,05 | 3,04 | 3,05 | 3,05 | 3,28 |
| $Al_2O_3$ / ($Li_2O$ + MgO + ZnO) | | 3,50 | 3,47 | 3,51 | 3,50 | 3,48 |
| **Eigen-schaften Glas** | | | | | | |
| $T_g$ | °C | | 684 | | | |
| KMK-Peak-Temperatur | °C | 1029 | 1027 | > 1005 | > 1005 | > 1005 |

## Tabelle 2: Variante A

| Glas | | 2 | 2 | 2 | 3 | 3 | 3 | 4 |
|---|---|---|---|---|---|---|---|---|
| Beispiel | | 1 | 2 | 3 | 4 | 5 | 6 | 7 |
| Vergleichsbeispiel | | | | | | | | |
| Eigenschaften Glaskeramik | | | | | | | | |
| Variante | | A | A | A | A | A | A | A |
| Ausführungsform | | 2 | 2 | 2 | 2 | 2 | 2 | 2 |
| Keramisierungsverfahren 1 | | g21 | g21 | g21 | g21 | g21 | g21 | g21 |
| Keramisierungsverfahren 2 | | | g41 | g41 | g41 | | g41 | g41 |
| $T_D$ | °C | 1145 | 1170 | 1145 | 1170 | 1145 | 1145 | 1170 |
| $t_v$ | min | 6,5 | 6,5 | 15 | 6,5 | 6,5 | 15 | 6,5 |
| Transmission (D65/2°), Dicke | mm | 3,95 | 3,98 | 3,90 | 3,96 | 3,95 | 3,96 | 3,89 |
| Y | % | 1,4 | 0,3 | 0,6 | 0,5 | 1,7 | 0,5 | 1,3 |
| (PvK-PiP)/PiP bei 630 nm | | 100,5 | 104,8 | 119,8 | 103,7 | 104,3 | 120,0 | 106,6 |
| Transmission bei 700 nm (PvK) | % | 8,1 | 3,4 | 4,8 | 3,7 | 8,3 | 3,9 | 6,2 |
| Transmission bei 1600 nm (PvK) | % | 63,6 | 40,7 | 46,0 | 44,6 | 67,5 | 46,5 | 44,9 |
| Remission (D65/2°), Dicke | mm | 3,95 | 3,98 | 3,90 | 3,96 | 3,95 | 3,96 | 3,89 |
| L* | | 85,0 | 92,2 | 91,3 | 92,5 | 89,0 | 92,1 | 93,1 |
| a* | | 0,2 | 0,3 | 0,3 | -0,4 | -0,9 | -0,5 | -0,3 |
| b* | | -0,6 | -1,9 | -2,2 | -3,8 | -5,5 | -4,1 | -2,5 |
| c* | | 0,6 | 1,9 | 2,2 | 3,8 | 5,5 | 4,1 | 2,5 |
| $\bar{\alpha}$(20°C;700°C) | ppm/K | 0,97 | | | | | | |

## Fortsetzung Tabelle 2: Variante A

| Glas | | 4 | 5 | 6 | 6 | 7 | 7 | 8 |
|---|---|---|---|---|---|---|---|---|
| Beispiel | | 8 | 9 | 10 | 11 | 12 | 13 | 14 |
| Vergleichsbeispiel | | | | | | | | |
| Eigenschaften Glaskeramik | | | | | | | | |
| Variante | | A | A | A | A | A | A | A |
| Ausführungsform | | 2 | 2 | 2 | 2 | 2 | 2 | 2 |
| Keramisierungsverfahren 1 | | g21 | g21 | g21 | g21 | g21 | g21 | g21 |
| Keramisierungsverfahren 2 | | g41 | g41 | g41 | g41 | g41 | g41 | g41 |
| $T_D$ | °C | 1145 | 1170 | 1170 | 1145 | 1170 | 1145 | 1170 |
| $t_V$ | min | 15 | 6,5 | 6,5 | 15 | 6,5 | 15 | 6,5 |
| Transmission (D65/2°), Dicke | mm | 3,88 | 3,96 | 3,86 | 3,84 | 3,93 | 3,90 | 3,96 |
| Y | % | 0,8 | 1,6 | 1,3 | 1,8 | 1,4 | 1,9 | 1,9 |
| (PvK-PiP)/PiP bei 630 nm | | 103,9 | 93,5 | 105,0 | 101,3 | 101,3 | 96,1 | 100,7 |
| Transmission bei 700 nm (PvK) | % | 4,4 | 6,5 | 6,1 | 7,4 | 6,1 | 7,7 | 7,3 |
| Transmission bei 1600 nm (PvK) | % | 50,6 | 39,8 | 53,4 | 59,2 | 51,6 | 59,6 | 54,9 |
| Remission (D65/2°), Dicke | mm | 3,88 | 3,96 | 3,86 | 3,84 | 3,93 | 3,90 | 3,96 |
| L* | | 93,9 | 92,7 | 93,1 | 92,5 | 93,1 | 92,1 | 93,2 |
| a* | | -0,1 | -0,3 | -0,3 | -0,5 | -0,3 | -0,6 | -0,5 |
| b* | | -2,3 | -2,1 | -2,3 | -2,6 | -2,4 | -2,7 | -2,2 |
| c* | | 2,3 | 2,2 | 2,3 | 2,6 | 2,5 | 2,7 | 2,2 |
| $\bar{\alpha}$(20°C;700°C) | ppm/K | | | | | | | |

## Fortsetzung Tabelle 2: Variante A

| Glas | | 9 | 9 | 10 | 10 | 11 | 11 | 12 |
|---|---|---|---|---|---|---|---|---|
| Beispiel | | 15 | 16 | 17 | 18 | 19 | 20 | 21 |
| Vergleichsbeispiel | | | | | | | | |
| Eigenschaften Glaskeramik | | | | | | | | |
| Variante | | A | A | A | A | A | A | A |
| Ausführungsform | | 2 | 2 | 2 | 2 | 2 | 2 | 1 |
| Keramisierungsverfahren 1 | | g21 | g21 | g21 | g21 | g21 | g21 | g11 |
| Keramisierungsverfahren 2 | | g41 | g41 | g41 | g41 | g41 | g41 | g31 |
| $T_D$ | °C | 1170 | 1145 | 1170 | 1145 | 1170 | 1145 | 1145 |
| $t_V$ | min | 6,5 | 15 | 6,5 | 15 | 6,5 | 15 | 6,5 |
| Transmission (D65/2°), Dicke | mm | 3,92 | 3,97 | 3,90 | 3,99 | 3,94 | 3,95 | 3,94 |
| Y | % | 2,0 | 1,6 | 2,0 | 1,3 | 1,6 | 1,9 | 0,6 |
| (PvK-PiP)/PiP bei 630 nm | | 99,0 | 97,0 | 102,3 | 107,1 | 99,5 | 101,3 | 106,4 |
| Transmission bei 700 nm (PvK) | % | 7,2 | 6,7 | 7,3 | 5,4 | 6,1 | 6,6 | 3,3 |
| Transmission bei 1600 nm (PvK) | % | 41,9 | 6,7 | 41,2 | 5,4 | 35,3 | 38,4 | 26,9 |
| Remission (D65/2°), Dicke | mm | 3,92 | 3,97 | 3,90 | 3,99 | 3,94 | 3,95 | 3,94 |
| L* | | 93,1 | 92,7 | 92,8 | 93,3 | 93,8 | 92,9 | 94,5 |
| a* | | -0,3 | -0,4 | -0,4 | -0,2 | -0,2 | -0,2 | -0,2 |
| b* | | -2,4 | -2,3 | -2,3 | -1,9 | -1,9 | -1,6 | -0,9 |
| c* | | 2,5 | 2,3 | 2,3 | 1,9 | 1,9 | 1,7 | 0,9 |
| $\bar{\alpha}$(20°C;700°C) | ppm/K | | | | | | | 0,91 |

## Fortsetzung Tabelle 2: Variante A

| Glas | | 12 | 12 | 13 | 13 | 14 | 14 | 14 |
|---|---|---|---|---|---|---|---|---|
| Beispiel | | 22 | 23 | 24 | 25 | | | |
| Vergleichsbeispiel | | | | | | 26 | 27 | 28 |
| Eigenschaften Glaskeramik | | | | | | | | |
| Variante | | A | A | A | A | A | A | A |
| Ausführungsform | | 1 | 1 | 2 | 2 | | | |
| Keramisierungsverfahren 1 | | g11 | g11 | g21 | g21 | g21 | g21 | g21 |
| Keramisierungsverfahren 2 | | g31 | g31 | g41 | g41 | | g41 | g41 |
| $T_D$ | °C | 1170 | 1145 | 1170 | 1145 | 1145 | 1170 | 1145 |
| $t_V$ | min | 6,5 | 15 | 6,5 | 15 | 6,5 | 6,5 | 15 |
| Transmission (D65/2°), Dicke | mm | 4,05 | 3,99 | 4,01 | 3,98 | 3,94 | 3,91 | 3,91 |
| Y | % | 0,2 | 0,3 | 1,1 | 1,9 | 1,5 | 0,7 | 0,8 |
| (PvK-PiP)/PiP bei 630 nm | | 202,3 | 812,0 | 109,8 | 93,9 | 109,3 | 114,1 | 129,6 |
| Transmission bei 700 nm (PvK) | % | 1,5 | 1,8 | 5,3 | 6,9 | 6,2 | 3,7 | 4,1 |
| Transmission bei 1600 nm (PvK) | % | 17,0 | 18,3 | 45,1 | 45,6 | 29,2 | 20,5 | 21,3 |
| Remission (D65/2°), Dicke | mm | 4,05 | 3,99 | 4,01 | 3,98 | 3,94 | 3,91 | 3,91 |
| L* | | 95,5 | 95,8 | 94,0 | 92,3 | 95,0 | 96,7 | 94,4 |
| a* | | -0,1 | -0,2 | -0,3 | -0,6 | -0,7 | -0,3 | -0,4 |
| b* | | -1,2 | -0,8 | -1,6 | -1,7 | -1,9 | -1,5 | -0,8 |
| c* | | 1,2 | 0,9 | 1,6 | 1,8 | 2,0 | 1,5 | 0,9 |
| $\bar{\alpha}(20°C;700°C)$ | ppm/K | | | | | 0,99 | | |

## Fortsetzung Tabelle 2: Variante A

| Glas | | 15 | 15 | 16 | 16 | 17 | 17 | 18 |
|---|---|---|---|---|---|---|---|---|
| **Beispiel** | | 29 | 30 | 31 | 32 | 33 | 34 | 35 |
| **Vergleichsbeispiel** | | | | | | | | |
| **Eigenschaften Glaskera-mik** | | | | | | | | |
| **Variante** | | A | A | A | A | A | A | A |
| **Ausführungsform** | | 2 | 2 | 2 | 2 | 2 | 2 | 2 |
| **Keramisierungsverfah-ren 1** | | g21 | g21 | g21 | g21 | g21 | g21 | g21 |
| **Keramisierungsverfah-ren 2** | | g41 | g41 | g41 | g41 | g41 | g41 | g41 |
| $T_D$ | °C | 1170 | 1145 | 1170 | 1145 | 1170 | 1145 | 1170 |
| $t_V$ | min | 6,5 | 15 | 6,5 | 15 | 6,5 | 15 | 6,5 |
| **Transmission (D65/2°), Dicke** | mm | 4,00 | 4,00 | 4,00 | 3,99 | 3,92 | 3,91 | 3,91 |
| Y | % | 1,6 | 1,6 | 0,8 | 1,1 | 1,2 | 1,7 | 0,9 |
| (PvK-PiP)/PiP bei 630 nm | | 111,6 | 99,5 | 102,1 | 102,7 | 91,7 | | 102,8 |
| Transmission bei 700 nm (PvK) | % | 6,1 | 6,0 | 4,9 | 5,8 | 6,2 | 7,4 | 5,2 |
| Transmission bei 1600 nm (PvK) | % | 38,1 | 39,7 | 47,9 | 50,4 | 44,7 | 51,2 | 49,2 |
| **Remission (D65/2°), Di-cke** | mm | 4,00 | 4,00 | 4,00 | 3,99 | 3,92 | 3,91 | 3,91 |
| L* | | 93,8 | 93,6 | 92,8 | 91,6 | 93,1 | 92,4 | 93,3 |
| a* | | -0,2 | -0,2 | -0,3 | -0,6 | -0,4 | -0,5 | -0,4 |
| b* | | -1,7 | -1,3 | -3,4 | -3,8 | -3,8 | -3,9 | -3,4 |
| c* | | 1,7 | 1,3 | 3,4 | 3,8 | 3,8 | 3,9 | 3,4 |
| $\bar{\alpha}(20°C;700°C)$ | ppm/K | | | | | | | |

## Fortsetzung Tabelle 2: Variante A

| Glas | | 18 | 19 | 19 | 19 | 20 | 20 | 21 |
|---|---|---|---|---|---|---|---|---|
| Beispiel | | 36 | 37 | 38 | 39 | 40 | 41 | 42 |
| Vergleichsbeispiel | | | | | | | | |
| Eigenschaften Glaskeramik | | | | | | | | |
| Variante | | A | A | A | A | A | A | A |
| Ausführungsform | | 2 | 1 | 1 | 1 | 2 | 2 | 1 |
| Keramisierungsverfahren 1 | | g21 | g11 | g11 | g11 | g21 | g21 | g11 |
| Keramisierungsverfahren 2 | | g41 | g31 | g31 | g31 | g41 | g41 | g31 |
| $T_D$ | °C | 1145 | 1145 | 1170 | 1145 | 1170 | 1145 | 1145 |
| $t_V$ | min | 15 | 6,5 | 6,5 | 15 | 6,5 | 15 | 6,5 |
| Transmission (D65/2°), Dicke | mm | 3,91 | 4,00 | 3,97 | 4,00 | 4,00 | 3,98 | 3,98 |
| Y | % | 1,3 | 1,7 | 0,6 | 0,6 | 1,3 | 1,2 | 1,4 |
| (PvK-PiP)/PiP bei 630 nm | | | 95,1 | 100,4 | | 90,5 | | 93,9 |
| Transmission bei 700 nm (PvK) | % | 6,7 | 7,4 | 3,9 | 3,8 | 5,8 | 5,4 | 6,0 |
| Transmission bei 1600 nm (PvK) | % | 56,6 | 68,9 | 50,2 | 54,4 | 61,4 | 62,4 | 64,5 |
| Remission (D65/2°), Dicke | mm | 3,91 | 4,00 | 3,97 | 4,00 | 4,00 | 3,98 | 3,98 |
| L* | | 92,4 | 93,3 | 94,8 | 95,5 | 95,4 | 95,5 | 94,2 |
| a* | | -0,6 | -1,1 | -0,4 | -0,4 | -0,5 | -0,5 | -0,8 |
| b* | | -3,9 | -1,1 | -0,9 | -1,2 | -1,5 | -1,8 | -1,5 |
| c* | | 3,9 | 1,5 | 1,0 | 1,3 | 1,6 | 1,9 | 1,7 |
| $\bar{\alpha}$(20°C;700°C) | ppm/K | | 0,62 | | | | | 0,66 |

## Fortsetzung Tabelle 2: Variante A

| Glas | | 21 | 21 | 22 | 22 |
|---|---|---|---|---|---|
| Beispiel | | 43 | 44 | 45 | 46 |
| Vergleichsbeispiel | | | | | |
| Eigenschaften Glaskeramik | | | | | |
| Variante | | A | A | A | A |
| Ausführungsform | | 1 | 1 | 2 | 2 |
| Keramisierungsverfahren 1 | | g11 | g11 | g21 | g21 |
| Keramisierungsverfahren 2 | | g31 | g31 | g41 | g41 |
| $T_D$ | °C | 1170 | 1145 | 1170 | 1145 |
| $t_V$ | min | 6,5 | 15 | 6,5 | 15 |
| Transmission (D65/2°), Dicke | mm | 4,01 | 4,01 | 4,03 | 3,96 |
| Y | % | 0,4 | 0,6 | 0,8 | 0,6 |
| (PvK-PiP)/PiP bei 630 nm | | 83,2 | | 115,6 | |
| Transmission bei 700 nm (PvK) | % | 3,0 | 3,3 | 4,5 | 3,6 |
| Transmission bei 1600 nm (PvK) | % | 43,9 | 47,2 | 35,1 | 29,5 |
| Remission (D65/2°), Dicke | mm | 4,01 | 4,01 | 4,03 | 3,96 |
| L* | | 95,9 | 95,9 | 93,5 | 94,4 |
| a* | | -0,3 | -0,3 | -0,2 | -0,1 |
| b* | | -1,2 | -1,3 | -1,9 | -1,6 |
| c* | | 1,3 | 1,3 | 2,0 | 1,6 |
| $\bar{\alpha}$(20°C;700°C) | ppm/K | | | | |

## Fortsetzung Tabelle 2: Variante A

| Glas | | 23 | 25 | 27 | 28 |
|---|---|---|---|---|---|
| Beispiel | | 47 | 48 | 49 | 50 |
| Vergleichsbeispiel | | | | | |
| Eigenschaften Glaskeramik | | | | | |
| Variante | | A | A | A | A |
| Ausführungsform | | 2 | 2 | 1 | 2 |
| Keramisierungsverfahren 1 | | g21 | g21 | g11 | g21 |
| Keramisierungsverfahren 2 | | g41 | g41 | | |
| $T_D$ | °C | 1145 | 1145 | 1145 | 1145 |
| $t_v$ | min | 15 | 15 | 6,5 | 6,5 |
| Transmission (D65/2°), Dicke | mm | 3,96 | 3,94 | 3,98 | 3,98 |
| Y | % | 1,9 | 0,8 | 1,6 | 2,0 |
| Transmission @ 630 nm (PvK) | % | 4,3 | 2,4 | 4,0 | 5,1 |
| Transmission @ 630 nm (PiP) | % | | | | |
| PvK-PiP @ 630 nm | % | | | | |
| (PvK-PiP)/PiP @ 630 nm | | | | | |
| Transmission @ 700 nm (PvK) | % | 7,1 | 4,9 | 7,3 | 8,7 |
| Transmission @ 1600 nm (PvK) | % | 41,8 | 52,2 | 67,2 | 55,9 |
| Remission (D65/2°), Dicke | mm | 3,96 | 3,94 | 3,98 | 3,98 |
| L* | | 91,0 | 91,6 | 92,2 | 89,5 |
| a* | | -0,3 | -0,3 | -0,7 | -0,7 |
| b* | | -0,4 | -1,7 | -0,2 | -1,1 |
| c* | | 0,5 | 1,7 | 0,7 | 1,3 |
| $\bar{\alpha}$(20°C;700°C) | ppm/K | | | 0,68 | |

## Fortsetzung: Tabelle 2: Variante A

| Glas | | 29 | 30 | 31 | 33 | 34 |
|---|---|---|---|---|---|---|
| Beispiel | | 51 | 52 | 53 | 54 | 55 |
| Vergleichs-beispiel | | | | | | |
| Eigenschaf-ten Glaskera-mik | | | | | | |
| Variante | | A | A | A | A | A |
| Ausführ-ungsform | | 2 | 2 | 1 | 2 | 2 |
| Keramisie-rungsverfah-ren 1 | | g21 | g21 | g11 | g21 | g21 |
| Keramisie-rungsverfah-ren 2 | | | g41 | | g41 | g41 |
| $T_D$ | °C | 1145 | 1145 | 1145 | 1145 | 1145 |
| $t_V$ | min | 6,5 | 15 | 6,5 | 15 | 15 |
| Transmission (D65/2°), Dicke | mm | 3,98 | 3,96 | 3,96 | 3,94 | 3,92 |
| Y | % | 1,7 | 1,5 | 1,8 | 0,5 | 0,4 |
| Transmission @ 630 nm (PvK) | % | 4,2 | 3,7 | 4,7 | 1,6 | 1,4 |
| Transmission @ 630 nm (PiP) | % | | | | | |
| PvK-PiP @ 630 nm | % | | | | | |
| (PvK-PiP)/PiP @ 630 nm | | | | | | |
| Transmission @ 700 nm (PvK) | % | 7,7 | 6,2 | 8,2 | 3,5 | 3,2 |
| Transmission @ 1600 nm (PvK) | % | 53,3 | 40,4 | 66,7 | 48,0 | 45,3 |
| Remission (D65/2°), Dicke | mm | 3,98 | 3,96 | 3,96 | 3,94 | 3,92 |
| L* | | 90,2 | 92,3 | 91,5 | 92,1 | 92,6 |
| a* | | -0,4 | -0,1 | -0,8 | -0,2 | -0,3 |
| b* | | -0,4 | -0,4 | -1,1 | -1,5 | -1,0 |
| c* | | 0,5 | 0,4 | 1,4 | 1,5 | 1,1 |
| $\bar{\alpha}(20°C;700°C)$ | ppm/K | | | | 0,90 | 0,91 |

## Fortsetzung: Tabelle 2: Variante A

| Glas | | 35 | 36 | 37 | 38 | 39 | 40 |
|---|---|---|---|---|---|---|---|
| Beispiel | | 56 | 57 | 58 | 59 | 60 | 61 |
| Vergleichs-beispiel | | | | | | | |
| Eigenschaften Glaskeramik | | | | | | | |
| Variante | | A | A | A | A | A | A |
| Ausführungsform | | 2 | 2 | 2 | 2 | 2 | 2 |
| Keramisierungsverfahren 1 | | g21 | g21 | g21 | g21 | g21 | g21 |
| Keramisierungsverfahren 2 | | g41 | g41 | g41 | g41 | g41 | g41 |
| $T_D$ | °C | 1145 | 1145 | 1145 | 1145 | 1145 | 1145 |
| $t_V$ | min | 15 | 15 | 15 | 15 | 15 | 15 |
| Transmission (D65/2°), Dicke | mm | 3,93 | 4,05 | 3,86 | 3,97 | 3,89 | 3,98 |
| Y | % | 0,3 | 0,3 | 1,0 | 0,8 | 1,8 | 1,3 |
| Transmission @ 630 nm (PvK) | % | 1,1 | 1,1 | 2,9 | 2,5 | 4,5 | 3,6 |
| Transmission @ 630 nm (PiP) | % | | | | | | |
| PvK-PiP @ 630 nm | % | | | | | | |
| (PvK-PiP)/PiP @ 630 nm | | | | | | | |
| Transmission @ 700 nm (PvK) | % | 2,7 | 2,7 | 5,7 | 5,1 | 7,7 | 6,5 |
| Transmission @ 1600 nm (PvK) | % | 52,3 | 44,9 | 54,0 | 52,8 | 55,8 | 52,8 |
| Remission (D65/2°), Dicke | mm | 3,93 | 4,05 | 3,86 | 3,97 | 3,89 | 3,98 |
| L* | | 90,5 | 92,7 | 90,8 | 90,7 | 91,1 | 91,3 |
| a* | | -0,3 | -0,3 | -0,5 | -0,5 | -0,5 | -0,6 |
| b* | | -2,8 | -1,5 | -2,4 | -2,1 | -1,4 | -1,1 |
| c* | | 2,8 | 1,6 | 2,4 | 2,2 | 1,5 | 1,3 |
| $\bar{\alpha}$(20°C;700°C) | ppm/K | 0,82 | 0,87 | 0,93 | 0,93 | 0,92 | 0,91 |

## Fortsetzung: Tabelle 2: Variante A

| Glas | | 41 | 42 | 44 | 45 | 46 | 47 |
|---|---|---|---|---|---|---|---|
| Beispiel | | 62 | 63 | 64 | 65 | 66 | 67 |
| Vergleichs-beispiel | | | | | | | |
| Eigenschaf-ten Glaskera-mik | | | | | | | |
| Variante | | A | A | A | A | A | A |
| Ausfüh-rungsform | | 2 | 2 | 2 | 2 | 2 | 2 |
| Keramisie-rungsverfah-ren 1 | | g21 | g21 | g21 | g21 | g21 | g21 |
| Keramisie-rungsverfah-ren 2 | | g41 | g41 | g41 | g41 | g41 | g41 |
| $T_D$ | °C | 1145 | 1145 | 1145 | 1145 | 1145 | 1145 |
| $t_V$ | min | 15 | 15 | 15 | 15 | 15 | 15 |
| Transmission (D65/2°), Di-cke | mm | 3,97 | 3,97 | 3,94 | 3,85 | 3,86 | 4,10 |
| Y | % | 1,6 | 1,2 | 1,8 | 2,0 | 1,7 | 0,3 |
| Transmission @ 630 nm (PvK) | % | 4,3 | 3,6 | 4,5 | 5,1 | 4,7 | 1,1 |
| Transmission @ 630 nm (PiP) | % | | | | | | |
| PvK-PiP @ 630 nm | % | | | | | | |
| (PvK-PiP)/PiP @ 630 nm | | | | | | | |
| Transmission @ 700 nm (PvK) | % | 7,5 | 6,5 | 7,6 | 8,3 | 7,9 | 2,6 |
| Transmission @ 1600 nm (PvK) | % | 55,3 | 52,6 | 49,2 | 52,9 | 53,7 | 45,6 |
| Remission (D65/2°), Di-cke | mm | 3,97 | 3,97 | 3,94 | 3,85 | 3,86 | 4,10 |
| L* | | 90,8 | 90,7 | 91,5 | 90,7 | 90,8 | 92,1 |
| a* | | -0,5 | -0,6 | -0,6 | -0,5 | -0,6 | -0,4 |
| b* | | -2,3 | -1,7 | -0,9 | -2,4 | -2,0 | -2,4 |
| c* | | 2,3 | 1,8 | 1,0 | 2,4 | 2,1 | 2,4 |
| $\bar{\alpha}$(20°C;700°C) | ppm/K | 0,93 | 0,91 | 1,01 | 1,02 | 1,00 | 0,91 |

## Tabelle 3: Variante B

| Glas | | 1 | 2 | 4 | 5 | 6 | 7 |
|---|---|---|---|---|---|---|---|
| Beispiel | | 68 | 69 | 70 | 71 | 72 | 73 |
| Vergleichsbeispiel | | | | | | | |
| Eigenschaften Glas-keramik | | | | | | | |
| Variante | | B | B | B | B | B | B |
| Ausführungsform | | 2 | 2 | 2 | 2 | 2 | 2 |
| Keramisierungsver-fahren 1 | | g22 | g22 | g22 | g22 | g22 | g22 |
| Keramisierungsver-fahren 2 | | g42 | | g42 | g42 | g42 | g42 |
| $T_D$ | °C | 1145 | 1100 | 1145 | 1145 | 1145 | 1145 |
| $t_V$ | min | 6,5 | 6,5 | 6,5 | 6,5 | 6,5 | 6,5 |
| Transmission (D65/2°), Dicke | mm | 3,98 | 4,01 | 3,92 | 3,97 | 3,96 | 3,92 |
| Y | % | 2,3 | 8,2 | 4,0 | 4,7 | 3,3 | 3,2 |
| Transmission bei 630 nm (PvK) | % | 5,2 | 16,2 | 7,9 | 8,6 | 6,9 | 7,4 |
| Transmission bei 630 nm (PiP) | % | 0,1 | 3,1 | 0,1 | 0,1 | 0,1 | 0,1 |
| (PvK-PiP)/PiP bei 630 nm | | 103,6 | 4,2 | 99,3 | 94,3 | 99,0 | 96,2 |
| Transmission bei 700 nm (PvK) | % | 9,1 | 26,2 | 11,9 | 12,1 | 10,9 | 11,3 |
| Transmission bei 1600 nm (PvK) | % | 68,5 | 77,8 | 65,5 | 60,5 | 72,2 | 71,1 |
| Anzeigefähigkeit für Rot | | | schwach | | | | |
| Remission (D65/2°), Dicke | mm | 3,98 | 4,01 | 3,92 | 3,97 | 3,96 | 3,92 |
| L* | | 87,5 | 72,3 | 89,0 | 85,4 | 89,7 | 89,6 |
| a* | | -0,8 | -2,0 | -1,1 | -1,4 | -1,1 | -1,0 |
| b* | | -0,8 | -6,3 | -4,1 | -1,3 | -3,9 | -3,6 |
| c* | | 1,1 | 6,6 | 4,3 | 1,9 | 4,0 | 3,8 |
| $\bar{\alpha}(20°C;700°C)$ | ppm/K | | 0,96 | | 0,95 | | |

## Fortsetzung Tabelle 3: Variante B

| Glas | | 8 | 8 | 9 | 10 | 11 | 12 |
|---|---|---|---|---|---|---|---|
| Beispiel | | 74 | 75 | 76 | 77 | 78 | 79 |
| Vergleichsbeispiel | | | | | | | |
| Eigenschaften Glas-keramik | | | | | | | |
| Variante | | B | B | B | B | B | B |
| Ausführungsform | | 2 | 2 | 2 | 2 | 2 | 1 |
| Keramisierungsver-fahren 1 | | g22 | g22 | g22 | g22 | g22 | g12 |
| Keramisierungsver-fahren 2 | | g42 | g42 | g42 | g42 | g42 | g32 |
| $T_D$ | °C | 1145 | 1145 | 1145 | 1145 | 1145 | 1100 |
| $t_V$ | min | 6,5 | 15 | 6,5 | 6,5 | 6,5 | 6,5 |
| Transmission (D65/2°), Dicke | mm | 3,90 | 3,93 | 3,93 | 3,99 | 3,96 | 4,00 |
| Y | % | 5,2 | 3,0 | 5,7 | 5,1 | 4,5 | 4,6 |
| Transmission bei 630 nm (PvK) | % | 9,5 | 6,1 | 9,8 | 9,0 | 8,1 | 8,4 |
| Transmission bei 630 nm (PiP) | % | 0,1 | 0,1 | 0,1 | 0,1 | 0,1 | 0,1 |
| (PvK-PiP)/PiP bei 630 nm | | 91,8 | 105,6 | 94,3 | 91,0 | 94,5 | 96,3 |
| Transmission bei 700 nm (PvK) | % | 13,5 | 9,4 | 13,4 | 12,5 | 11,4 | 11,9 |
| Transmission bei 1600 nm (PvK) | % | 73,5 | 60,1 | 62,1 | 61,8 | 54,5 | 60,7 |
| Anzeigefähigkeit für Rot | | | | | | | |
| Remission (D65/2°), Dicke | mm | 3,90 | 3,93 | 3,93 | 3,99 | 3,96 | 4,00 |
| L* | | 89,1 | 92,3 | 88,7 | 88,4 | 89,7 | 85,4 |
| a* | | -1,4 | -0,8 | -1,4 | -1,2 | -0,9 | -1,1 |
| b* | | -3,8 | -2,6 | -4,2 | -3,7 | -2,9 | -1,3 |
| c* | | 4,1 | 2,8 | 4,5 | 3,9 | 3,0 | 1,7 |
| ᾱ(20°C;700°C) | ppm/K | | | | | | 0,85 |

## Fortsetzung Tabelle 3: Variante B

| Glas | | 12 | 12 | 12 | 13 | 13 | 14 |
|---|---|---|---|---|---|---|---|
| Beispiel | | 80 | 81 | 82 | 83 | 84 | |
| Vergleichsbeispiel | | | | | | | 85 |
| Eigenschaften Glas-keramik | | | | | | | |
| Variante | | B | B | B | B | B | B |
| Ausführungsform | | 1 | 1 | 1 | 2 | 2 | |
| Keramisierungsver-fahren 1 | | g12 | g12 | g12 | g22 | g22 | g22 |
| Keramisierungsver-fahren 2 | | g32 | | | g42 | g42 | |
| $T_D$ | °C | 1120 | 1080 | 1065 | 1145 | 1120 | 1100 |
| $t_V$ | min | 6,5 | 6,5 | 15 | 6,5 | 6,5 | 6,5 |
| Transmission (D65/2°), Dicke | mm | 3,99 | 3,95 | 3,93 | 4,00 | 3,98 | 3,92 |
| Y | % | 2,2 | 8,6 | 8,5 | 3,1 | 7,4 | 5,9 |
| Transmission bei 630 nm (PvK) | % | 4,6 | 13,2 | 13,1 | 6,5 | 12,5 | 10,9 |
| Transmission bei 630 nm (PiP) | % | | 0,2 | 0,2 | 0,1 | 0,3 | 0,1 |
| (PvK-PiP)/PiP bei 630 nm | | | 68,3 | 65,3 | 105,4 | 39,7 | 97,6 |
| Transmission bei 700 nm (PvK) | % | 7,3 | 16,8 | 16,7 | 10,1 | 17,3 | 14,2 |
| Transmission bei 1600 nm (PvK) | % | 45,7 | 69,0 | 69,1 | 64,4 | 76,9 | 58,5 |
| Anzeigefähigkeit für Rot | | | nein | nein | | nein | |
| Remission (D65/2°), Dicke | mm | 3,99 | 3,95 | 3,93 | 4,00 | 3,98 | 3,92 |
| L* | | 91,5 | 82,4 | 82,0 | 90,4 | 83,2 | 89,1 |
| a* | | -0,6 | -2,6 | -2,6 | -1,0 | -2,6 | -2,3 |
| b* | | -1,0 | -3,3 | -3,2 | -2,4 | -5,2 | -4,1 |
| c* | | 1,2 | 4,2 | 4,1 | 2,6 | 5,8 | 4,7 |
| $\bar{\alpha}$(20°C;700°C) | ppm/K | | | | 0,84 | | 0,97 |

## Fortsetzung Tabelle 3: Variante B

| Glas | | 14 | 15 | 15 | 16 | 17 | 18 |
|---|---|---|---|---|---|---|---|
| Beispiel | | | 87 | 88 | 89 | 90 | 91 |
| Vergleichsbeispiel | | 86 | | | | | |
| Eigenschaften Glas-keramik | | | | | | | |
| Variante | | B | B | B | B | B | B |
| Ausführungsform | | | 2 | 2 | 2 | 2 | 2 |
| Keramisierungsver-fahren 1 | | g22 | g22 | g22 | g22 | g22 | g22 |
| Keramisierungsver-fahren 2 | | g42 | g42 | g42 | g42 | g42 | g42 |
| $T_D$ | °C | 1120 | 1145 | 1120 | 1145 | 1145 | 1145 |
| $t_V$ | min | 6,5 | 6,5 | 6,5 | 6,5 | 6,5 | 6,5 |
| Transmission (D65/2°), Dicke | mm | 3,92 | 3,99 | 3,99 | 3,99 | 3,91 | 3,92 |
| Y | % | 3,3 | 3,9 | 8,0 | 2,6 | 3,7 | 2,7 |
| Transmission bei 630 nm (PvK) | % | 7,3 | 7,3 | 12,5 | 6,3 | 8,0 | 6,5 |
| Transmission bei 630 nm (PiP) | % | | 0,1 | 0,2 | 0,1 | | |
| (PvK-PiP)/PiP bei 630 nm | | | 96,9 | 78,9 | 99,3 | | |
| Transmission bei 700 nm (PvK) | % | 10,2 | 10,8 | 16,1 | 10,3 | 11,7 | 10,4 |
| Transmission bei 1600 nm (PvK) | % | 44,5 | 58,6 | 72,2 | 70,9 | 66,0 | 71,1 |
| Anzeigefähigkeit für Rot | | | | nein | | | |
| Remission (D65/2°), Dicke | mm | 3,92 | 3,99 | 3,99 | 3,99 | 3,91 | 3,92 |
| L* | | 92,4 | 90,4 | 84,6 | 89,3 | 89,7 | 90,0 |
| a* | | -1,4 | -0,8 | -1,9 | -1,0 | -1,2 | -1,1 |
| b* | | -2,8 | -2,9 | -4,4 | -5,3 | -5,5 | -5,2 |
| c* | | 3,1 | 3,0 | 4,8 | 5,4 | 5,6 | 5,3 |
| $\bar{\alpha}(20°C;700°C)$ | ppm/K | | 0,79 | | | | |

## Fortsetzung Tabelle 3: Variante B

| Glas | | 19 | 19 | 20 | 20 | 21 | 21 |
|---|---|---|---|---|---|---|---|
| Beispiel | | 92 | 93 | 94 | 95 | 96 | 97 |
| Vergleichsbeispiel | | | | | | | |
| Eigenschaften Glas-keramik | | | | | | | |
| Variante | | B | B | B | B | B | B |
| Ausführungsform | | 1 | 1 | 2 | 2 | 1 | 1 |
| Keramisierungsver-fahren 1 | | g12 | g12 | g22 | g22 | g12 | g12 |
| Keramisierungsver-fahren 2 | | g32 | g32 | g42 | g42 | g32 | g32 |
| $T_D$ | °C | 1100 | 1120 | 1145 | 1120 | 1100 | 1120 |
| $t_V$ | min | 6,5 | 6,5 | 6,5 | 6,5 | 6,5 | 6,5 |
| Transmission (D65/2°), Dicke | mm | 4,00 | 3,98 | 4,00 | 3,96 | 4,02 | 3,99 |
| Y | % | 9,4 | 4,9 | 3,7 | 7,4 | 7,3 | 3,7 |
| Transmission bei 630 nm (PvK) | % | 15,6 | 9,5 | 7,3 | 12,5 | 12,6 | 7,6 |
| Transmission bei 630 nm (PiP) | % | 1,4 | | 0,1 | 0,2 | 0,3 | |
| (PvK-PiP)/PiP bei 630 nm | | 9,9 | | 89,6 | 56,9 | 40,9 | |
| Transmission bei 700 nm (PvK) | % | 22,7 | 14,0 | 11,2 | 17,3 | 17,9 | 11,6 |
| Transmission bei 1600 nm (PvK) | % | 83,8 | 80,2 | 76,0 | 81,9 | 84,0 | 79,0 |
| Anzeigefähigkeit für Rot | | schwach | | | nein | nein | |
| Remission (D65/2°), Dicke | mm | 4,00 | 3,98 | 4,00 | 3,96 | 4,02 | 3,99 |
| L* | | 83,3 | 89,0 | 92,3 | 88,0 | 86,1 | 90,9 |
| a* | | -5,0 | -2,8 | -1,4 | -3,0 | -4,0 | -1,9 |
| b* | | -5,1 | -2,1 | -3,0 | -5,6 | -4,8 | -2,0 |
| c* | | 7,1 | 3,5 | 3,3 | 6,4 | 6,3 | 2,8 |
| $\bar{\alpha}$(20°C;700°C) | ppm/K | 0,62 | | 0,76 | | 0,66 | |

## Fortsetzung Tabelle 3: Variante B

| Glas | | 22 | 22 | 22 |
|---|---|---|---|---|
| Beispiel | | 98 | 99 | 100 |
| Vergleichsbeispiel | | | | |
| Eigenschaften Glas-keramik | | | | |
| Variante | | B | B | B |
| Ausführungsform | | 2 | 2 | 2 |
| Keramisierungsver-fahren 1 | | g22 | g22 | g22 |
| Keramisierungsver-fahren 2 | | g42 | | g42 |
| $T_D$ | °C | 1145 | 1100 | 1120 |
| $t_V$ | min | 6,5 | 6,5 | 6,5 |
| Transmission (D65/2°), Dicke | mm | 3,98 | 4,00 | 3,99 |
| Y | % | 2,3 | 9,1 | 5,3 |
| Transmission bei 630 nm (PvK) | % | 5,1 | 14,0 | 9,5 |
| Transmission bei 630 nm (PiP) | % | 0,1 | 0,3 | |
| (PvK-PiP)/PiP bei 630 nm | | 95,0 | 45,8 | |
| Transmission bei 700 nm (PvK) | % | 8,4 | 18,2 | 13,3 |
| Transmission bei 1600 nm (PvK) | % | 49,9 | 74,4 | 65,4 |
| Anzeigefähigkeit für Rot | | | nein | |
| Remission (D65/2°), Dicke | mm | 3,98 | 4,00 | 3,99 |
| L* | | 90,6 | 81,1 | 86,7 |
| a* | | -0,5 | -2,5 | -1,5 |
| b* | | -2,3 | -4,8 | -3,2 |
| c* | | 2,3 | 5,4 | 3,5 |
| $\bar{a}$(20°C;700°C) | ppm/K | 0,87 | 0,86 | |

## Fortsetzung Tabelle 3: Variante B

| Glas | | 24 | 43 |
|---|---|---|---|
| Beispiel | | 101 | 102 |
| Vergleichsbeispiel | | | |
| Eigenschaften Glaskeramik | | | |
| Variante | | B | B |
| Ausführungsform | | 2 | 2 |
| Keramisierungsverfahren 1 | | g22 | g22 |
| Keramisierungsverfahren 2 | | g42 | g42 |
| $T_D$ | °C | 1145 | 1145 |
| $t_V$ | min | 6,5 | 15 |
| **Transmission (D65/2°), Dicke** | mm | 3,95 | 3,97 |
| Y | % | 2,5 | 2,1 |
| Transmission @ 630 nm (PvK) | % | 5,3 | 5,0 |
| Transmission @ 630 nm (PiP) | % | | |
| PvK-PiP @ 630 nm | % | | |
| (PvK-PiP)/PiP @ 630 nm | | | |
| Transmission @ 700 nm (PvK) | % | 8,2 | 8,2 |
| Transmission @ 1600 nm (PvK) | % | 46,5 | 50,8 |
| Anzeigefähigkeit für Rot | | nein | nein |
| **Remission (D65/2°), Dicke** | mm | 3,95 | 3,97 |
| L* | | 90,6 | 91,1 |
| a* | | -0,3 | -0,5 |
| b* | | -0,5 | -1,6 |
| c* | | 0,6 | 1,6 |
| $\bar{\alpha}$(20°C;700°C) | ppm/K | | 1,01 |

## Tabelle 4: Variante C

| Glas | | 1 | 3 | 4 | 5 | 6 | 7 |
|---|---|---|---|---|---|---|---|
| Beispiel | | 103 | 104 | 105 | 106 | 107 | 108 |
| Vergleichsbeispiel | | | | | | | |
| Eigenschaften Glaskeramik | | | | | | | |
| Variante | | C | C | C | C | C | C |
| Ausführungsform | | 2 | 2 | 2 | 2 | 2 | 2 |
| Keramisierungsverfahren 1 | | g23 | g23 | g23 | g23 | g23 | g23 |
| Keramisierungsverfahren 2 | | g43 | g43 | g43 | g43 | g43 | g43 |
| $T_D$ | °C | 1100 | 1100 | 1100 | 1100 | 1100 | 1100 |
| $t_V$ | min | 6,5 | 6,5 | 6,5 | 6,5 | 6,5 | 6,5 |
| Transmission (D65/2°), Dicke | mm | 3,92 | 3,91 | 4,02 | 4,01 | 3,97 | 3,95 |
| Y | % | 11,5 | 11,6 | 14,7 | 14,1 | 12,5 | 13,3 |
| Transmission bei 630 nm (PvK) | % | 19,3 | 20,2 | 22,3 | 20,1 | 20,8 | 21,6 |
| Transmission bei 630 nm (PiP) | % | 4,4 | 5,4 | 6,5 | 3,6 | 4,8 | 5,7 |
| (PvK-PiP)/PiP bei 630 nm | | 3,3 | 2,8 | 2,4 | 4,6 | 3,4 | 2,8 |
| Transmission bei 700 nm (PvK) | % | 29,1 | 30,3 | 30,8 | 26,6 | 31,3 | 31,8 |
| Transmission bei 1600 nm (PvK) | % | 84,6 | 84,5 | 81,6 | 80,7 | 83,8 | 84,0 |
| Anzeigefähigkeit für Rot | | gut | gut | sehr gut | schwach | gut | sehr gut |
| Remission (D65/2°), Dicke | mm | 3,92 | 3,91 | 4,02 | 4,01 | 3,97 | 3,95 |
| L* | | 74,3 | 71,9 | 69,6 | 71,5 | 73,6 | 72,9 |
| a* | | -4,0 | -4,0 | -3,4 | -3,1 | -4,2 | -4,1 |
| b* | | -8,1 | -10,2 | -8,3 | -5,4 | -8,3 | -8,4 |
| c* | | 9,0 | 10,9 | 9,0 | 6,3 | 9,3 | 9,3 |
| $\bar{\alpha}$(20°C;700°C) | ppm/K | 1 | 0,99 | 0,89 | 0,92 | 0,9 | 0,86 |

## Fortsetzung Tabelle 4: Variante C

| Glas | | 8 | 9 | 10 | 11 | 12 | 12 |
|---|---|---|---|---|---|---|---|
| Beispiel | | 109 | 110 | 111 | 112 | 113 | 114 |
| Vergleichsbeispiel | | | | | | | |
| Eigenschaften Glas-keramik | | | | | | | |
| Variante | | C | C | C | C | C | C |
| Ausführungsform | | 2 | 2 | 2 | 2 | 1 | 1 |
| Keramisierungsver-fahren | | g23 | g23 | g23 | g23 | g13 | g13 |
| Keramisierungsver-fahren 2 | | g43 | g43 | g43 | g43 | | |
| $T_D$ | °C | 1100 | 1100 | 1100 | 1100 | 1035 | 1055 |
| $t_V$ | min | 6,5 | 6,5 | 6,5 | 6,5 | 13 | 13 |
| Transmission (D65/2°), Dicke | mm | 3,97 | 3,89 | 3,94 | 3,97 | 3,95 | 3,9 |
| Y | % | 15,4 | 15,2 | 14,5 | 13,5 | 22,3 | 16,7 |
| Transmission bei 630 nm (PvK) | % | 23,8 | 21,7 | 20,5 | 18,6 | 29,2 | 22,5 |
| Transmission bei 630 nm (PiP) | % | 7,9 | 4,2 | 3,5 | 2,1 | 8,5 | 3,7 |
| (PvK-PiP)/PiP bei 630 nm | | 2,0 | 4,2 | 4,8 | 8,1 | 2,4 | 5,1 |
| Transmission bei 700 nm (PvK) | % | 33,9 | 28,7 | 27,0 | 23,8 | 35,9 | 28,4 |
| Transmission bei 1600 nm (PvK) | % | 84,0 | 80,9 | 80,9 | 79,0 | 78,7 | 76,4 |
| Anzeigefähigkeit für Rot | | sehr gut | gut | schwach | schwach | sehr gut | gut |
| Remission (D65/2°), Dicke | mm | 3,97 | 3,89 | 3,94 | 3,97 | 3,95 | 3,9 |
| L* | | 72,0 | 72,4 | 72,5 | 74,1 | 62,7 | 68,5 |
| a* | | -4,3 | -3,5 | -3,2 | -2,7 | -3,1 | -3,1 |
| b* | | -8,4 | -8,0 | -6,3 | -5,3 | -7,1 | -5,9 |
| c* | | 9,5 | 8,7 | 7,1 | 5,9 | 7,8 | 6,6 |
| $\bar{\alpha}$(20°C;700°C) | ppm/K | 0,9 | 0,99 | 0,87 | 0,87 | | |

## Fortsetzung Tabelle 4: Variante C

| Glas | | 12 | 13 | 13 | 14 | 14 | 15 |
|---|---|---|---|---|---|---|---|
| Beispiel | | 115 | 116 | 117 | | | 120 |
| Vergleichsbeispiel | | | | | 118 | 119 | |
| Eigenschaften Glas-keramik | | | | | | | |
| Variante | | C | C | C | C | C | C |
| Ausführungsform | | 1 | 2 | 2 | | | 2 |
| Keramisierungsver-fahren 1 | | g13 | g23 | g23 | g23 | g23 | g23 |
| Keramisierungsver-fahren 2 | | | g43 | | | | g43 |
| $T_D$ | °C | 1065 | 1100 | 1080 | 1035 | 1055 | 1100 |
| $t_V$ | min | 6,5 | 6,5 | 6,5 | 13 | 13 | 6,5 |
| Transmission (D65/2°), Dicke | mm | 3,90 | 3,97 | 3,92 | 3,91 | 3,91 | 4,01 |
| Y | % | 12,5 | 12,0 | 19,0 | 21,2 | 15,7 | 12,6 |
| Transmission bei 630 nm (PvK) | % | 17,5 | 18,7 | 29,2 | 29,7 | 22,0 | 17,7 |
| Transmission bei 630 nm (PiP) | % | 1,0 | 3,0 | 12,5 | 9,3 | 2,7 | 1,7 |
| (PvK-PiP)/PiP bei 630 nm | | 17,3 | 5,3 | 1,3 | 2,2 | 7,3 | 9,7 |
| Transmission bei 700 nm (PvK) | % | 22,0 | 26,3 | 40,0 | 37,5 | 27,3 | 22,6 |
| Transmission bei 1600 nm (PvK) | % | 73,6 | 82,2 | 84,3 | 81,9 | 78,7 | 79,3 |
| Anzeigefähigkeit für Rot | | schwach | schwach | sehr gut | sehr gut | schwach | schwach |
| Remission (D65/2°), Dicke | mm | 3,90 | 3,97 | 3,92 | 3,91 | 3,91 | 4,01 |
| L* | | 76,4 | 77,4 | 70,1 | 69,8 | 76,3 | 78,0 |
| a* | | -3,1 | -3,9 | -4,4 | -4,0 | -3,8 | -2,8 |
| b* | | -5,1 | -8,3 | -11,9 | -14,0 | -11,4 | -7,3 |
| c* | | 6,0 | 9,2 | 12,7 | 14,6 | 12,0 | 7,8 |
| $\bar{\alpha}$(20°C;700°C) | ppm/K | | 0,82 | | | | 0,78 |

## Fortsetzung Tabelle 4: Variante C

| Glas | | 15 | 15 | 16 | 17 | 18 | 19 |
|---|---|---|---|---|---|---|---|
| Beispiel | | 121 | 122 | 123 | 124 | 125 | 126 |
| Vergleichsbeispiel | | | | | | | |
| Eigenschaften Glas-keramik | | | | | | | |
| Variante | | C | C | C | C | C | C |
| Ausführungsform | | 2 | 2 | 2 | 2 | 2 | 1 |
| Keramisierungsver-fahren 1 | | g23 | g23 | g23 | g23 | g23 | g13 |
| Keramisierungsver-fahren 2 | | | | g43 | g43 | g43 | g33 |
| $T_D$ | °C | 1080 | 1065 | 1100 | 1100 | 1100 | 1080 |
| $t_V$ | min | 6,5 | 15 | 6,5 | 6,5 | 6,5 | 6,5 |
| Transmission (D65/2°), Dicke | mm | 3,97 | 3,93 | 4,00 | 3,93 | 3,94 | 3,97 |
| Y | % | 18,6 | 19,1 | 11,3 | 15,1 | 12,4 | 18,5 |
| Transmission bei 630 nm (PvK) | % | 26,1 | 27,0 | 19,9 | 23,4 | 21,2 | 30,3 |
| Transmission bei 630 nm (PiP) | % | 9,9 | 10,5 | 4,0 | 7,2 | 5,5 | 14,4 |
| (PvK-PiP)/PiP bei 630 nm | | 1,6 | 1,6 | 4,0 | 2,2 | 2,8 | 1,1 |
| Transmission bei 700 nm (PvK) | % | 34,2 | 35,4 | 30,2 | 32,0 | 31,4 | 43,0 |
| Transmission bei 1600 nm (PvK) | % | 83,4 | 83,2 | 83,5 | 82,7 | 84,3 | 86,0 |
| Anzeigefähigkeit für Rot | | sehr gut | sehr gut | gut | sehr gut | gut | sehr gut |
| Remission (D65/2°), Dicke | mm | 3,97 | 3,93 | 4,00 | 3,93 | 3,94 | 3,97 |
| L* | | 70,2 | 69,7 | 76,6 | 73,7 | 76,3 | 72,6 |
| a* | | -3,3 | -3,3 | -3,9 | -3,7 | -4,1 | -7,3 |
| b* | | -10,1 | -9,8 | -12,2 | -13,3 | -12,6 | -10,8 |
| c* | | 10,6 | 10,4 | 12,8 | 13,8 | 13,3 | 13,0 |
| $\bar{\alpha}$(20°C;700°C) | ppm/K | | | 0,92 | 1 | 0,95 | |

## Fortsetzung Tabelle 4: Variante C

| Glas | | 19 | 20 | 20 | 21 | 21 | 22 |
|---|---|---|---|---|---|---|---|
| Beispiel | | 127 | 128 | 129 | 130 | 131 | 132 |
| Vergleichsbeispiel | | | | | | | |
| Eigenschaften Glas-keramik | | | | | | | |
| Variante | | C | C | C | C | C | C |
| Ausführungsform | | 1 | 2 | 2 | 1 | 1 | 2 |
| Keramisierungsver-fahren 1 | | g13 | g23 | g23 | g13 | g13 | g23 |
| Keramisierungsver-fahren 2 | | g33 | g43 | | g33 | g33 | |
| $T_D$ | °C | 1065 | 1100 | 1080 | 1080 | 1065 | 1080 |
| $t_V$ | min | 15 | 6,5 | 6,5 | 6,5 | 15 | 6,5 |
| Transmission (D65/2°), Dicke | mm | 3,99 | 4,00 | 3,93 | 3,93 | 3,87 | 3,89 |
| Y | % | 17,7 | 12,8 | 24,3 | 14,0 | 14,1 | 14,6 |
| Transmission bei 630 nm (PvK) | % | 28,9 | 20,0 | 37,9 | 22,0 | 22,2 | 20,5 |
| Transmission bei 630 nm (PiP) | % | 13,0 | 4,0 | 21,7 | 6,8 | 5,8 | 3,3 |
| (PvK-PiP)/PiP bei 630 nm | | 1,2 | 4,0 | 0,7 | 2,2 | 2,8 | 5,3 |
| Transmission bei 700 nm (PvK) | % | 41,6 | 29,0 | 50,5 | 32,1 | 32,4 | 26,6 |
| Transmission bei 1600 nm (PvK) | % | 86,2 | 84,6 | 85,6 | 86,1 | 86,1 | 79,9 |
| Anzeigefähigkeit für Rot | | sehr gut | schwach | sehr gut | gut | gut | schwach |
| Remission (D65/2°), Dicke | mm | 3,99 | 4,00 | 3,93 | 3,93 | 3,87 | 3,89 |
| L* | | 74,1 | 80,1 | 68,8 | 78,5 | 79,6 | 75,1 |
| a* | | -7,3 | -4,8 | -5,5 | -5,9 | -5,9 | -3,5 |
| b* | | -9,9 | -10,8 | -18,5 | -9,1 | -8,3 | -7,5 |
| c* | | 12,3 | 11,8 | 19,3 | 10,9 | 10,1 | 8,3 |
| $\bar{\alpha}(20°C;700°C)$ | ppm/ K | | 0,76 | | | | |

## Fortsetzung Tabelle 4: Variante C

| Glas | | 22 | 22 |
|---|---|---|---|
| **Beispiel** | | 133 | 134 |
| **Vergleichsbeispiel** | | | |
| **Eigenschaften Glas-keramik** | | | |
| **Variante** | | C | C |
| **Ausführungsform** | | 2 | 2 |
| **Keramisierungsver-fahren 1** | | g23 | g23 |
| **Keramisierungsver-fahren 2** | | | |
| $T_D$ | °C | 1065 | 1065 |
| $t_V$ | min | 6,5 | 15 |
| **Transmission (D65/2°), Dicke** | mm | 3,90 | 3,90 |
| Y | % | 21,0 | 13,7 |
| Transmission bei 630 nm (PvK) | % | 29,5 | 19,0 |
| Transmission bei 630 nm (PiP) | % | 11,6 | 2,2 |
| (PvK-PiP)/PiP bei 630 nm | | 1,5 | 7,6 |
| Transmission bei 700 nm (PvK) | % | 38,2 | 24,4 |
| Transmission bei 1600 nm (PvK) | % | 82,5 | 79,1 |
| Anzeigefähigkeit für Rot | | sehr gut | schwach |
| **Remission (D65/2°), Dicke** | mm | 3,90 | 3,90 |
| L* | | 67,7 | 75,5 |
| a* | | -3,8 | -3,2 |
| b* | | -10,1 | -5,9 |
| c* | | 10,8 | 6,7 |
| $\bar{\alpha}$(20°C;700°C) | ppm/K | | |

## Fortsetzung Tabelle 4: Variante C

| Glas | | 23 | 24 | 24 | 25 |
|---|---|---|---|---|---|
| **Beispiel** | | 135 | 136 | 137 | 138 |
| **Vergleichsbeispiel** | | | | | |
| **Eigenschaften Glaskeramik** | | | | | |
| **Variante** | | C | C | C | C |
| **Ausführungsform** | | 2 | 2 | 2 | 2 |
| **Keramisierungsverfahren 1** | | g23 | g23 | g23 | g23 |
| **Keramisierungsverfahren 2** | | g43 | | | g43 |
| $T_D$ | °C | 1100 | 1080 | 1090 | 1100 |
| $t_V$ | min | 6,5 | 6,5 | 6,5 | 6,5 |
| **Transmission (D65/2°), Dicke** | mm | 3,96 | 3,94 | 4,00 | 3,94 |
| Y | % | 15,5 | 16,5 | 13,8 | 15,9 |
| Transmission @ 630 nm (PvK) | % | 21,9 | 22,9 | 19,3 | 24,8 |
| Transmission @ 630 nm (PiP) | % | 4,4 | 5,7 | 1,9 | 7,7 |
| PvK-PiP @ 630 nm | % | 17,5 | 17,2 | 17,4 | 17,1 |
| (PvK-PiP)/PiP @ 630 nm | | 3,9 | 3,0 | 9,3 | 2,2 |
| Transmission @ 700 nm (PvK) | % | 28,7 | 29,7 | 24,4 | 33,7 |
| Transmission @ 1600 nm (PvK) | % | 80,0 | 81,0 | 79,0 | 82,0 |
| Anzeigefähigkeit für Rot | | gut | sehr gut | schwach | sehr gut |
| **Remission (D65/2°), Dicke** | mm | 3,96 | 3,94 | 4,00 | 3,94 |
| L* | | 73,1 | 69,9 | 76,4 | 70,8 |
| a* | | -3,4 | -2,8 | -2,7 | -3,7 |
| b* | | -7,7 | -7,6 | -5,6 | -10,6 |
| c* | | 8,4 | 8,1 | 6,2 | 11,2 |
| $\bar{\alpha}$(20°C;700°C) | ppm/K | | | | |

## Fortsetzung Tabelle 4: Variante C

| Glas | | 26 | 27 | 28 | 29 | 30 | 31 |
|---|---|---|---|---|---|---|---|
| Beispiel | | 139 | 140 | 141 | 142 | 143 | 144 |
| Vergleichs-beispiel | | | | | | | |
| Eigenschaf-ten Glaskera-mik | | | | | | | |
| Variante | | C | C | C | C | C | C |
| Ausfüh-rungsform | | 1 | 1 | 2 | 2 | 2 | 1 |
| Keramisie-rungsverfah-ren 1 | | g13 | g13 | g23 | g23 | g23 | g13 |
| Keramisie-rungsverfah-ren 2 | | g33 | g33 | | | | g33 |
| $T_D$ | °C | 1080 | 1080 | 1080 | 1080 | 1080 | 1080 |
| $t_V$ | min | 6,5 | 6,5 | 6,5 | 6,5 | 6,5 | 6,5 |
| Transmis-sion (D65/2°), Dicke | mm | 3,92 | 3,96 | 3,99 | 3,98 | 3,93 | 3,95 |
| Y | % | 21,6 | 16,9 | 15,4 | 14,1 | 20,1 | 18,0 |
| Transmission @ 630 nm (PvK) | % | 33,4 | 27,0 | 22,6 | 20,9 | 28,2 | 28,5 |
| Transmission @ 630 nm (PiP) | % | 17,7 | 11,6 | 5,3 | 4,1 | 10,2 | 12,4 |
| PvK-PiP @ 630 nm | % | 15,7 | 15,5 | 17,4 | 16,7 | 18,1 | 16,2 |
| (PvK-PiP)/PiP @ 630 nm | | 0,9 | 1,3 | 3,3 | 4,1 | 1,8 | 1,3 |
| Transmission @ 700 nm (PvK) | % | 45,7 | 38,7 | 29,9 | 28,1 | 36,5 | 40,2 |
| Transmission @ 1600 nm (PvK) | % | 85,9 | 85,8 | 82,8 | 82,5 | 82,9 | 85,1 |
| Anzeigefähig-keit für Rot | | sehr gut | sehr gut | gut | gut | sehr gut | sehr gut |
| Remission (D65/2°), Di-cke | mm | 3,92 | 3,96 | 3,99 | 3,98 | 3,93 | 3,95 |
| L* | | 71,4 | 74,1 | 73,1 | 75,1 | 68,5 | 73,5 |
| a* | | -5,4 | -6,3 | -4,6 | -4,6 | -3,5 | -6,2 |
| b* | | -14,0 | -9,1 | -6,8 | -6,0 | -9,0 | -11,6 |
| c* | | 15,0 | 11,0 | 8,2 | 7,5 | 9,7 | 13,2 |
| $\bar{\alpha}$(20°C;700°C) | ppm/K | | 0,7 | | | | |

## Fortsetzung Tabelle 4: Variante C

| Glas | | 32 | 33 | 34 | 35 | 36 | 37 |
|---|---|---|---|---|---|---|---|
| Beispiel | | 145 | 146 | 147 | 148 | 149 | 150 |
| Vergleichs-beispiel | | | | | | | |
| Eigenschaf-ten Glaskera-mik | | | | | | | |
| Variante | | C | C | C | C | C | C |
| Ausfüh-rungsform | | 1 | 2 | 2 | 2 | 2 | 2 |
| Keramisie-rungsverfah-ren 1 | | g13 | g23 | g23 | g23 | g23 | g23 |
| Keramisie-rungsverfah-ren 2 | | g33 | g43 | g43 | g43 | g43 | g43 |
| $T_D$ | °C | 1080 | 1100 | 1100 | 1100 | 1100 | 1100 |
| $t_V$ | min | 6,5 | 6,5 | 6,5 | 6,5 | 6,5 | 6,5 |
| Transmission (D65/2°), Dicke | mm | 3,94 | 3,96 | 3,93 | 3,92 | 4,20 | 4,01 |
| Y | % | 17,0 | 13,3 | 12,6 | 10,4 | 10,7 | 13,7 |
| Transmission @ 630 nm (PvK) | % | 26,5 | 20,6 | 19,7 | 17,2 | 17,2 | 23,1 |
| Transmission @ 630 nm (PiP) | % | 10,5 | 4,6 | 3,7 | 3,2 | 2,2 | 7,2 |
| PvK-PiP @ 630 nm | % | 16,0 | 16,0 | 16,0 | 14,0 | 15,0 | 15,9 |
| (PvK-PiP)/PiP @ 630 nm | | 1,5 | 3,5 | 4,3 | 4,4 | 6,9 | 2,2 |
| Transmission @ 700 nm (PvK) | % | 37,7 | 28,2 | 26,9 | 24,1 | 23,3 | 33,9 |
| Transmission @ 1600 nm (PvK) | % | 84,7 | 80,6 | 80,2 | 83,4 | 79,1 | 84,0 |
| Anzeigefähig-keit für Rot | | sehr gut | gut | gut | gut | schwach | sehr gut |
| Remission (D65/2°), Dicke | mm | 3,94 | 3,96 | 3,93 | 3,92 | 4,20 | 4,01 |
| L* | | 74,8 | 72,3 | 73,4 | 72,2 | 74,0 | 72,4 |
| a* | | -6,2 | -3,0 | -3,8 | -2,7 | -3,4 | -4,0 |
| b* | | -9,6 | -9,9 | -8,0 | -8,6 | -8,0 | -11,8 |
| c* | | 11,4 | 10,3 | 8,8 | 9,0 | 8,7 | 12,5 |
| ᾱ(20°C;700°C) | ppm/K | | 0,90 | 0,91 | 0,82 | 0,88 | 0,92 |

Fortsetzung Tabelle 4: Variante C

| Glas | | 38 | 39 | 40 | 41 | 42 | 43 |
|---|---|---|---|---|---|---|---|
| Beispiel | | 151 | 152 | 153 | 154 | 155 | 156 |
| Vergleichs-beispiel | | | | | | | |
| Eigenschaf-ten Glaske-ramik | | | | | | | |
| Variante | | C | C | C | C | C | C |
| Ausfüh-rungsform | | 2 | 2 | 2 | 2 | 2 | 2 |
| Keramisie-rungsverfah-ren 1 | | g23 | g23 | g23 | g23 | g23 | g23 |
| Keramisie-rungsverfah-ren 2 | | g43 | g43 | g43 | g43 | g43 | g43 |
| $T_D$ | °C | 1100 | 1100 | 1100 | 1100 | 1100 | 1100 |
| $t_V$ | min | 6,5 | 6,5 | 6,5 | 6,5 | 6,5 | 6,5 |
| Transmis-sion (D65/2°), Di-cke | mm | 3,90 | 3,91 | 3,93 | 3,96 | 3,96 | 3,83 |
| Y | % | 14,8 | 12,8 | 11,3 | 12,5 | 11,3 | 16,0 |
| Transmission @ 630 nm (PvK) | % | 24,9 | 20,7 | 18,9 | 21,0 | 19,3 | 23,8 |
| Transmission @ 630 nm (PiP) | % | 9,3 | 4,4 | 3,4 | 4,7 | 3,6 | 6,1 |
| PvK-PiP @ 630 nm | % | 15,6 | 16,3 | 15,5 | 16,3 | 15,7 | 17,7 |
| (PvK-PiP)/PiP @ 630 nm | | 1,7 | 3,7 | 4,6 | 3,5 | 4,4 | 2,9 |
| Transmission @ 700 nm (PvK) | % | 35,9 | 29,3 | 27,4 | 30,4 | 27,9 | 31,8 |
| Transmission @ 1600 nm (PvK) | % | 83,7 | 83,3 | 83,0 | 83,1 | 83,3 | 81,6 |
| Anzeigefähig-keit für Rot | | sehr gut | gut | gut | gut | gut | gut |
| Remission (D65/2°), Di-cke | mm | 3,90 | 3,91 | 3,93 | 3,96 | 3,96 | 3,83 |
| L* | | 69,9 | 76,0 | 76,0 | 75,0 | 75,7 | 73,5 |
| a* | | -4,1 | -3,8 | -4,1 | -3,9 | -4,2 | -3,5 |
| b* | | -11,9 | -9,3 | -8,1 | -11,0 | -9,0 | -10,1 |
| c* | | 12,6 | 10,1 | 9,1 | 11,7 | 10,0 | 10,7 |
| $\bar{\alpha}$(20°C;700°C) | ppm/K | 0,92 | 0,90 | 0,89 | 0,91 | 0,89 | 1,00 |

Fortsetzung Tabelle 4: Variante C

| Glas | | 44 | 45 | 46 | 47 |
|---|---|---|---|---|---|
| Beispiel | | 157 | 158 | 159 | 160 |
| Vergleichs-beispiel | | | | | |
| Eigenschaf-ten Glaskera-mik | | | | | |
| Variante | | C | C | C | C |
| Ausfüh-rungsform | | 2 | 2 | 2 | 2 |
| Keramisie-rungsverfah-ren 1 | | g23 | g23 | g23 | g23 |
| Keramisie-rungsverfah-ren 2 | | g43 | g43 | g43 | g43 |
| $T_D$ | °C | 1100 | 1100 | 1100 | 1100 |
| $t_V$ | min | 6,5 | 6,5 | 6,5 | 6,5 |
| Transmission (D65/2°), Di-cke | mm | 3,94 | 3,94 | 3,92 | 4,06 |
| Y | % | 14,4 | 14,4 | 13,7 | 11,2 |
| Transmission @ 630 nm (PvK) | % | 21,6 | 22,4 | 21,8 | 18,0 |
| Transmission @ 630 nm (PiP) | % | 4,5 | 5,5 | 5,2 | 3,2 |
| PvK-PiP @ 630 nm | % | 17,1 | 16,9 | 16,6 | 14,8 |
| (PvK-PiP)/PiP @ 630 nm | | 3,8 | 3,1 | 3,2 | 4,6 |
| Transmission @ 700 nm (PvK) | % | 29,1 | 30,4 | 29,9 | 24,8 |
| Transmission @ 1600 nm (PvK) | % | 81,4 | 82,2 | 81,5 | 80,3 |
| Anzeigefähig-keit für Rot | | gut | gut | gut | gut |
| Remission (D65/2°), Di-cke | mm | 3,94 | 3,94 | 3,92 | 4,06 |
| L* | | 74,5 | 73,4 | 73,5 | 72,5 |
| a* | | -4,0 | -3,5 | -4,0 | -2,9 |
| b* | | -8,4 | -10,8 | -9,9 | -9,6 |
| c* | | 9,3 | 11,3 | 10,7 | 10,0 |
| $\bar{\alpha}$(20°C;700°C) | ppm/K | 1,00 | 1,01 | 0,99 | 0,91 |

Tabelle 5: Langzeittemperungen

| Glas | | 11 | 12 | 13 |
|---|---|---|---|---|
| Beispiel | | 161 | 162 | 163 |
| Vergleichsbeispiel | | | | |
| Basisbeispiel | | 78 | 21 | 83 |
| Eigenschaften Glas-keramik | | | | |
| Variante | | B | A | B |
| Ausführungsform | | 2 | 1 | 2 |
| Keramisierungsver-fahren | | g22 + 700 °C, 10 h | g11 + 700 °C, 10 h | g22 + 700 °C, 10 h |
| $T_D$ | °C | 1145 | 1145 | 1145 |
| $t_V$ | min | 6,5 | 6,5 | 6,5 |
| Transmission (D65/2°), Dicke | mm | 3,95 | 3,95 | 3,98 |
| Y | % | 4,4 | 0,6 | 3,0 |
| ΔY | % | -0,1 | 0,0 | -0,1 |
| Transmission bei 630 nm (PvK) | % | 8,0 | 1,6 | 6,3 |
| Transmission bei 700 nm (PvK) | % | 11,3 | 3,2 | 10,0 |
| Transmission bei 1600 nm (PvK) | % | 54,5 | 26,9 | 64,4 |
| Remission (D65/2°), Dicke | mm | 3,95 | 3,95 | 3,98 |
| L* | | 89,2 | 94,3 | 90,3 |
| ΔL* | | -0,5 | -0,3 | -0,2 |
| a* | | -0,9 | -0,3 | -1,0 |
| Δa* | | 0,1 | 0,0 | 0,0 |
| b* | | -2,8 | -0,9 | -2,5 |
| Δb* | | 0,1 | 0,0 | -0,1 |
| c* | | 2,9 | 1,0 | 2,7 |

## Fortsetzung Tabelle 5: Langzeittemperungen

| Glas | | 14 | 15 | 19 |
|---|---|---|---|---|
| Beispiel | | | 165 | 166 |
| Vergleichsbeispiel | | 164 | | |
| Basisbeispiel | | 26 | 87 | 37 |
| Eigenschaften Glas-keramik | | | | |
| Variante | | A | B | A |
| Ausführungsform | | | 2 | 1 |
| Keramisierungsver-fahren | | g21 + 700 °C, 10 h | g22 + 700 °C, 10 h | g11 + 700 °C, 10 h |
| $T_D$ | °C | 1145 | 1145 | 1145 |
| $t_V$ | min | 6,5 | 6,5 | 6,5 |
| Transmission (D65/2°), Dicke | mm | 3,95 | 3,97 | 4,00 |
| Y | % | 1,5 | 3,7 | 1,6 |
| $\Delta Y$ | % | 0,0 | -0,1 | -0,1 |
| Transmission bei 630 nm (PvK) | % | 4,0 | 7,2 | 4,0 |
| Transmission bei 700 nm (PvK) | % | 6,2 | 10,7 | 7,3 |
| Transmission bei 1600 nm (PvK) | % | 29,0 | 58,4 | 68,8 |
| Remission (D65/2°), Dicke | mm | 3,95 | 3,97 | 4,00 |
| L* | | 95,2 | 90,3 | 93,0 |
| $\Delta$L* | | 0,2 | -0,1 | -0,3 |
| a* | | -0,7 | -0,8 | -1,1 |
| $\Delta$a* | | 0,0 | 0,1 | 0,0 |
| b* | | -2,0 | -2,6 | -1,2 |
| $\Delta$b* | | -0,1 | 0,2 | -0,2 |
| c* | | 2,1 | 2,8 | 1,7 |

## Fortsetzung Tabelle 5: Langzeittemperungen

| Glas | | 20 | 21 | 22 |
|---|---|---|---|---|
| Beispiel | | 167 | 168 | 169 |
| Vergleichsbeispiel | | | | |
| Basisbeispiel | | 94 | 42 | 98 |
| Eigenschaften Glas-keramik | | | | |
| Variante | | B | A | B |
| Ausführungsform | | 2 | 1 | 2 |
| Keramisierungsver-fahren | | g22 + 700 °C, 10 h | g11 + 700 °C, 10 h | g22 + 700 °C, 10 h |
| $T_D$ | °C | 1145 | 1145 | 1145 |
| $t_V$ | min | 6,5 | 6,5 | 6,5 |
| Transmission (D65/2°), Dicke | mm | 4,01 | 3,99 | 3,99 |
| Y | % | 3,5 | 1,5 | 2,2 |
| $\Delta$Y | % | -0,1 | 0,1 | -0,1 |
| Transmission bei 630 nm (PvK) | % | 7,2 | 3,6 | 5,0 |
| Transmission bei 700 nm (PvK) | % | 11,0 | 6,5 | 8,3 |
| Transmission bei 1600 nm (PvK) | % | 75,4 | 66,1 | 50,1 |
| Remission (D65/2°), Dicke | mm | 4,01 | 3,99 | 3,99 |
| L* | | 92,0 | 94,2 | 90,1 |
| $\Delta$L* | | -0,3 | 0,0 | -0,5 |
| a* | | -1,4 | -0,6 | -0,5 |
| $\Delta$a* | | 0,0 | 0,1 | 0,0 |
| b* | | -3,4 | -1,7 | -2,6 |
| $\Delta$b* | | -0,4 | -0,2 | -0,3 |
| c* | | 3,6 | 1,8 | 2,6 |

**Patentansprüche**

1.  Lithiumaluminiumsilikat-Glaskeramik, die bis auf unvermeidliche Verunreinigungen $As_2O_3$- und $Sb_2O_3$-frei ist, mit Keatit als Hauptkristallphase, **dadurch gekennzeichnet,**
    **dass** sie eine Keatit-Peak-Temperatur Tp der Keatit-Mischkristallbildung im Bereich von 980 °C bis 1090 °C aufweist, wobei die Keatit-Peak-Temperatur Tp mittels der dynamischen Differenzkalorimetrie (DSC) nach DIN 51007:2019-04 unter Verwendung einer Heizrate von 5 K · $min^{-1}$ ermittelt wird.

2.  Glaskeramik nach Anspruch 1, **dadurch gekennzeichnet, dass** die Keatit-Peak-Temperatur Tp im Bereich von 980 °C bis 1070 °C liegt.

3. Glaskeramik nach einem der vorhergehenden Ansprüche, **dadurch gekennzeichnet, dass** sie folgende Komponenten in folgenden Anteilen (in Gew.-% auf Oxidbasis) umfasst:

| | |
|---|---|
| $Li_2O$ | 3 - 5 |
| $Al_2O_3$ | 18 - 25 |
| $SiO_2$ | 60 - 70 |
| $SnO_2$ | 0 - 0,5 |

4. Glaskeramik nach einem der vorhergehenden Ansprüche, **dadurch gekennzeichnet, dass** sie 3,9 bis 4,5 Gew.-% $Li_2O$ enthält und eine Keatit-Peak-Temperatur Tp im Bereich von 990 °C bis 1025 °C aufweist.

5. Glaskeramik nach einem der Ansprüche 1 bis 3, **dadurch gekennzeichnet, dass** sie 3,5 bis < 3,9 Gew.-% $Li_2O$ enthält und eine Keatit-Peak-Temperatur $T_P$ Bereich von 1015 °C bis 1060 °C aufweist.

6. Glaskeramik nach einem der vorhergehenden Ansprüche, **dadurch gekennzeichnet, dass** die Glaskeramik einen Weißwert L* im Farbraum L*, a*, b* von 60 bis 97 und eine Helligkeit Y von 0,1 % bis 25 % aufweist, wobei L* und Y mit der Normlichtart D65 unter einem Winkel von 2° bei einer Dicke der Glaskeramik von 4 mm ermittelt werden.

7. Glaskeramik nach einem der vorhergehenden Ansprüche, **dadurch gekennzeichnet, dass** die Glaskeramik opak ist, eine Keatit-Peak-Temperatur Tp im Bereich von 980 °C bis 1070 °C sowie folgende Werte aufweist:

L* = 85 bis 97
a* = -1,5 bis 0,5
b* = -6 bis 0,5
und Y = 0,1 % bis 2 %.

8. Glaskeramik nach einem der Ansprüche 1 bis 6, **dadurch gekennzeichnet, dass** die Glaskeramik transluzent ist, eine Keatit-Peak-Temperatur $T_P$ im Bereich von 980 °C bis 1070 °C sowie folgende Werte aufweist:

L* = 72 bis 93
a* = -5,5 bis 0
b* = -7 bis 0,5
und Y = > 2 % bis 10 %.

9. Glaskeramik nach einem der Ansprüche 1 bis 6, **dadurch gekennzeichnet, dass** die Glaskeramik transluzent ist, eine Keatit-Peak-Temperatur $T_P$ im Bereich von 980 °C bis 1070 °C sowie folgende Werte aufweist:

L* = 60 bis 82
a* = -7,5 bis -2
b* = -19 bis -4,5
und Y = > 10 % bis 25 %.

10. Glaskeramik nach einem der vorhergehenden Ansprüche, **dadurch gekennzeichnet, dass** sie 0,01 bis < 1 Gew.-% MgO enthält.

11. Glaskeramik nach einem der vorhergehenden Ansprüche, **dadurch gekennzeichnet, dass** sie 0,5 bis 3 Gew.-% Zn0 enthält.

12. Glaskeramik nach einem der Ansprüche 3 bis 11, **dadurch gekennzeichnet, dass** für den Quotienten aus $Al_2O_3$ und $Li_2O + MgO + ZnO$ (alle Oxide in Gew.-%) gilt:
$3 \leq Al_2O_3/(Li_2O+MgO+ZnO) < 3,2$ (Bedingung B1a) und
dass die Glaskeramik eine Keatit-Peak-Temperatur $T_P$ im Bereich von 990 °C bis 1005 °C aufweist.

13. Glaskeramik nach einem der Ansprüche 3 bis 11, **dadurch gekennzeichnet, dass** für den Quotienten aus $Al_2O_3$ und $Li_2O+MgO+ZnO$ (alle Oxide in Gew.-%) gilt:
$3,2 \leq Al_2O_3/(Li_2O+MgO+ZnO) < 3,8$ (Bedingung B1b) und

dass die Glaskeramik eine Keatit-Peak-Temperatur $T_P$ im Bereich von > 1005 °C bis 1060 °C aufweist.

14. Glaskeramik nach einem der vorhergehenden Ansprüche, **dadurch gekennzeichnet, dass** sie folgende Komponenten (in Gew.-% auf Oxidbasis) enthält:

| | |
|---|---|
| $TiO_2$ | > 1,6-2,8 |
| $ZrO_2$ | 1 - 2,5 |
| ZnO | 0-3 |
| MgO | 0,01 - 1 |
| $SnO_2$ | 0,01 - < 0,3 |

mit der Bedingung B3a (dabei beide in Gew.-%)
0,005 < MgO x $SnO_2$ < 0,1.

15. Glaskeramik nach einem der vorhergehenden Ansprüche, **dadurch gekennzeichnet, dass** nach einer Temperung der Glaskeramik über eine Temperzeit von 10 h bei 700 °C die Helligkeit Y um höchstens $\pm 0,3$ % ($|\Delta Y| \leq 0,3$ %) von der Helligkeit Y vor der Temperung der Glaskeramik abweicht.

16. Verfahren zur Herstellung einer Glaskeramik nach einem der Ansprüche 1 bis 15, wobei ein kristallisierbares $As_2O_3$- und $Sb_2O_3$-freies Lithiumaluminiumsilikat-Glas bereitgestellt wird, **dadurch gekennzeichnet, dass** die Keramisierung mit folgenden Verfahrensschritten in folgender Reihenfolge durchgeführt wird:

a) Erhöhen der Temperatur des kristallisierbaren Glases von Raumtemperatur $T_{RT}$ auf eine Temperatur $T_a$ im Bereich von 660 bis 730 °C innerhalb von 3 bis 60 Minuten;
b) Erhöhen der Temperatur des kristallisierbaren Glases von $T_a$ auf eine Temperatur bis höchstens 800 °C über einen Zeitraum von 5 bis 100 Minuten;
c) Erhöhen der Temperatur des Kristallisationskeime enthaltenden Glases innerhalb von 5 bis 80 Minuten Dauer in den Temperaturbereich $T_b$ beginnender HQ-Mischkristall-Bildung von 780 bis 850 °C;
d) Verweilen im Temperaturbereich $T_b$ über eine Zeitdauer von 5 bis 120 Minuten;
e) Erhöhen der Temperatur des HQ-Mischkristalle enthaltenden Glases innerhalb von 5 bis 80 Minuten Dauer in den Temperaturbereich Tc hoher Kristallwachstumsgeschwindigkeit von 900 °C bis 950 °C;
f) Erhöhen der Temperatur des HQ-Mischkristalle enthaltenden Glases innerhalb von 5 bis 80 Minuten Dauer in den Temperaturbereich $T_D$ von 950 °C bis 1250 °C
g) Verweilen in dem Temperaturbereich $T_D$ über eine Verweilzeit tv > 0 bis 60 Minuten;
h) rasches Abkühlen der erhaltenen Glaskeramik auf Raumtemperatur in weniger als 150 Minuten;

wobei die Keramisierung des Glases eine Gesamtdauer von weniger als 300 min aufweist.

17. Glaskeramik nach einem der Ansprüche 1 bis 15, hergestellt aus einem kristallisierbaren $As_2O_3$- und $Sb_2O_3$-freien Lithiumaluminiumsilikat-Glas durch ein Keramisierungsverfahren nach Anspruch 16.

18. Verwendung einer Glaskeramik nach einem der Ansprüche 1 bis 15 oder 17, die in Form einer Platte mit einer Dicke von 2 mm bis 20 mm vorliegt, als Brandschutzglas, Kochfläche, Abdeckung im Beleuchtungssektor, Trägerplatte oder Ofenauskleidung in Backöfen, Kaminöfen oder Mikrowellengeräten, Grilldeckel, Gasbrenner- oder Rotisserie-Brennerabdeckungen oder in Form von Pizzasteinen oder Planchas.

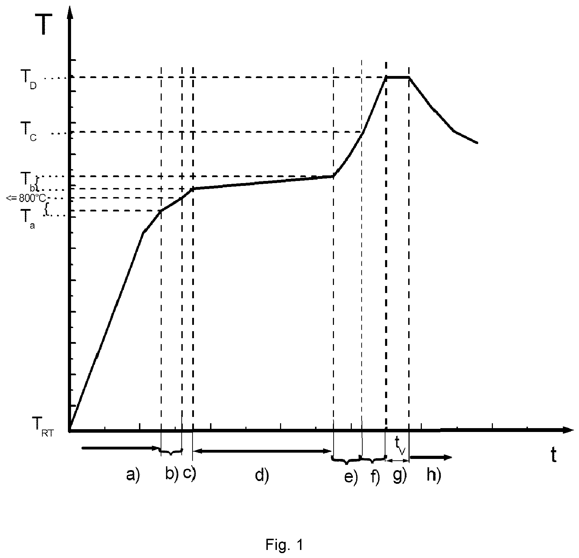

Fig. 1

Europäisches
Patentamt

European
Patent Office

Office européen
des brevets

## EUROPÄISCHER RECHERCHENBERICHT

**Nummer der Anmeldung**

**EP 22 19 0887**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2004 024583 A1 (SCHOTT AG [DE]) 8. Dezember 2005 (2005-12-08) | 1-3,5-9, 11,13, 15,17,18 | INV. C03C3/097 C03C10/00 |
| A | * Absätze [0001], [0019] - [0021], [0055]; Tabellen 1,4 * ----- | 16 | |
| X | EP 1 146 018 A1 (SCHOTT GLAS [DE]; CARL ZEISS STIFTUNG BR TRADING [DE]) 17. Oktober 2001 (2001-10-17) | 1-4,6,7, 9,11,15, 17,18 | |
| A | * Absätze [0016], [0024]; Tabellen 1,2 * ----- | 16 | |
| X | EP 3 196 174 A1 (SCHOTT AG [DE]) 26. Juli 2017 (2017-07-26) | 1-3,5, 10,11, 13-15, 17,18 | |
| A | * Absätze [0001], [0091]; Tabellen 1,3 * ----- | 16 | |
| X | EP 1 837 312 A1 (SCHOTT AG [DE]) 26. September 2007 (2007-09-26) | 1-3,5-8, 11,12, 15,17,18 | |
| A | * Absätze [0060], [0064]; Tabellen 1,4 * ----- | 16 | RECHERCHIERTE SACHGEBIETE (IPC) |
| X | DE 10 2018 101423 A1 (SCHOTT AG [DE]) 28. Februar 2019 (2019-02-28) * Absätze [0049], [0054], [0064], [0072]; Tabelle 1 * ----- | 1-5,10, 11,13, 17,18 | C03C |

Der vorliegende Recherchenbericht wurde für alle Patentansprüche erstellt

| Recherchenort | Abschlußdatum der Recherche | Prüfer |
|---|---|---|
| München | 12. Januar 2023 | King, Ruth |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

........................................................

& : Mitglied der gleichen Patentfamilie, übereinstimmendes
Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 22 19 0887

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-01-2023

| Im Recherchenbericht angeführtes Patentdokument | Datum der Veröffentlichung | Mitglied(er) der Patentfamilie | Datum der Veröffentlichung |
|---|---|---|---|
| DE 102004024583 A1 | 08-12-2005 | CN 1696072 A | 16-11-2005 |
| | | DE 102004024583 A1 | 08-12-2005 |
| | | FR 2873684 A1 | 03-02-2006 |
| | | JP 2005325018 A | 24-11-2005 |
| | | US 2005252503 A1 | 17-11-2005 |
| EP 1146018 A1 | 17-10-2001 | CA 2343420 A1 | 08-10-2001 |
| | | CN 1326903 A | 19-12-2001 |
| | | DE 10017701 A1 | 25-10-2001 |
| | | EP 1146018 A1 | 17-10-2001 |
| | | HK 1041869 A1 | 26-07-2002 |
| | | JP 4669149 B2 | 13-04-2011 |
| | | JP 2001354446 A | 25-12-2001 |
| | | US 2002023463 A1 | 28-02-2002 |
| | | US 2005143247 A1 | 30-06-2005 |
| EP 3196174 A1 | 26-07-2017 | DE 102016101066 B3 | 23-02-2017 |
| | | DE 102017101114 A1 | 27-07-2017 |
| | | EP 3196174 A1 | 26-07-2017 |
| | | JP 6890425 B2 | 18-06-2021 |
| | | JP 2017137233 A | 10-08-2017 |
| EP 1837312 A1 | 26-09-2007 | AT 469106 T | 15-06-2010 |
| | | CN 101269910 A | 24-09-2008 |
| | | EP 1837312 A1 | 26-09-2007 |
| | | ES 2344267 T3 | 23-08-2010 |
| | | JP 5367952 B2 | 11-12-2013 |
| | | JP 2007254279 A | 04-10-2007 |
| | | US 2009018007 A1 | 15-01-2009 |
| | | US 2012302422 A1 | 29-11-2012 |
| DE 102018101423 A1 | 28-02-2019 | CN 109422462 A | 05-03-2019 |
| | | DE 102018101423 A1 | 28-02-2019 |
| | | DE 202018100558 U1 | 15-02-2018 |
| | | ES 2804277 T3 | 05-02-2021 |
| | | FR 3070386 A1 | 01-03-2019 |
| | | JP 7097783 B2 | 08-07-2022 |
| | | JP 2019043842 A | 22-03-2019 |
| | | KR 20190024799 A | 08-03-2019 |
| | | US 2019062201 A1 | 28-02-2019 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- WO 2008065167 A1
- WO 2008065166 A1
- WO 2019016338 A1
- WO 2019117122 A1